# EUROPÄISCHE PATENTSCHRIFT

(11) **EP 4 196 382 B1**
(45) Veröffentlichungstag und Bekanntmachung des Hinweises auf die Patenterteilung: **09.07.2025**
(21) Anmeldenummer: 21709445.7
(22) Anmeldetag: 09.03.2021
(51) Int. Cl.: B62B 3/02, B62B 5/06

(54) **TRANSPORTWAGEN UND VERFAHREN ZUM TRANSFORMIEREN EINES TRANSPORTWAGENS**
TRANSPORT TROLLEY AND METHOD FOR TRANSFORMING A TRANSPORT TROLLEY
CHARIOT DE TRANSPORT ET PROCÉDÉ DE TRANSFORMATION D'UN CHARIOT DE TRANSPORT

(30) Priorität: 12.08.2020 WO PCT/EP2020/072684
(43) Veröffentlichungstag der Anmeldung: 21.06.2023
(73) Patentinhaber: Modus One GmbH, 71732 Tamm (DE)
(72) Erfinder: RAUSCHENBERGER, Joerg, 71679 Asperg (DE)
(74) Vertreter: Witte, Weller & Partner Patentanwälte mbB
(86) Internationale Anmeldenummer: PCT/EP2021/055904
(87) Internationale Veröffentlichungsnummer: WO 2022/033726

(56) Entgegenhaltungen:
- EP-A1- 2 230 149
- EP-A1- 2 230 149
- EP-A1- 3 216 674
- EP-A1- 3 216 674
- EP-B1- 2 230 149
- DE-A1- 102016 217 867
- DE-A1- 102016 217 867
- JP-A- 2007 030 856
- JP-A- 2007 030 856
- US-A1- 2010 253 025
- US-A1- 2010 253 025
- US-A1- 2015 137 487
- US-A1- 2015 137 487
- US-B1- 10 005 481
- US-B1- 10 005 481
- US-B1- 6 733 026
- US-B1- 9 834 243
- US-B1- 9 834 243

## Beschreibung

Die vorliegende Erfindung betrifft Transportwagen mit einer Basisbaugruppe, mit zwei an der Basisbaugruppe angeordneten, gegenüberliegenden Seitenbaugruppen, mit je einem an jeweils einer der Seitenbaugruppen angeordneten Rad und mit mindestens einer zwischen den Seitenbaugruppen angeordneten Aufnahme für jeweils eine Transportbox. Des Weiteren betrifft die vorliegende Erfindung ein Verfahren zum Überführen eines derartigen Transportwagens zwischen einem Packmodus und einem ersten Betriebsmodus. Des Weiteren betrifft die vorliegende Erfindung ein Verfahren eines derartigen Transportwagens zwischen einem ersten Betriebsmodus und einem zweiten Betriebsmodus.

Derartige Transportwagen sind aus dem Stand der Technik bereits bekannt.

Beispielsweise zeigt die Druckschrift DE 197 07 744 C1 einen zusammenlegbarer Transportwagen mit einem im wesentlichen kubischen Behälter, dessen einander gegenüberliegende erste und einander gegenüberliegende zweite Seitenwände sich im aufgeklappten Zustand zwischen dem Boden und einem Griffelemente aufweisenden und den Behälter nach oben abschließenden Rahmen erstrecken, wobei die ersten Seitenwände am Rahmen lagern und mit dem Boden gelenkig verbunden sind und die zweiten Seitenwände am Boden abstützbar sind und jeweils wenigstens ein Rad aufnehmen, das zwischen einer über die Wandfläche hinausragenden Fahrposition und einer innerhalb der Wandfläche liegenden Ruheposition bewegbar ist, wobei die jeweils am Rahmen und am Boden gelagerten ersten Seitenwände derart faltbar ausgebildet sind, dass der Rahmen und der Boden bei horizontal eingeschwenkten zweiten Seitenwänden im wesentlichen aufeinanderlegbar sind, und wobei am Rahmen eine Stange zum Handhaben angeordnet ist, die zwischen einer über den Behälter hinausragenden Handhabenposition und einer sich an den Behälter anschmiegenden oder innerhalb des Behälters liegenden Ablageposition bewegbar ist.

Des Weiteren zeigt die Druckschrift WO 2018/127409 A1 einen Handwagen, insbesondere zum Transport von Gütern, mit ersten Vertikalstreben an einem ersten Wagenende und zweiten Vertikalstreben an einem zweiten Wagenende, wobei die ersten Vertikalstreben durch Diagonalstreben mit den zweiten Vertikalstreben verbunden sind, wobei obere Enden der Diagonalstreben drehbar mit den Vertikalstreben verbunden sind, und wobei untere Enden der Diagonalstreben drehbar und vertikal verschiebbar mit den Vertikalstreben verbunden sind, wobei auch an der oberen Hälfte der ersten Vertikalstreben mindestens ein Behälter befestigt ist, und wobei mindestens ein weiterer Behälter entlang der zweiten Vertikalstreben über eine Führung vertikal verschiebbar und verbunden ist, über Drehgelenke mit denjenigen Diagonalstreben verbunden sind, deren untere Enden mit den zweiten Vertikalstreben verbunden sind.

Weitere Beispiele für Transportwagen mit klappbaren Seitenelementen und Rädern sind offenbart in EP 3 216 674 A1, US 9 834 243 B1 und US 2015/137487 A1.

Gegenüber dem bekannten Stand der Technik ist es eine Aufgabe der vorliegenden Erfindung, einen Transportwagen vorzusehen, der einfacher zu handhaben ist. Insbesondere ist es eine Aufgabe der vorliegenden Erfindung, einen Transportwagen vorzusehen, der zwischen verschiedenen Betriebsmodi möglichst einfach transformierbar ist.

Gemäß einem dritten Aspekt der Erfindung gemäß Anspruch 1 wird ein Transportwagen mit einer Basisbaugruppe, mit zwei an der Basisbaugruppe angeordneten, einander gegenüberliegenden Seitenbaugruppen und mit je einem an jeweils einer der Seitenbaugruppen angeordneten Rad vorgeschlagen, wobei der Transportwagen zwischen einem Packmodus, in dem jedes Rad in einer eingeklappten Stellung und jede Seitenbaugruppe in einer zugeklappten Stellung angeordnet ist, und einem ersten Betriebsmodus, in dem jedes Rad in einer ausgeklappten Stellung und jede Seitenbaugruppe in einer aufgeklappten Stellung angeordnet ist, überführbar bzw. transformierbar ist, wobei eine Bewegung jeder Seitenbaugruppe zwischen der zugeklappten und der aufgeklappten Stellung mit einer Bewegung des entsprechenden Rads zwischen der eingeklappten und ausgeklappten Stellung gekoppelt ist, so dass beim Bewegen jeder Seitenbaugruppe zwischen der zugeklappten und der aufgeklappten Stellung das entsprechende Rad zwischen der eingeklappten und ausgeklappten Stellung bewegt wird, und der Transportwagen des Weiteren an jeder Seitenbaugruppe eine Stütze aufweist. Dabei kann optional des Weiteren mindestens eine zwischen den Seitenbaugruppen angeordnete Aufnahme für jeweils eine Transportbox vorgesehen sein.

Gemäß einem sechsten Aspekt der Erfindung gemäß Anspruch 8 wird ein Verfahren zum Überführen eines Transportwagens zwischen einem Packmodus und einem ersten Betriebsmodus, wobei der Transportwagen eine Basisbaugruppe, zwei an der Basisbaugruppe angeordnete, gegenüberliegende Seitenbaugruppen, und je ein an jeweils einer der Seitenbaugruppen angeordnetes Rad aufweist, wobei das Verfahren die folgenden Schritte aufweist:
- Überführen des Transportwagens aus dem Packmodus, in dem jedes Rad in einer eingeklappten Stellung und jede Seitenbaugruppe in einer zugeklappten Stellung angeordnet ist, in einen ersten Betriebsmodus, in dem jedes Rad in einer ausgeklappten Stellung und jede Seitenbaugruppe in einer aufgeklappten Stellung angeordnet ist, mittels eines Bewegens der Seitenbaugruppen von der zugeklappten in die aufgeklappte Stellung, wobei die Bewegung jeder Seitenbaugruppe zwischen der zugeklappten und der aufgeklappten Stellung mit einer Bewegung des entsprechenden Rads zwischen der eingeklappten Stellung und ausgeklappten Stellung gekoppelt ist;
- Überführen des Transportwagens aus dem ersten Betriebsmodus in den Packmodus mittels eines Bewegens der Seitenbaugruppen von der aufgeklappten Stellung in die eingeklappte Stellung.

Gemäß einem siebten Aspekt der Erfindung gemäß Anspruch 9 wird ein Verfahren zum Verfahren zum Transformieren eines Transportwagens, wobei der Transportwagen eine Basisbaugruppe, zwei an der Basisbaugruppe angeordnete, einander gegenüberliegende Seitenbaugruppen, je ein an jeweils einer der Seitenbaugruppen angeordnetes Rad und mindestens eine zwischen den Seitenbaugruppen angeordnete Aufnahme für jeweils eine Transportbox aufweist, wobei das Verfahren die folgenden Schritte aufweist:
- Überführen eines Transportwagens zwischen einem Packmodus und einem ersten Betriebsmodus entsprechend dem Verfahren nach dem sechsten Aspekt der Erfindung; und
- Überführen eines Transportwagens zwischen dem ersten Betriebsmodus und einem zweiten Betriebsmodus wobei der Schritt des Überführens des Transportwagens zwischen dem ersten Betriebsmodus und dem zweiten Betriebsmodus die folgenden Schritte aufweist:
   - Überführen des Transportwagens von dem ersten Betriebsmodus in den zweiten Betriebsmodus mittels einer ersten Aktuierung, bei der ein Aktuierungselement einer Aktuierungsvorrichtung des Transportwagens in einer ersten Bewegungsrichtung bewegt wird; und - Überführen des Transportwagens von dem zweiten Betriebsmodus in den ersten Betriebsmodus mittels einer zweiten Aktuierung, bei der das Aktuierungselement in der ersten Bewegungsrichtung bewegt wird.

In den Packmodus ist der Transportwagen kompakt, insbesondere platzsparend, zusammengeklappt und beansprucht deswegen wenig Platz. Der Packmodus eignet sich daher besonders zum Transport bzw. zur Aufbewahrung des Transportwagens, beispielsweise im Kofferraum eines Autos. Insbesondere sind in dem Packmodus die beiden Seitenbaugruppen zugeklappt. In anderen Worten sind die beiden Seitenbaugruppen, die auf einander gegenüberliegenden Seiten der Basisbaugruppe angeordnete sind, in den Packmodus zueinander geklappt, so dass die Seitenbaugruppen fluchtend miteinander angeordnet sind und an der Basisbaugruppe anliegen. Dabei erstrecken sich die Seitenbaugruppen entlang der Basisbaugruppe aufeinander zu. Des Weiteren ist vorzugsweise jedes Rad in die entsprechende Seitenbaugruppe eingeklappt. Jede Seitenbaugruppe kann dazu eine entsprechende Öffnung aufweisen, durch die das entsprechende Rad eingeklappt bzw. ausgeklappt werden kann. In der eingeklappten Stellung ist jedes Rad vorzugsweise vollständig in der entsprechenden Seitenbaugruppe angeordnet sein. In der ausgeklappten Stellung ist jedes Rad vorzugsweise vollständig oder zumindest teilweise aus der entsprechenden Seitenbaugruppe ausgeklappt.

In dem ersten und in dem zweiten Betriebsmodus sind die Seitenbaugruppen insbesondere aufgeklappt. In anderen Worten sind die beiden Seitenbaugruppen in dem ersten und in dem zweiten Betriebsmodus parallel zueinander angeordnet. Dabei erstecken sich die Seitenbaugruppen, vorzugsweise senkrecht zu der Basisbaugruppe, weg von der Basisbaugruppe. Des Weiteren ist vorzugsweise jedes Rad aus der entsprechenden Seitenbaugruppe ausgeklappt, sodass der Transportwagen über die Räder auf dem Boden gezogen oder geschoben werden kann. Die Räder sind somit in dem ersten und dem zweiten Betriebsmodus auf dem Boden anordenbar bzw. zu dem Boden hin orientiert. Die Räder sind somit in dem ersten und zweiten Betriebsmodus auf einer Unterseite des Transportwagens angeordnet. Die der Unterseite gegenüberliegende Seite des Transportwagens wird somit als Oberseite des Transportwagens bezeichnet. Die Begriffe "hoch" und "tief" bzw. "oben" und "unten" bzw. "oberhalb" und "unterhalb" bzw. "vertikal" und "horizontal" sind daher in Relation zu den Rädern bzw. zu der Seite des Transportwagens, auf der die Rädern im ersten und zweiten Betriebsmodus angeordnet sind, zu verstehen.

In dem ersten Betriebsmodus, der auch als Betriebsmodus oder Nachziehmodus bezeichnet werden kann, kann der Transportwagen einfach gezogen werden. Der erste Betriebsmodus eignet sich somit besonders zum Ziehen des Transportwagens. Insbesondere ist in dem ersten Betriebsmodus die Aufnahme für die Transportbox in einer Transportposition angeordnet. Die Transportposition kann auch als tiefe Position bezeichnet werden, in der die Aufnahme nahe an den ausgeklappten Rädern angeordnet ist. Eine in der Aufnahme angeordnete Transportbox ist somit tief angeordnet, so dass das Gesamtgewicht der Transportbox und deren Inhalt näher an einer Drehachse der Räder angeordnet sind. Dadurch lässt sich die Transportbox leichter transportieren.

In dem zweiten Betriebsmodus, der auch als weiterer Betriebsmodus oder Schiebemodus bezeichnet werden kann, kann der Transportwagen einfach geschoben bzw. beladen werden. Der zweite Betriebsmodus eignet sich somit besonders zum Schieben bzw. Beladen des Transportwagens. Insbesondere ist in dem ersten Betriebsmodus die Aufnahme für die Transportbox in einer Ladeposition angeordnet. Die Ladeposition kann auch als hohe Position bezeichnet werden, in der die Aufnahme weiter entfernt von den Rädern angeordnet ist als in der tiefen Position. Eine in der Aufnahme angeordnete Transportbox ist somit ebenfalls höher angeordnet. Die Ladeposition eignet sich somit besonders zum Beladen der Transportbox, da ein Benutzer sich weniger oder gar nicht bücken muss, um die Transportbox zu beladen.

Zum Überführen des Transportwagens aus dem Packmodus in den ersten Betriebsmodus werden die beiden Seitenbaugruppe aufgeklappt. In anderen Worten werden die Seitenbaugruppen aus einer zugeklappten Stellung in eine aufgeklappte Stellung überführt. Da die Bewegung der Seitenbaugruppe zwischen der zugeklappten und der aufgeklappten Stellung mit der Bewegung der Räder zwischen der eingeklappten und der ausgeklappten Stellung gekoppelt ist, werden die Räder beim Aufklappen der Seitenbaugruppe automatisch mit ausgeklappten. In anderen Worten werden die Räder ebenfalls aus der eingeklappten Stellung in die ausgeklappte Stellung überführt.

Entsprechend werden zum Überführen des Transportwagens aus dem ersten Betriebsmodus in den Packmodus die Seitenbaugruppen zugeklappt. In anderen Worten werden die Seitenbaugruppen aus einer aufgeklappten Stellung in eine zugeklappte Stellung überführt. Dabei werden die Räder automatisch mit eingeklappt. In anderen Worten werden die Räder dabei aus der ausgeklappten Stellung in die eingeklappte Stellung überführt.

Zum Überführen des Transportwagens aus dem ersten Betriebsmodus in den zweiten Betriebsmodus wird das Aktuierungselement in der ersten Bewegungsrichtung bewegt. Das Aktuierungselement ist vorzugsweise mechanisch, beispielsweise als ein drehbarer Kopplungskörper, als ein Hebel, als eine Drehscheibe, oder ähnliches, ausgebildet. Alternativ kann auch eine elektrische, hydraulische oder pneumatische Antriebseinrichtung als Aktuierungselement vorgesehen sein. Zum Überführen des Transportwagens aus dem zweiten Betriebsmodus in den ersten Betriebsmodus wird das Aktuierungselement ebenfalls in der ersten Bewegungsrichtung bewegt. Das Aktuierungselement kann beispielsweise eine Pumpbewegung, insbesondere eine alternierende Bewegung in der ersten Bewegungsrichtung und entgegen der ersten Bewegungsrichtung, ausführen, wobei nur die Bewegung in der ersten Bewegungsrichtung zum Überführen des Transportwagens beiträgt. Dies ist besonders vorteilhaft bei einer manuellen Aktuierung. Im Falle einer Aktuierung mittels einer Antriebseinrichtung, muss die Antriebseinrichtung lediglich dazu geeignet sein, eine Bewegung in einer Bewegungsrichtung, insbesondere der ersten Bewegungsrichtung auszuführen, was die Anforderungen an eine Antriebseinrichtung erheblich vereinfacht.

Erfindungsgemäß weist der Transportwagen des Weiteren an jeder Seitenbaugruppe eine Stütze auf.

Mittels der Stützen kann der Transportwagen in der ersten Betriebsposition abgestützt werden, so dass der Transportwagen auf den Stützen und den Rädern auf dem Boden abgestellt werden kann, ohne dass ein Benutzer den Transportwagen, beispielsweise an den Griff, festhält. Die Stütze kann insbesondere ein Hebelelement sein. Das Hebelelement kann dann mit seinem freien Ende den Transportwagen auf dem Boden abstützen. Insbesondere kann das Hebelelement dann mit seinem freien Ende den Transportwagen direkt auf dem Boden abstützen. Insbesondere kann das Hebelelement kein Rad aufweisen, das heißt es ist ohne ein Rad an seinem freien Ende ausgebildet.

In einer weiteren Ausgestaltung der Erfindung ist jede Stütze in dem Packmodus in einer eingeklappten Stellung und in dem ersten Betriebsmodus in einer ausgeklappten Stellung angeordnet, insbesondere wobei jede Stütze an der entsprechenden Seitenbaugruppe um eine Achse zwischen der eingeklappten Stellung und der ausgeklappten Stellung schwenkbar gelagert ist.

Auf diese Weise können die Stützen in dem Packmodus platzsparend eingeklappten werden und in dem ersten Betriebsmodus für den Betrieb des Transportwagens ausgeklappt werden.

In einer weiteren Ausgestaltung der Erfindung ist die Bewegung, insbesondere Schwenkbewegung, jeder Seitenbaugruppe zwischen der zugeklappten und der aufgeklappten Stellung mit einer Bewegung, insbesondere Schwenkbewegung, der entsprechenden Stütze zwischen der eingeklappten und ausgeklappten Stellung gekoppelt.

Vorzugsweise wird beim Schwenken der Seitenbaugruppe zwischen der zugeklappten und der aufgeklappten Stellung die entsprechende Stütze um die Achse geschwenkt. In anderen Worten können die Stützen und die Seitenbaugruppen gemeinsamen bewegt bzw. geklappt werden, so dass beim Überführen des Transportwagens zwischen dem Packmodus und dem ersten Betriebsmodus die Stützen und die Seitenbaugruppen gemeinsam geklappt werden.

In einer weiteren Ausgestaltung der Erfindung wird jede Stütze beim Schwenken der entsprechenden Seitenbaugruppe von der zugeklappten Stellung in die aufgeklappte Stellung ausklappt und entsprechend beim Schwenken der entsprechenden Seitenbaugruppe von der aufgeklappten Stellung in die zugeklappte Stellung eingeklappt.

Auf diese Weise kann ein Benutzer zum Überführen des Transportwagens zwischen dem Packmodus und dem ersten Betriebsmodus die Seitenbaugruppen auf- bzw. zuklappen, wobei die Stützen entsprechend aus- bzw. eingeklappten werden.

In einer weiteren Ausgestaltung der Erfindung ist die Schwenkbewegung jeder Seitenbaugruppe sowohl mit der Schwenkbewegung des entsprechenden Rads als auch mit der Schwenkbewegung der entsprechenden Stütze gekoppelt.

In anderen Worten wird jeder Seitenbaugruppe gemeinsam mit dem entsprechenden Rad und der entsprechenden Stütze geklappt. Auf diese Weise kann ein Benutzer zum Überführen des Transportwagens zwischen dem Packmodus und dem ersten Betriebsmodus die Seitenbaugruppen auf- bzw. zuklappen, wobei sowohl die Räder als auch die Stützen entsprechend aus- bzw. eingeklappten werden.

In einer weiteren Ausgestaltung der Erfindung ist die Bewegung, insbesondere Schwenkbewegung, jeder Stütze und/oder jedes Rads über einen Kniehebel mit der Bewegung, insbesondere Schwenkbewegung der entsprechenden Seitenbaugruppe gekoppelt, wobei jeder Kniehebel in der ausgeklappten Stellung des entsprechenden Rads bzw. der entsprechenden Stütze, insbesondere in dem ersten Betriebsmodus, derart angeordnet ist, insbesondere gestreckt, dass das jeweilige Rad bzw. die jeweilige Stütze in der ausgeklappten Stellung blockiert bzw. arretiert bzw. gehalten ist. Insbesondre ist jeder Kniehebel in der zugeklappten Stellung des entsprechenden Rads bzw. der entsprechenden Stütze, insbesondere in dem Packmodus, geknickt angeordnet ist

Auf diese Weise verbleibt der Kniehebel in dem gestreckten Zustand, wenn eine Schubkraft in Richtung der Erstreckungsrichtung des Kniehebels wirkt. Dementsprechend hält jeder Kniehebel das jeweilige Rad bzw. die jeweilige Stütze in der ausgeklappten Stellung, wenn der Kniehebel gestreckt ist. Die Kniehebel stellen somit sicher, dass ein Rad bzw. eine Stütze nicht durch ein beaufschlagt Drehmoment um seine Lagerungsachse an der entsprechenden Seitenbaugruppe einklappbar ist. Das Rad bzw. die Stütze ist somit nur durch eine Klapp- bzw. Schwenkbewegung der entsprechenden Seitenbaugruppe einklappbar.

Insbesondere kann vorgesehen sein, dass jeder Kniehebel über einen weiteren Hebel mit der Schwenkbewegung des Rads bzw. der Stütze gekoppelt ist, so dass eine Streck- bzw. Knickbewegung jedes Kniehebels, insbesondere eine Winkeländerung jedes Kniehebels, auf eine Schwenkbewegung jedes Rads bzw. jeder Stütze übertragen wird. Entsprechend ergibt sich, dass eine Schwenkbewegung jedes Rads bzw. jeder Stütze zu einem Strecken bzw. Knicken des entsprechenden Kniehebels führt, wobei der Kniehebel nicht durch eine Schwenkbewegung des Rads bzw. der Stütze knickbar ist, wenn der Kniehebel gestreckt ist.

In einer weiteren Ausgestaltung der Erfindung ist jeder Kniehebel derart angeordnet ist, dass er beim Überführen des Rads bzw. der Stütze von der eingeklappten in die ausgeklappte Stellung gestreckt wird und entsprechend beim Überführen des Rads bzw. der Stütze von der ausgeklappten in die eingeklappte Stellung geknickt wird.

Wie zuvor bereits beschrieben, wird dadurch auf einfache Art und Weise erreicht, dass jedes Rad bzw. jede Stütze nur durch eine Klapp- bzw. Schwenkbewegung der entsprechenden Seitenbaugruppe klappbar, insbesondere ein- bzw. ausklappbar, ist.

In einer weiteren Ausgestaltung der Erfindung weist der Transportwagen des Weiteren eine Arretiereinrichtung auf, die dazu ausgebildet ist, jede Seitenbaugruppe in der zugeklappten Stellung und in der aufgeklappten Stellung zu arretieren.

Auf diese Weise können die Seitenbaugruppen im Packmodus in der zugeklappten Stellung und in dem ersten bzw. zweiten Betriebsmodus in der aufgeklappten Stellung arretiert bzw. gehalten werden. Die Arretiereinrichtung sichert somit die Seitenbaugruppen gegenüber einem ungewollten Verschwenken ab.

In einer weiteren Ausgestaltung der Erfindung weist der Transportwagen des Weiteren mindestens ein zweites Betätigungselement auf, mittels dem die durch die Arretiereinrichtung bewirkte Arretierung der Seitenbaugruppen lösbar ist.

Wird das zweite Betätigungselement betätigt, löst sich die Arretierung der Seitenbaugruppen, so dass die Seitenbaugruppen zwischen der zugeklappten und der aufgeklappten Stellung überführbar sind.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
- Fig. 1: eine isometrische Ansicht einer Vorderseite einer Ausführungsform eines Transportwagens in einem Packmodus;
- Fig. 2: eine isometrische Ansicht einer Rückseite des Transportwagens aus Fig. 1;
- Fig. 3: eine Draufsicht auf die Vorderseite des Transportwagens aus Fig. 1;
- Fig. 4: eine Draufsicht auf die Oberseite des Transportwagens aus Fig. 1;
- Fig. 5: eine Seitenansicht des Transportwagens aus Fig. 1;
- Fig. 6: eine isometrische Ansicht der Rückseite des Transportwagens aus Fig. 1 mit Transportbox in einer Aussparung;
- Fig. 7: eine Draufsicht auf die Rückseite des Transportwagens aus Fig. 1 mit Transportbox in der Aussparung;
- Fig. 8: eine isometrische Ansicht der Rückseite des Transportwagens aus Fig. 1 mit montierten Gurten;
- Fig. 9: eine isometrische Ansicht der Vorderseite des Transportwagens aus Fig. 1 in einem ersten Betriebsmodus;
- Fig. 10: eine Seitenansicht des Transportwagens aus Fig. 9;
- Fig. 11: eine Draufsicht auf die Vorderseite des Transportwagens aus Fig. 9;
- Fig. 12: eine Draufsicht auf die Oberseite des Transportwagens aus Fig. 9;
- Fig. 13: eine isometrische Ansicht der Vorderseite des Transportwagens aus Fig. 9 mit Kasten auf einer Auflage;
- Fig. 14: eine isometrische Ansicht der Vorderseite des Transportwagens aus Fig. 9 mit Kasten auf der Auflage und Transportbox in einer zweiten Aufnahme;
- Fig. 15: eine isometrische Ansicht der Vorderseite des Transportwagens aus Fig. 14 beim Ziehen;
- Fig. 16: eine Seitenansicht des Transportwagens aus Fig. 15;
- Fig. 17: eine isometrische Ansicht der Vorderseite des Transportwagens aus Fig. 9 mit in der vertikalen Stellung angeordneter Auflage;
- Fig. 18: eine isometrische Ansicht der Vorderseite des Transportwagens aus Fig. 19 mit Transportbox in einer ersten Aufnahme;
- Fig. 19: eine isometrische Ansicht einer Vorderseite des Transportwagens aus Fig. 1 in einem zweiten Betriebsmodus;
- Fig. 20: eine Seitenansicht des Transportwagens aus Fig. 19;
- Fig. 21: eine Draufsicht auf die Vorderseite des Transportwagens aus Fig. 19;
- Fig. 22: eine Draufsicht auf die Oberseite des Transportwagens aus Fig. 19;
- Fig. 23: eine Draufsicht auf eine Vorderseite des Transportwagens aus Fig. 1 beim Lösen der Arretierung;
- Fig. 24: eine Draufsicht auf eine Vorderseite des Transportwagens aus Fig. 1 beim Schließen der Arretierung;
- Fig. 25: eine Seitenansicht des Transportwagens aus Fig. 1 beim Aufklappen;
- Fig. 26: eine Draufsicht auf eine Oberseite des Transportwagens aus Fig. 1 beim Aufklappen der Seitenbaugruppen;
- Fig. 27: eine Seitenansicht und eine Draufsicht auf eine Oberseite des Transportwagens aus Fig. 1 beim Zuklappen der Seitenbaugruppen;
- Fig. 28: eine Schnittansicht einer Ausführungsform einer Seitenbaugruppe in dem Packmodus;
- Fig. 29: eine Schnittansicht der Seitenbaugruppe aus Fig. 28 in dem ersten Betriebsmodus;
- Fig. 30: eine Schnittansicht der Seitenbaugruppe aus Fig. 28 in dem Packmodus beim Überführen von dem Packmodus in den ersten Betriebsmodus;
- Fig. 31: eine Schnittansicht der Seitenbaugruppe aus Fig. 28 in einer Anordnung zwischen dem Packmodus und dem ersten Betriebsmodus beim Überführen von dem Packmodus in den ersten Betriebsmodus;
- Fig. 32: eine Schnittansicht der Seitenbaugruppe aus Fig. 28 in dem ersten Betriebsmodus beim Überführen von dem Packmodus in den ersten Betriebsmodus;
- Fig. 33: eine Seitenansicht des Transportwagens aus Fig. 9 beim Ausziehen des Griffs sowie zwei Detailansichten eines Betätigungselements;
- Fig. 34: eine Seitenansicht des Transportwagens aus Fig. 9 beim Einschieben des Griffs sowie zwei Detailansichten eines Betätigungselements;
- Fig. 35: eine Seitenansicht des Transportwagens aus Fig. 19 beim Transformieren in den zweiten Betriebsmodus;
- Fig. 36: eine Seitenansicht des Transportwagens aus Fig. 19 beim Transformieren in den zweiten Betriebsmodus mit Transportboxen sowie Detailansichten der Betätigung;
- Fig. 37: eine Seitenansicht des Transportwagens aus Fig. 19 beim Transformieren in den ersten Betriebsmodus mit Transportboxen sowie Detailansichten der Betätigung;
- Fig. 38: eine Seitenansicht des Transportwagens aus Fig. 19 beim Einstellen der Griffhöhe sowie Detailansichten der Betätigung;
- Fig. 39: zwei Schnittansichten einer Ausführungsform eines Kopplungsmechanismus in einer Freidrehstellung;
- Fig. 40: zwei Schnittansichten des Kopplungsmechanismus aus Fig. 39 in einer Arretierstellung;
- Fig. 41: zwei Schnittansichten des Kopplungsmechanismus aus Fig. 39 in einer Kopplungsstellung;
- Fig. 42: Verschiedene Ansichten einer Ausführungsform einer Kupplungseinrichtung;
- Fig. 43: eine schematische Ansicht einer Kupplungseinrichtung in einer Basisbaugruppe des Transportwagens aus Fig. 1;
- Fig. 44: eine schematische Ansicht einer Ausführungsform einer Aktuierungsvorrichtung in der Basisbaugruppe des Transportwagens aus Fig. 1 in einer ersten Anschlagposition;
- Fig. 45: eine schematische Ansicht der Aktuierungsvorrichtung aus Fig. 44 zwischen der ersten Anschlagposition und einer zweiten Anschlagposition;
- Fig. 46: eine schematische Ansicht der Aktuierungsvorrichtung aus Fig. 44 zwischen der zweiten Anschlagposition und der ersten Anschlagposition;
- Fig. 47: eine schematische Ansicht der Aktuierungsvorrichtung aus Fig. 44 in einer ersten Anschlagposition;
- Fig. 48: eine schematische Ansicht der Aktuierungsvorrichtung aus Fig. 44 in der ersten Anschlagposition;
- Fig. 49: eine schematische Ansicht und eine Detailansicht eines Entriegelungsmechanismus in der Basisbaugruppe des Transportwagens aus Fig. 1;
- Fig. 50: eine schematische Ansicht und eine Detailansicht des Entriegelungsmechanismus aus Fig. 49 beim Entriegeln ;
- Fig. 51: eine weitere Ausführungsform einer Aktuierungsvorrichtung;
- Fig. 52: eine Ausführungsform eines Überführungsmechanismus einer Aufnahme des Transportwagens aus Fig. 1 in der Transportposition;
- Fig. 53: eine Ausführungsform des Überführungsmechanismus aus Fig. 52A zwischen der Transportposition und einer Ladeposition;
- Fig. 54: eine Ausführungsform des Überführungsmechanismus aus Fig. 52A in der Ladeposition
- Fig. 55: eine Detailansicht des Überführungsmechanismus aus Fig. 52;
- Fig. 56: eine Detailansicht des Überführungsmechanismus aus Fig. 53;
- Fig. 57: eine Detailansicht des Überführungsmechanismus aus Fig. 54;
- Fig. 58: eine Schnittansicht der Seitenbaugruppe aus Fig. 28 in dem ersten Betriebsmodus;
- Fig. 59: eine Schnittansicht der Seitenbaugruppe aus Fig. 28 in dem zweiten Betriebsmodus;
- Fig. 60: eine Schnittansicht der Seitenbaugruppe aus Fig. 56 in dem ersten Betriebsmodus beim Überführen von dem ersten Betriebsmodus in den zweiten Betriebsmodus;
- Fig. 61: eine Schnittansicht der Seitenbaugruppe aus Fig. 56 in einer Anordnung zwischen dem ersten Betriebsmodus und dem zweiten Betriebsmodus beim Überführen von dem ersten Betriebsmodus in den zweiten Betriebsmodus;
- Fig. 62: eine Schnittansicht der Seitenbaugruppe aus Fig. 56 in dem zweiten Betriebsmodus beim Überführen von dem ersten Betriebsmodus in den zweiten Betriebsmodus;
- Fig. 63: drei Ansichten einer Ausführungsform einer Bremseinrichtung des Transportwagens aus Fig. 1;
- Fig. 64: eine Seitenansicht des Transportwagens aus Fig. 1 in dem zweiten Betriebsmodus beim Einsetzen einer Transportbox in die erste Aufnahme;
- Fig. 65: eine Seitenansicht des Transportwagens aus Fig. 64 beim Einsetzen der Transportbox in die erste Aufnahme;
- Fig. 66: eine Seitenansicht des Transportwagens aus Fig. 1 in dem zweiten Betriebsmodus mit einer Transportbox in die erste Aufnahme;
- Fig. 67: eine Seitenansicht des Transportwagens aus Fig. 1 in dem zweiten Betriebsmodus beim Entfernen einer Transportbox aus der ersten Aufnahme;
- Fig. 68: eine Seitenansicht des Transportwagens aus Fig. 67 beim Entfernen der Transportbox aus der ersten Aufnahme;
- Fig. 69: eine Seitenansicht des Transportwagens aus Fig. 1 in dem zweiten Betriebsmodus beim Einsetzen einer Transportbox in die zweite Aufnahme;
- Fig. 70: eine Seitenansicht des Transportwagens aus Fig. 69 mit einer Transportbox in der zweiten Aufnahme nach dem Einsetzen der Transportbox in die zweite Aufnahme;
- Fig. 71: eine Seitenansicht des Transportwagens aus Fig. 1 in dem zweiten Betriebsmodus vor dem Entfernen einer Transportbox aus der zweiten Aufnahme;
- Fig. 72: eine Seitenansicht des Transportwagens aus Fig. 71 beim Entfernen der Transportbox aus der zweiten Aufnahme;
- Fig. 73: eine Seitenansicht des Transportwagens aus Fig. 1 in dem zweiten Betriebsmodus beim Einsetzen einer Transportbox in die erste Aufnahme;
- Fig. 74: eine Seitenansicht des Transportwagens aus Fig. 73 beim Einsetzen einer Transportbox in die erste Aufnahme;
- Fig. 75: eine Seitenansicht des Transportwagens aus Fig. 73 mit einer Transportbox in der ersten Aufnahme nach dem Einsetzen der Transportbox in die erste Aufnahme;
- Fig. 76: eine Seitenansicht des Transportwagens aus Fig. 1 in dem ersten Betriebsmodus mit einer Transportbox in der ersten Aufnahme vor dem Entfernen der Transportbox aus der ersten Aufnahme;
- Fig. 77: eine Seitenansicht des Transportwagens aus Fig. 76 beim Entfernen der Transportbox aus der ersten Aufnahme;
- Fig. 78: eine Seitenansicht des Transportwagens aus Fig. 1 in dem ersten Betriebsmodus beim Einsetzen einer Transportbox in die zweite Aufnahme;
- Fig. 79: eine Seitenansicht des Transportwagens aus Fig. 78 mit einer Transportbox in der zweiten Aufnahme nach dem Einsetzen der Transportbox in die zweite Aufnahme;
- Fig. 80: eine Seitenansicht des Transportwagens aus Fig. 1 in dem ersten Betriebsmodus mit einer Transportbox in der zweiten Aufnahme vor dem Entfernen der Transportbox aus der zweiten Aufnahme;
- Fig. 81: eine Seitenansicht des Transportwagens aus Fig. 80 beim Entfernen der Transportbox aus der zweiten Aufnahme;
- Fig. 82: eine schematische Ansicht einer Ausführungsform eines Verfahrens zum Überführen eines Transportwagens zwischen dem ersten und dem zweiten Betriebsmodus;
- Fig. 83: eine schematische Ansicht einer Ausführungsform eines Verfahrens zum Überführen eines Transportwagens zwischen dem Packmodus und ersten Betriebsmodus; und

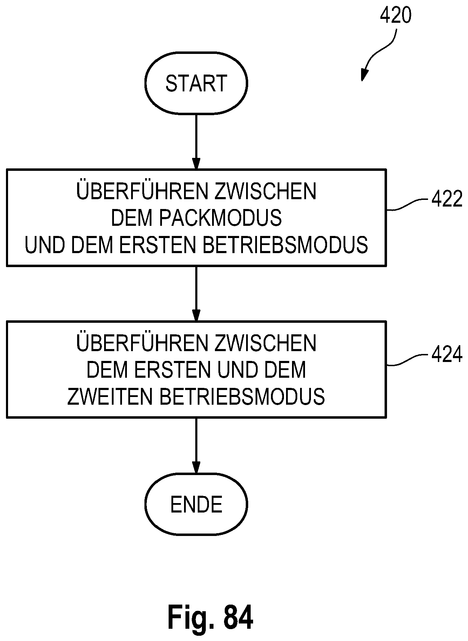

- Fig. 84: eine schematische Ansicht einer Ausführungsform eines Verfahrens zum Transformieren eines Transportwagens.

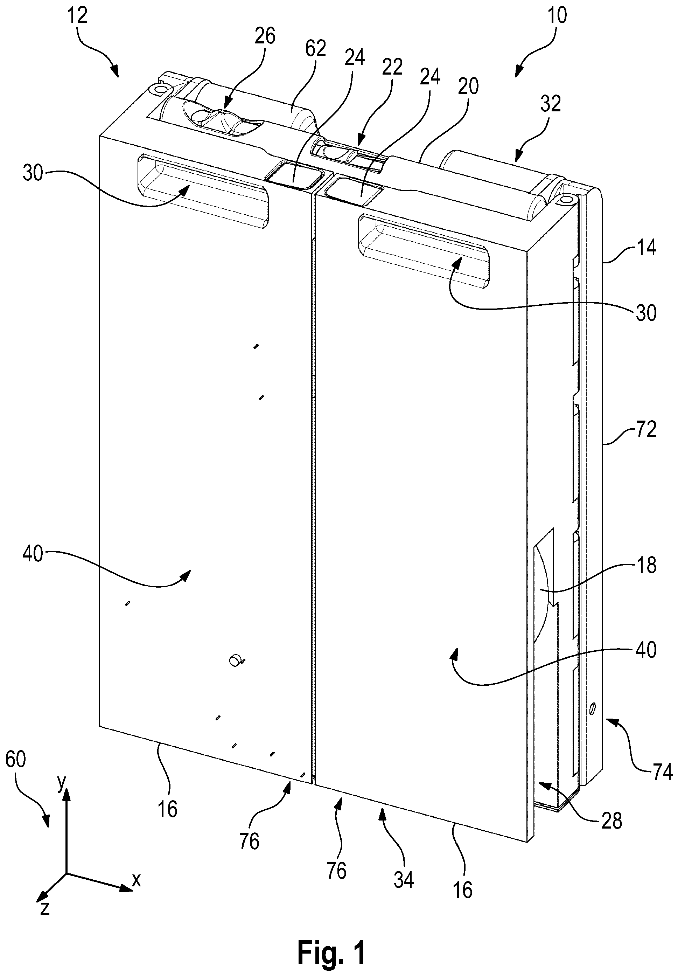

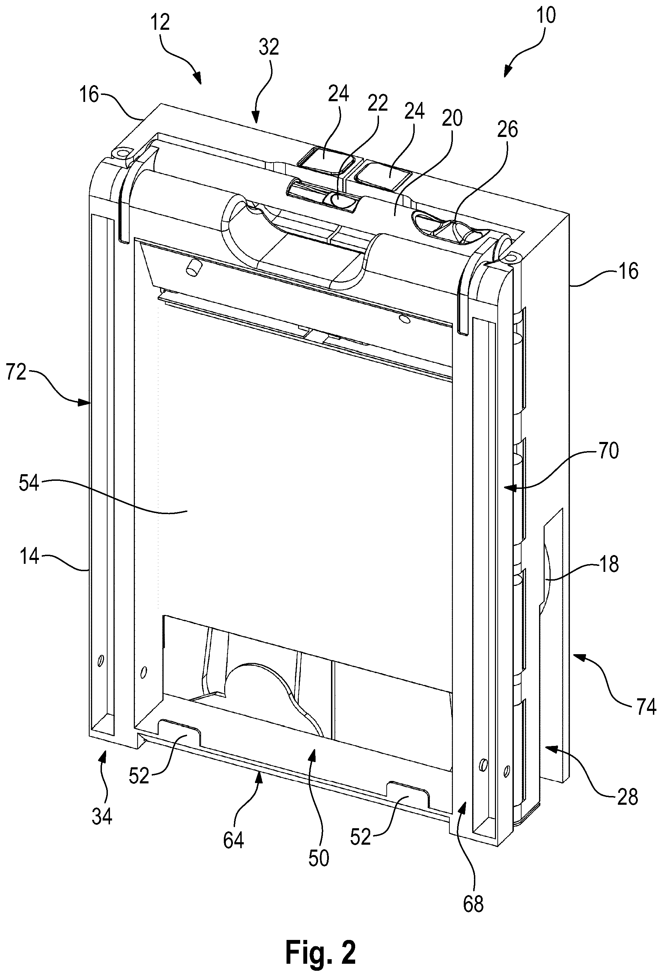

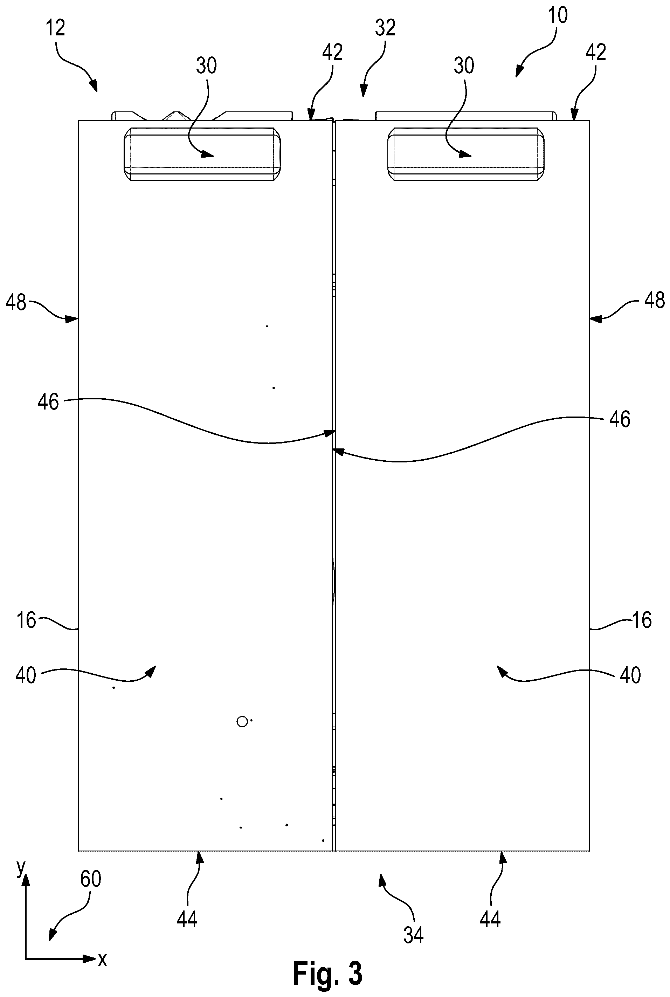

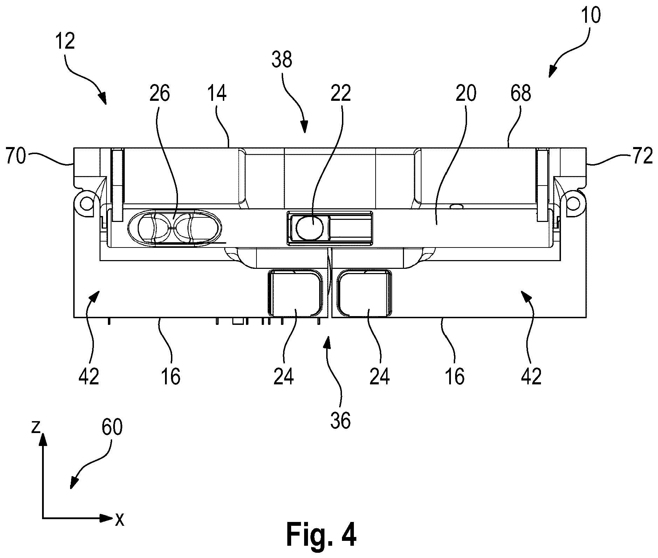

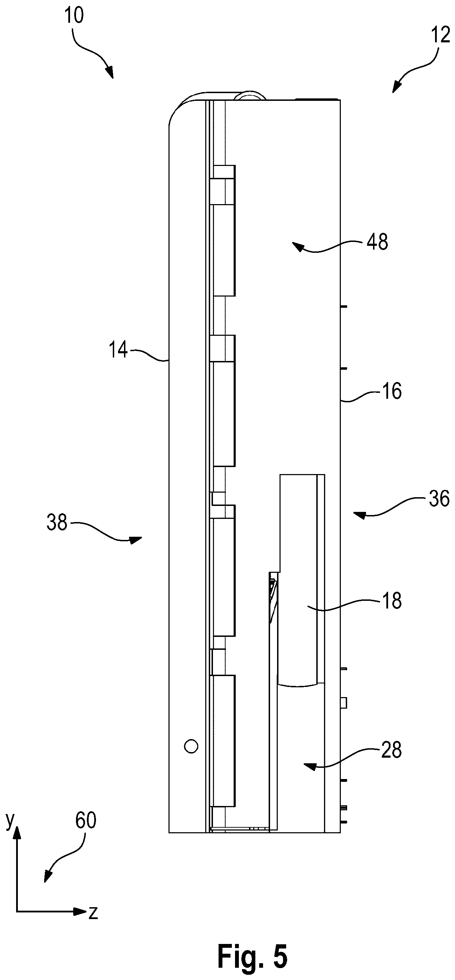

Die Figuren 1 bis 5 zeigen eine Ausführungsform eines Transportwagens 10. Der Transportwagen 10 ist in einem Packmodus 12 angeordnet. Der Packmodus ist besonders zum Aufbewahren bzw. Transportieren des Transportwagens 10 geeignet. Der Transportwagen 10 weist eine Basisbaugruppe 14, zwei Seitenbaugruppen 16, zwei Räder 18 und einen Griff 20 auf. Die Räder 18 können auch als Hinterräder bezeichnet werden.

Der Transportwagen 10 weist eine Oberseite 32, eine Unterseite 34, eine Vorderseite 36 und eine Rückseite 38 auf. Die Seiten des Transportwagens 10 sind bezüglich eines kartesischen Koordinatensystems 60 im Raum angeordnet. Die y-Richtung des Koordinatensystems 60 ist vertikal ausgerichtet und entspricht insbesondere somit einer vertikalen Richtung. Die y-Richtung und z-Richtung des Koordinatensystems 60 sind horizontal ausgerichtet. Die Oberseite 32 und die Unterseite 34 sind in der y-Richtung auf gegenüberliegenden Seiten des Transportwagens 10 angeordnet. Die Vorderseite 36 und die Rückseite 38 sind in der z-Richtung auf gegenüberliegenden Seiten des Transportwagens 10 angeordnet.

Die Basisbaugruppe 14 weist eine Oberseite 62, eine Unterseite 64, eine Vorderseite 66, eine Rückseite 68, eine erste Außenseite 70 und eine zweite Außenseite 72 auf. Die Oberseite 62 und die Unterseite 64 sind in der y-Richtung auf gegenüberliegenden Seiten der Basisbaugruppe 14 angeordnet. Die Vorderseite 66 und die Rückseite 68 in der z-Richtung auf gegenüberliegenden Seiten der Basisbaugruppe 14 angeordnet. Die erste Außenseite 70 und die zweite Außenseite 72 sind in der x-Richtung auf gegenüberliegenden Seiten der Basisbaugruppe 14 angeordnet

Jede Seitenbaugruppe 16 weist eine Oberseite 42, eine Unterseite 44, eine Außenseite 40, eine Innenseite 41, eine erste Randseite 46 und eine zweite Randseite 48 auf. Die Oberseite 42 und die Unterseite 44 sind in der y-Richtung auf gegenüberliegenden Seiten der jeweiligen Seitenbaugruppe 16 angeordnet. In dem Packmodus 12 sind die Außenseite 40 und die Innenseite 41 in der z-Richtung auf gegenüberliegenden Seiten der jeweiligen Seitenbaugruppe 16 angeordnet. In dem Packmodus 12 sind die erste Randseite 46 und die zweite Randseite 48 in der x-Richtung auf gegenüberliegenden Seiten der jeweiligen Seitenbaugruppe 16 angeordnet.

Die Seitenbaugruppen 16 sind an der Basisbaugruppe 14 angeordnet. Die Seitenbaugruppen 16 sind einander gegenüberliegend angeordnet. Die Seitenbaugruppen 16 sind auf gegenüberliegenden Seiten der Basisbaugruppe 14 angeordnet. Insbesondere ist je eine Seitenbaugruppe 16 an der ersten und der zweiten Außenseite 70, 72 der Basisbaugruppe 14 schwenkbar gelagert, so dass jede Seitenbaugruppe 16 zwischen einer zugeklappten Stellung 76, in der die Seitenbaugruppe 16 an der Basisbaugruppe anliegt, und einer aufgeklappten Stellung 80, in der sich die Seitenbaugruppe 16 von der Basisbaugruppe, vorzugsweise senkrecht, weg erstreckt.

In dem Packmodus 12 sind die Seitenbaugruppen 16 in der zugeklappten Stellung 76 angeordnet. In dem Packmodus 12 erstrecken sich die Seitenbaugruppen 16 von den Außenseiten 70, 72 entlang der Vorderseite 66 aufeinander zu. Die Seitenbaugruppen 16 sind dabei in der x-Richtung miteinander fluchtend angeordnet. Insbesondere sind die Außenseiten 40 der Seitenbaugruppen 16 parallel zueinander angeordnet und liegen in einer Ebene.

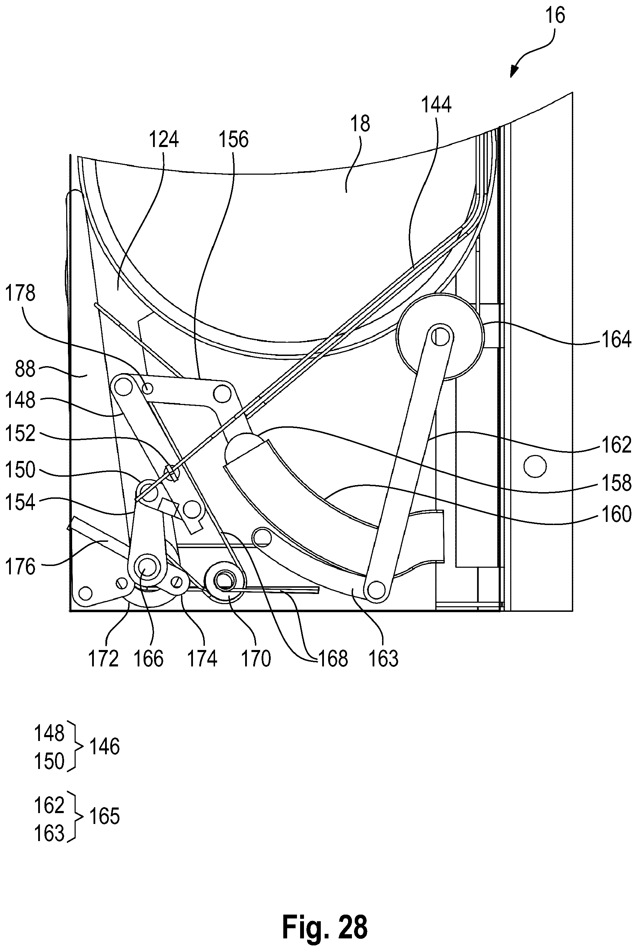

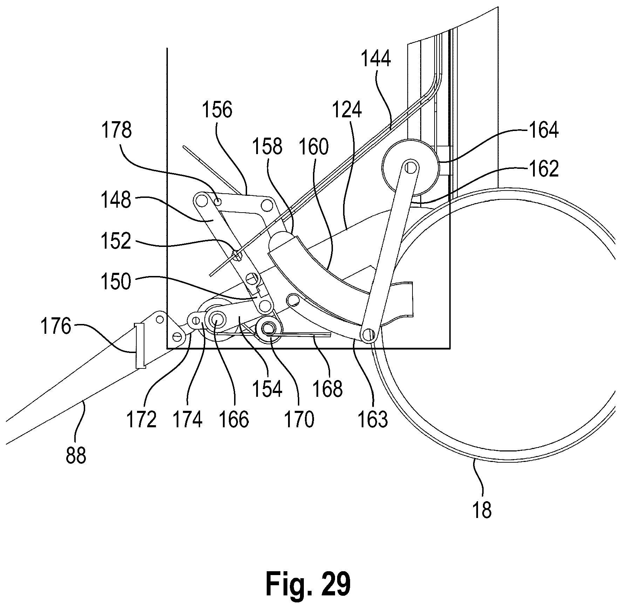

Jeweils eines der Räder 18 ist an jeweils einer Seitenbaugruppe 16 angeordnet. Jedes Rad 18 ist dabei jeweils um eine Achse schwenkbar an der entsprechenden Seitenbaugruppe 16 angeordnet, so dass das Rad 18 zwischen einer eingeklappten Stellung 74, in der das Rad 18 in die entsprechende Seitenbaugruppe 16 eingeklappt ist, und einer ausgeklappten Stellung 78, in der das Rad 18 aus der entsprechenden Seitenbaugruppe ausgeklappt ist, geschenkt werden kann. Die ausgeklappte Stellung 78 kann auch als erste ausgeklappte Stellung bezeichnet werden. Zur schwenkbaren Lagerung ist jedes Rad über einen dritten Arm 124 in der entsprechenden Seitenbaugruppe 16 angeordnet, wobei jeder dritte Arm 124 an der entsprechenden Seitenbaugruppe 16 schwenkbar gelagert ist. Jedes Rad 18 ist an einem Ende des jeweiligen dritten Arms 124 angeordnet, wobei der Lagerungspunkt der Schwenkachse an dem anderen, gegenüberliegenden Ende des jeweiligen dritten Arms 124 angeordnet ist. Der dritte Arm 124 ist in den Figuren 1 bis 5 nicht dargestellt und wird später anhand der Figuren 28 und 29 genauer beschrieben.

Jede Seitengruppe 16 weist eine erste Öffnung 28 auf, durch die das Rad in die Seitenbaugruppe eingeklappt bzw. aus der Seitenbaugruppe ausgeklappt werden kann. Die erste Öffnung 28 ist an der zweiten Außenseite 48 und/oder an der Unterseite 44 der entsprechenden Seitenbaugruppe 16 angeordnet.

Der Transportwagen 10 weist des Weiteren ein erstes Betätigungselement 22 auf. Durch eine Betätigung des ersten Betätigungselements 22 kann beispielsweise der Griff 20 verstellt werden. Der Griff kann beispielsweise bei einer Betätigung aus der Basisbaugruppe 14 in eine ausgezogene Stellung 106 ausgezogen werden. Der Griff 20 kann auch bei einer anderen Betätigung relativ zu der Basisbaugruppe 14 verschwenkt werden. In dem Packmodus 12 ist der Griff in einer eingeschobenen Stellung 104 und nicht verschwenkt angeordnet.

Der Transportwagen 10 weist des Weiteren zwei zweite Betätigungselemente 24 auf. Je eines der zweiten Betätigungselemente 24 ist jeweils an einer der Seitenbaugruppen 16 angeordnet. Durch eine Betätigung eines der zweiten Betätigungselemente 24 kann eine Arretierung der entsprechenden Seitenbaugruppe 16 gelöst werden, so dass die Seitenbaugruppe 16 schwenkbar ist.

Der Transportwagen 10 weist des Weiteren ein drittes Betätigungselement 26 auf. Durch eine Betätigung des dritten Betätigungselements 26 kann eine Feststellbremse für die Räder 18 aktiviert bzw. gelöst werden.

Die Seitenbaugruppen 16 weisen jeweils Vertiefungen 30 auf. Die Vertiefungen 30 sind auf der Außenseite 40 jeder Seitenbaugruppe 16 angeordnet. Vorzugsweise sind die Vertiefungen in einem oberen Teil der Außenseite 40, insbesondere nahe an der Oberseite 42, angeordnet. Die Vertiefungen 30 dienen dazu, dass ein Benutzer in die Vertiefungen 30 greifen kann, um die Seitenbaugruppen aufzuklappen bzw. zuzuklappen. Die Vertiefungen 30 können auch als Griffmulden bezeichnet werden.

Die Basisbaugruppe 14 weist eine Aussparung 50 auf, die auf der Rückseite 68 der Basisbaugruppe 14 angeordnet ist. In der Aussparung 50 ist eine Transportbox anordenbar. Auf der der Unterseite 64 zugewandten Seite der Aussparung 50 weist die Basisbaugruppe 14 zwei Vorsprünge 52 auf. Die Vorsprünge 52 dienen dazu, eine Transportbox in der Aussparung 50 zu halten.

Der Transportwagen 10 weist des Weiteren eine Auflage 54. Die Auflage 54 kann auch als Bodenklappe bezeichnet werden. Die Auflage 54 weist vorzugsweise eine Auflagefläche auf, auf der beispielsweise eine Kiste oder einen Kasten zum Transport angeordnet werden kann. Die Auflage 54 ist an der Basisbaugruppe 14 schwenkbar zwischen einer vertikalen Stellung 82, in der eine Auflagefläche der Auflage 54 vertikal angeordnet ist, und einer horizontalen Stellung 84 in der die Auflagefläche der Auflage 54 horizontal angeordnet ist, gelagert. Im Packmodus ist die Auflage 54 in der vertikalen Stellung 82 angeordnet.

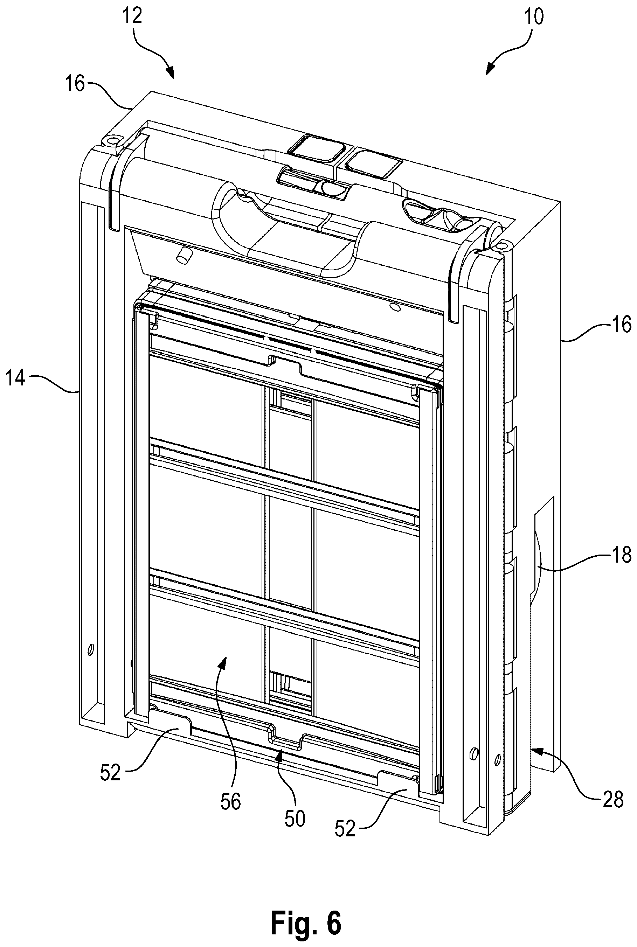

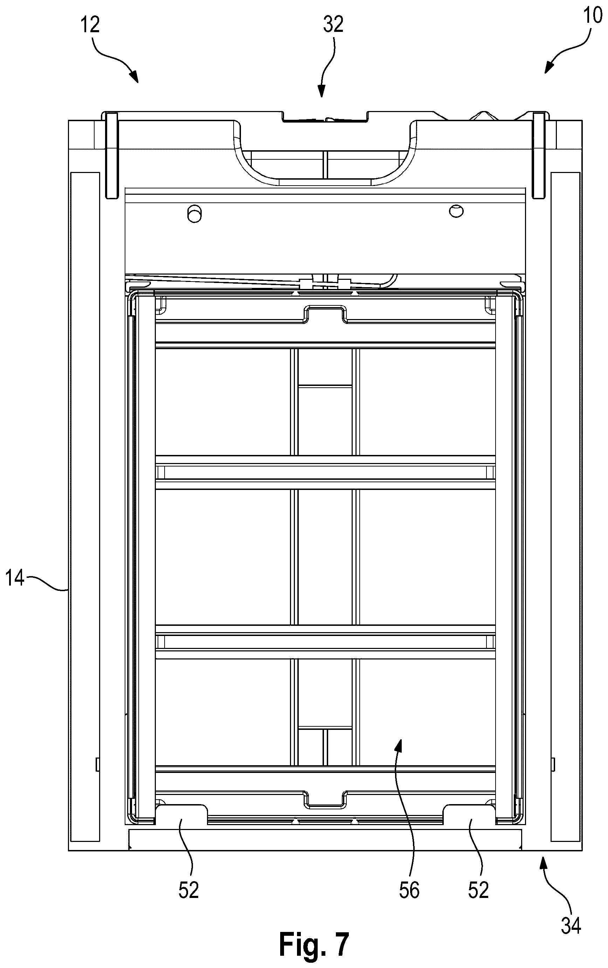

Die Figuren 6 und 7 zeigen die Rückseite des Transportwagens 10 aus den Fig. 1 bis 5, wobei in der Aussparung 50 der Basisbaugruppe 14 eine Transportbox 56 angeordnet ist. Die Transportbox 56 ist zusammengeklappt. Die Transportbox 56 ist in der Aussparung 50 hochkant angeordnet. Die Vorsprünge 52' und 52" sind dazu ausgebildet, die Transportbox 56 in der Aussparung 50 zu halten.

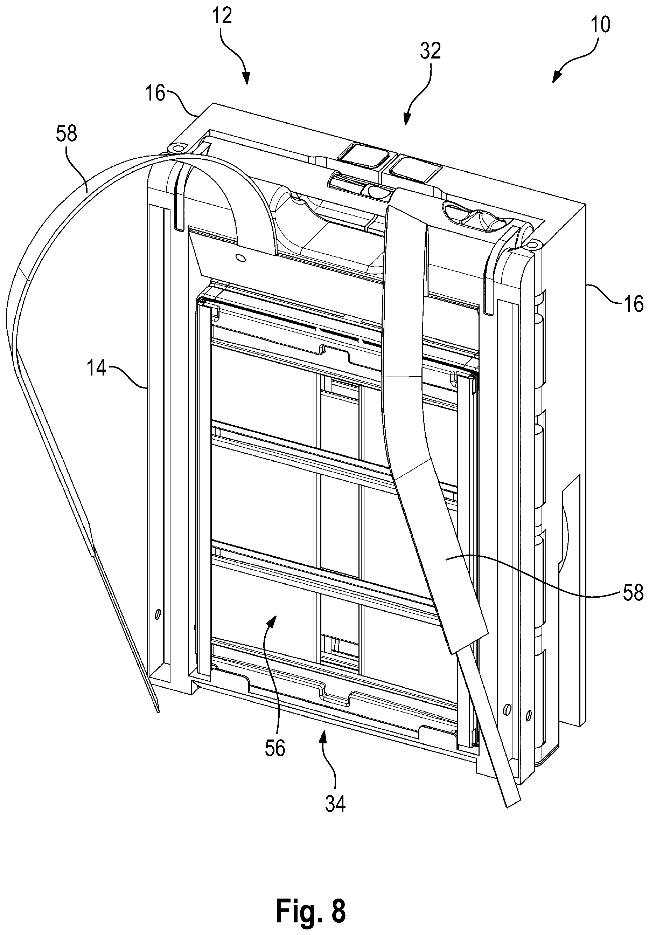

Fig. 8 zeigt die Rückseite des Transportwagens aus den Figuren 1 bis 6, wobei auf der Rückseite der Basisbaugruppe zwei Gurte 58 zum Tragen des Transportwagens 10 befestigt sind.

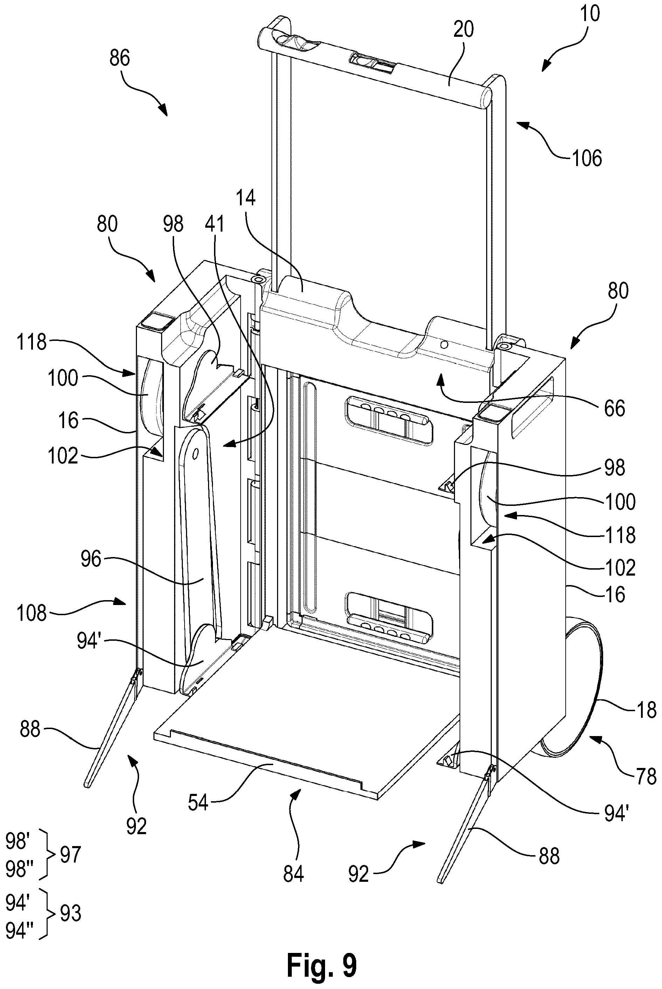

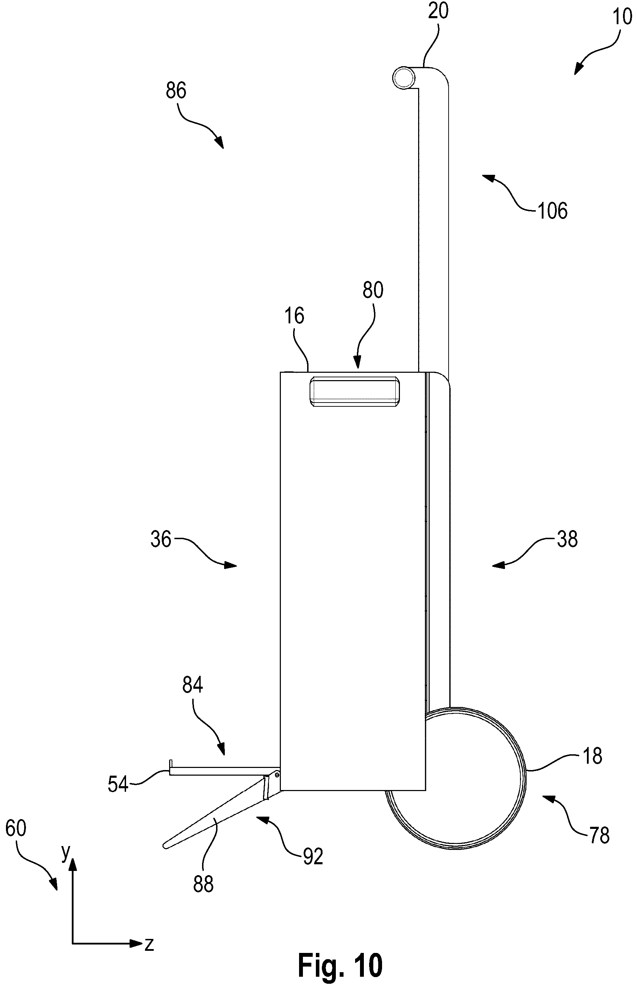

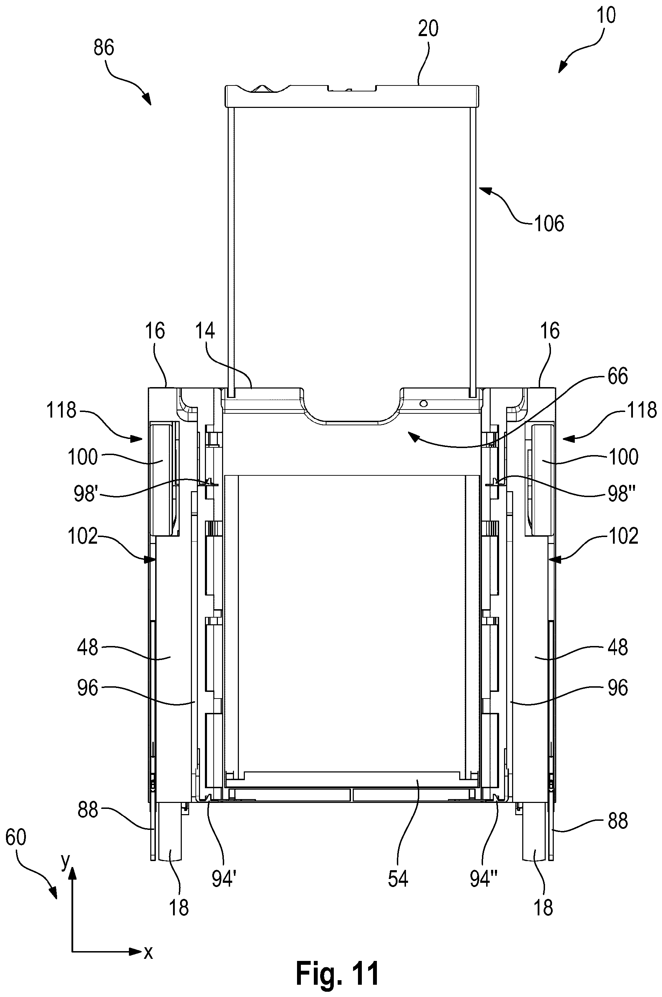

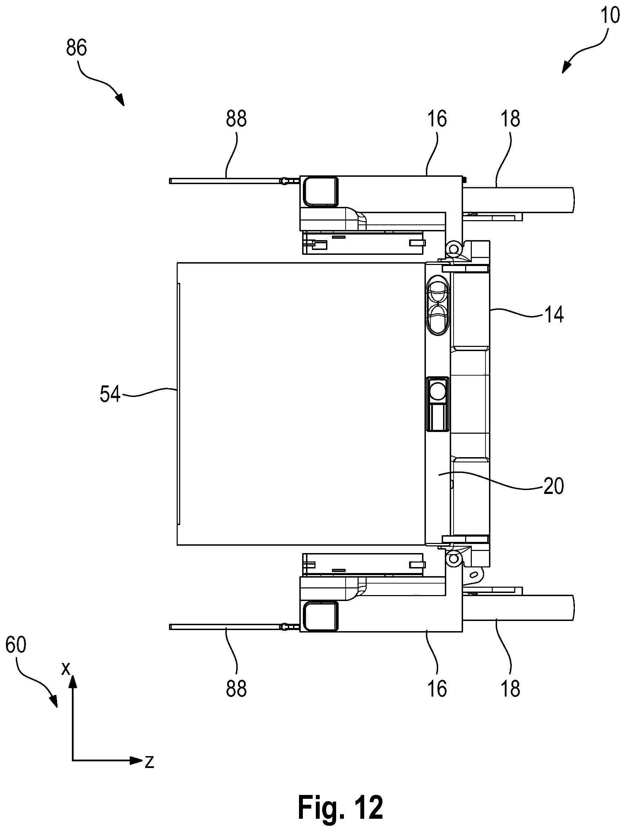

Figuren 9 bis 12 zeigen den Transportwagen aus Fig. 1 in einem ersten Betriebsmodus 86. Der erste Betriebsmodus 86 eignet sich besonders zum Transportieren von Transportboxen auf dem Transportwagen bzw. generell zum Ziehen des Transportwagens 10 an dem Griff 20.Der erste Betriebsmodus 86 kann daher auch als Nachziehmodus bezeichnet werden.

In dem ersten Betriebsmodus 86 sind die Seitenbaugruppen 16 jeweils in einer aufgeklappten Stellung 80 angeordnet. In der aufgeklappten Stellung 80 erstrecken sich die Seitenbaugruppe 16 von der Basisbaugruppe 14, vorzugsweise senkrecht, weg erstreckt. Die Seitenbaugruppen 16 sind dabei in der z-Richtung parallel zueinander angeordnet. Insbesondere sind die Außenseiten 40 der Seitenbaugruppen 16 parallel zueinander angeordnet und liegen nicht in einer Ebene.

In dem ersten Betriebsmodus 86 sind die Außenseite 40 und die Innenseite 41 jeder Seitenbaugruppe 16 in der x-Richtung auf gegenüberliegenden Seiten der jeweiligen Seitenbaugruppe 16 angeordnet. In dem ersten Betriebsmodus sind die erste Randseite 46 und die zweite Randseite 48 in der z-Richtung auf gegenüberliegenden Seiten der jeweiligen Seitenbaugruppe 16 angeordnet.

In dem ersten Betriebsmodus 86 sind die Räder 18 jeweils in der ausgeklappten Stellung 78 angeordnet. In dem ersten Betriebsmodus 86 ist der Griff 20 in der ausgezogenen Stellung 106 angeordnet.

Der Transportwagen 10 weist des Weiteren eine erste Aufnahme 93 für eine Transportbox auf. Die erste Aufnahme 93 wird durch zwei erste Aufnahmeelemente 94 gebildet. Die zwei ersten Aufnahmeelemente 94 sind in den Figuren zur Unterscheidung mit den Bezugszeichen 94' und 94" gekennzeichnet. Je ein erstes Aufnahmeelement 94 ist an jeweils einer Seitenbaugruppe 16 angeordnet. Die ersten Aufnahmeelemente 94 sind jeweils an der Innenseite 41 der entsprechenden Seitenbaugruppe 16 angeordnet. In anderen Worten ist die erste Aufnahme 93 in dem ersten Betriebsmodus 86 zwischen den Seitenbaugruppen 16 angeordnet.

Jedes erste Aufnahmeelement 94 ist über je einen ersten Arm 96 an entsprechenden Seitenbaugruppe 16 angeordnet. Jeder erste Arme 96 ist an der Innenseite 41 der entsprechenden Seitenbaugruppe 16 um eine Achse schwenkbar gelagert. Im ersten Betriebsmodus 86 verlaufen diese Schwenkachsen parallel zu der x-Richtung. Die Schwenkachsen der Arme 96 sind insbesondere fluchtend zueinander angeordnet. Jedes Aufnahmeelement 94 ist an einem Ende des jeweiligen ersten Arms 96 angeordnet, wobei der Lagerungspunkt der Schwenkachse an dem anderen, gegenüberliegenden Ende des jeweiligen ersten Arms 96 angeordnet ist.

Mittels der ersten Arme 96 ist die erste Aufnahme 93 zwischen einer Transportposition 108 und einer Ladeposition 110 verschwenkbar. In der Transportposition 108 ist die erste Aufnahme 93 in der y-Richtung tiefer, insbesondere näher an der Unterseite 34 des Transportwagens 10, angeordnet als in der Ladeposition 110.

Der Transportwagen 10 weist des Weiteren eine zweite Aufnahme 97 eine Transportbox auf. Die zweite Aufnahme 97 wird durch zwei zweite Aufnahmeelemente 98 gebildet. Je ein zweites Aufnahmeelement 98 ist an jeweils einer Seitenbaugruppe 16 angeordnet. Die zweiten Aufnahmeelemente 98 sind jeweils an der Innenseite 41 der entsprechenden Seitenbaugruppe 16 angeordnet. In anderen Worten ist die zweite Aufnahme 97 in dem ersten Betriebsmodus 86 zwischen den Seitenbaugruppen 16 angeordnet.

In der Transportposition 108 ist die erste Aufnahme 93 in der y-Richtung unterhalb der zweiten Aufnahme angeordnet. Dabei ist die die erste Aufnahme 93 näher an der Unterseite 34 angeordnet als die zweite Aufnahme. In anderen Worten sind die erste Aufnahme 93 und die zweite Aufnahme 97 übereinander angeordnet.

Der Transportwagen 10 weist des Weiteren zwei Stützen 88 auf. Je eine Stütze 88 ist an jeweils einer Seitenbaugruppe 16 angeordnet. Jede Stützen 88 ist an der entsprechenden Seitenbaugruppe 16 um eine Achse zwischen einer eingeklappten Stellung 90 und einer ausgeklappte Stellung 92 schwenkbar angeordnet. Die Schwenkachsen verlaufen in dem ersten Betriebsmodus in der x-Richtung. Die Schwenkachsen sind zudem miteinander fluchtend angeordnet. In dem Packmodus 12 sind die Stützen 88 jeweils in der eingeklappten Stellung 90 angeordnet. In dem ersten Betriebsmodus sind die Stützen 88 jeweils in der ausgeklappten Stellung 92 angeordnet. Eine oder jede Stütze 88 kann insbesondere ein Hebelelement sein. Das Hebelelement kann dann mit seinem freien Ende den Transportwagen auf dem Boden abstützen. Insbesondere kann das Hebelelement bzw. die Stütze 88 dann mit seinem freien Ende den Transportwagen 10 direkt auf dem Boden abstützen. Insbesondere kann das Hebelelement bzw. die Stütze 88 kein Rad aufweisen. Das Hebelelement bzw. die Stütze 88 kann ohne ein Rad an seinem freien Ende ausgebildet sein.

Der Transportwagen 10 weist des Weiteren zwei Stützräder 100 auf. Je eine Stützrad 100 ist an jeweils einer Seitenbaugruppe 16 angeordnet. Jedes Stützrad 100 ist dabei jeweils um eine Achse schwenkbar an der entsprechenden Seitenbaugruppe 16 angeordnet, so dass das Stützrad 100 zwischen einer eingeklappten Stellung 118, in der das Stützrad 100 in die entsprechende Seitenbaugruppe 16 eingeklappt ist, und einer ausgeklappten Stellung 120, in der das Stützrad 100 aus der entsprechenden Seitenbaugruppe ausgeklappt ist, geschenkt werden kann.

Jedes Stützrad 100 ist über je einen zweiten Arm 122 an der entsprechenden Seitenbaugruppe 16 angeordnet. Jeder zweite Arme 122 ist in der entsprechenden Seitenbaugruppe 16 um eine Achse schwenkbar gelagert. Im ersten Betriebsmodus 86 verlaufen diese Schwenkachsen parallel zu der x-Richtung. Die Schwenkachsen der zweiten Arme 122 sind insbesondere fluchtend zueinander angeordnet. Jedes Stützrad 100 ist an einem Ende des jeweiligen zweiten Arms 122 angeordnet, wobei der Lagerungspunkt der Schwenkachse an dem anderen, gegenüberliegenden Ende des jeweiligen zweiten Arms 122 angeordnet ist.

Jede Seitengruppe 16 weist eine zweite Öffnung 102 auf, durch die das entsprechende Stützrad 100 in die Seitenbaugruppe 16 eingeklappt bzw. aus der Seitenbaugruppe 16 ausgeklappt werden kann. Die erste Öffnung 28 ist an der ersten Außenseite 48 der entsprechenden Seitenbaugruppe 16 angeordnet.

In den Figuren 9 bis 12 ist die Auflage 54 in der horizontalen Stellung 84 angeordnet. In der horizontalen Stellung 84 ist die Auflage 54 zwischen den ersten Aufnahmeelementen 94 angeordnet und blockiert somit die erste Aufnahme. Um eine Transportbox in die erste Aufnahme 93 einsetzen zu können, muss die Auflage 54 in die vertikale Stellung 82 überführt werden. Alternativ kann auch vorgesehen sein, dass die Auflage 54 tiefer als die Aufnahmeelemente 94 angeordnet ist, so dass die erste Aufnahme 93 nicht blockiert wird.

Grundsätzlich kann die Auflage 54 im ersten Betriebsmodus 86 sowohl in der vertikalen Stellung 82 als auch der horizontalen Stellung 84 angeordnet sein. In der horizontalen Stellung 84 kann auf der Auflagefläche der Auflage 54 beispielsweise ein Kasten transportiert werden.

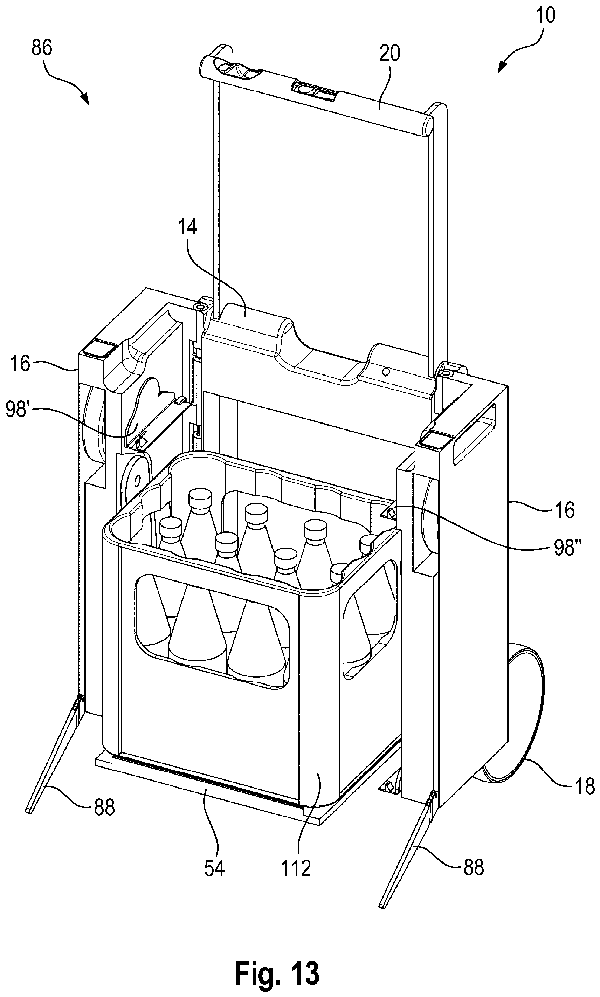

Fig. 13 zeigt den Transportwagen 10 entsprechend der Figuren 9 bis 12, wobei auf der Auflagefläche der Auflage 54 ein Kasten 112 mit Flaschen angeordnet ist.

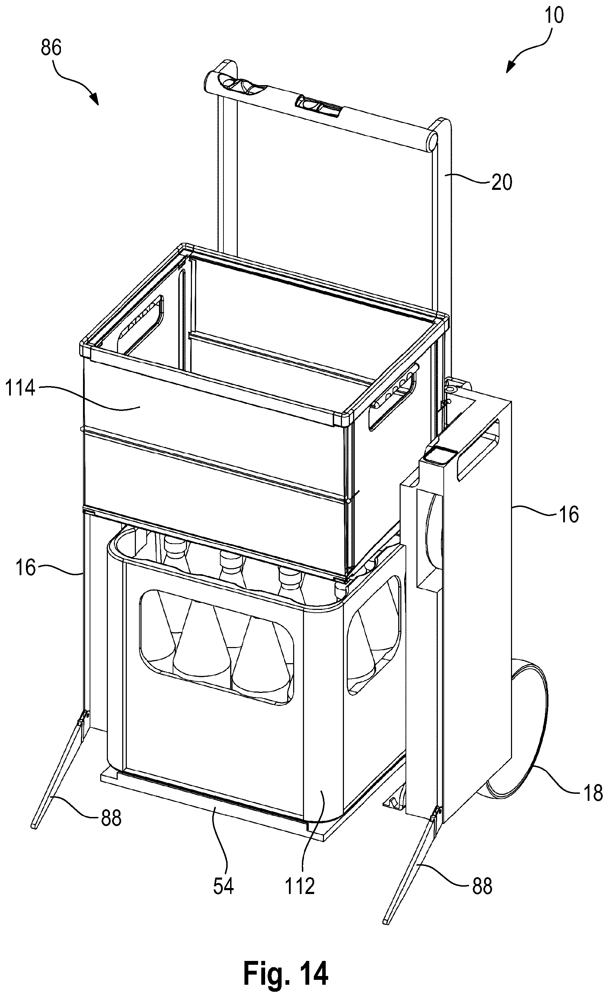

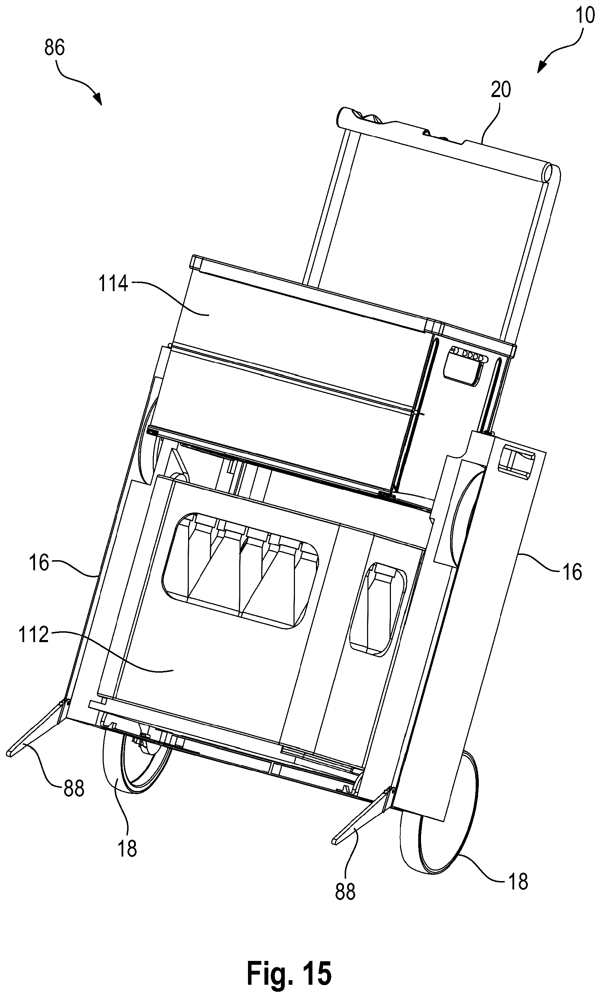

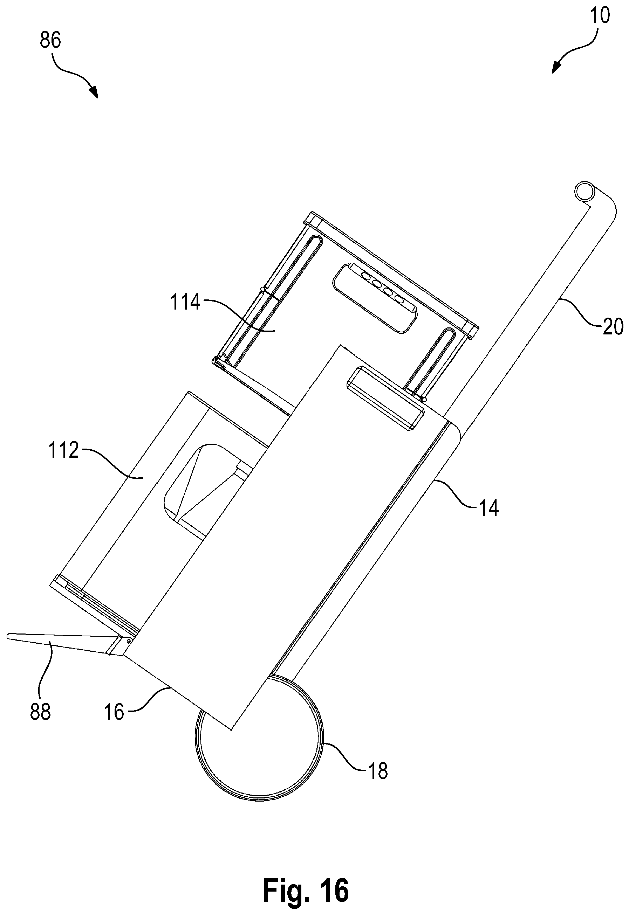

Die Figuren 14 bis 16 zeigen den Transportwagen 10 entsprechend der Fig. 13, wobei in der zweiten Aufnahme eine Transportbox 114 angeordnet ist. Zum Ziehen des Transportwagens 10 wird der Transportwagen 10, wie in den Figuren 15 und 16 dargestellt, gegenüber einer Horizontalen um eine Drehachse der Räder 18 gekippt, so dass die Stützen 88 vom Boden gelöst werden und der Transportwagen 10 gezogen werden kann.

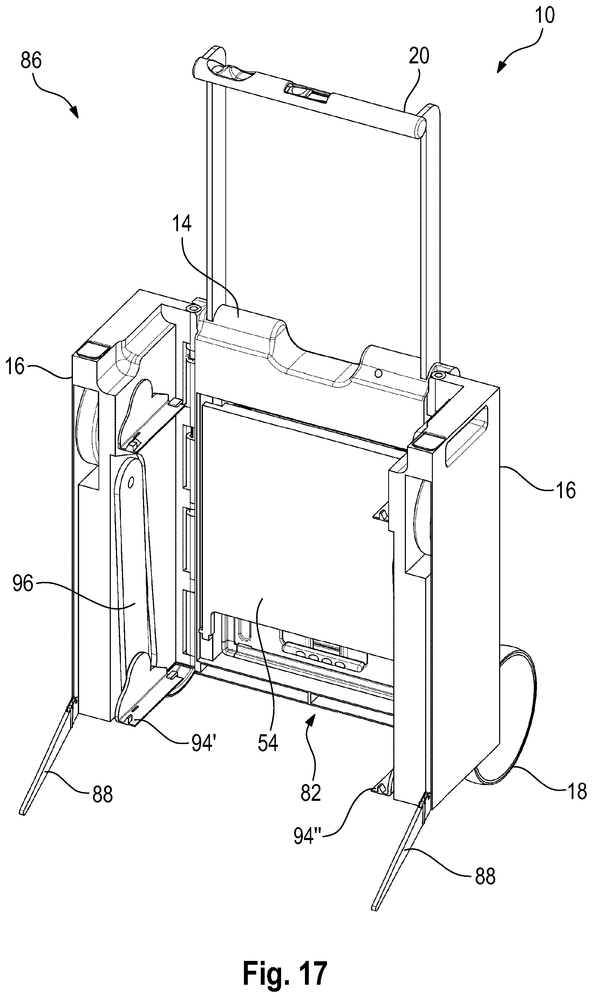

Fig. 17 zeigt den Transportwagen 10 entsprechend der Figuren 9 bis 12, wobei die Auflage 54 in der vertikalen Stellung 82 angeordnet ist.

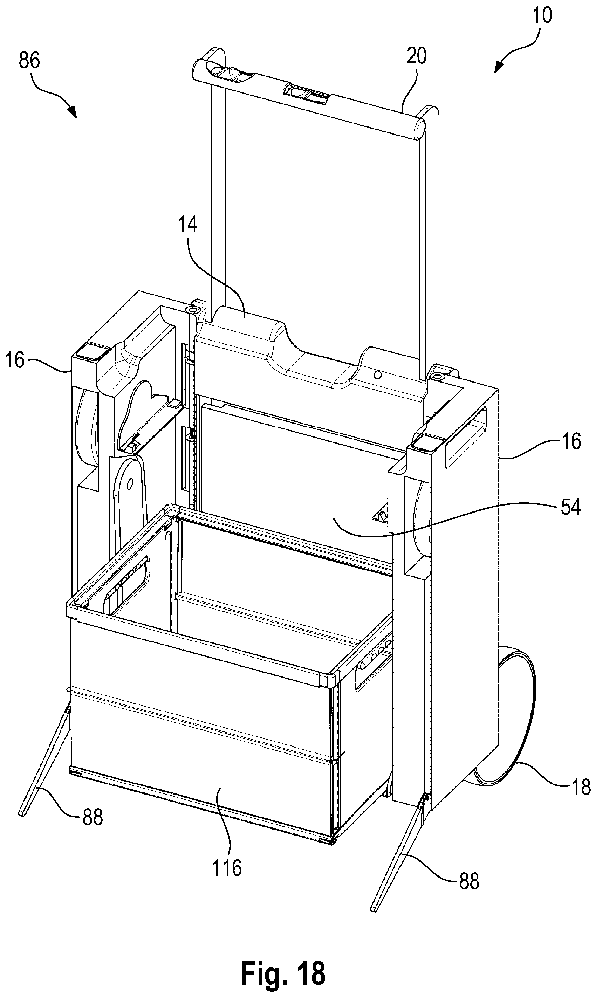

Fig. 18 zeigt den Transportwagen 10 entsprechend Fig. 17, wobei in der ersten Aufnahme 93 eine Transportbox 116 angeordnet ist.

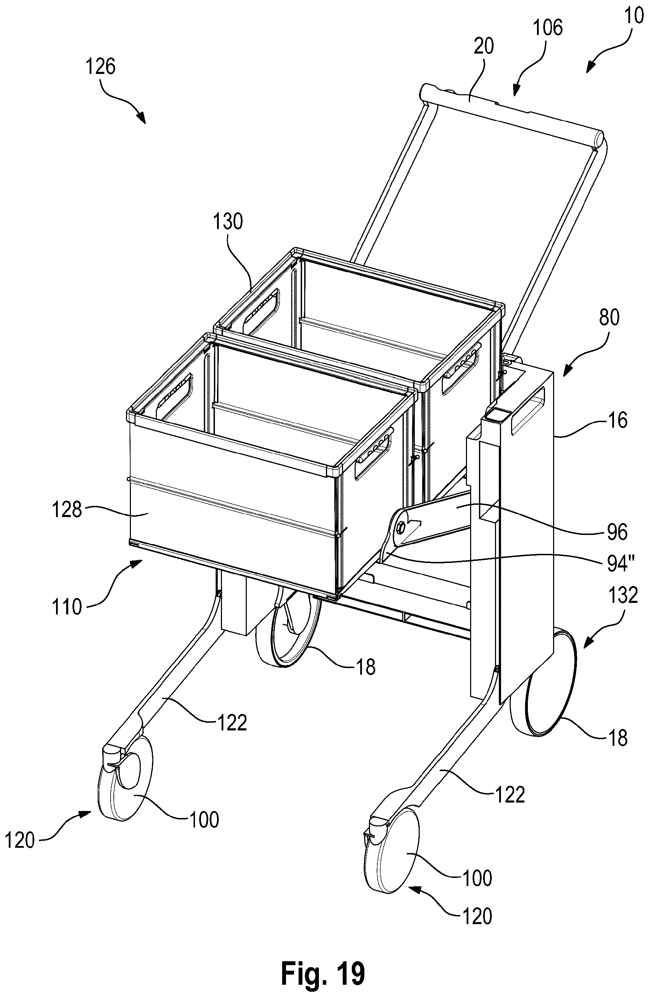

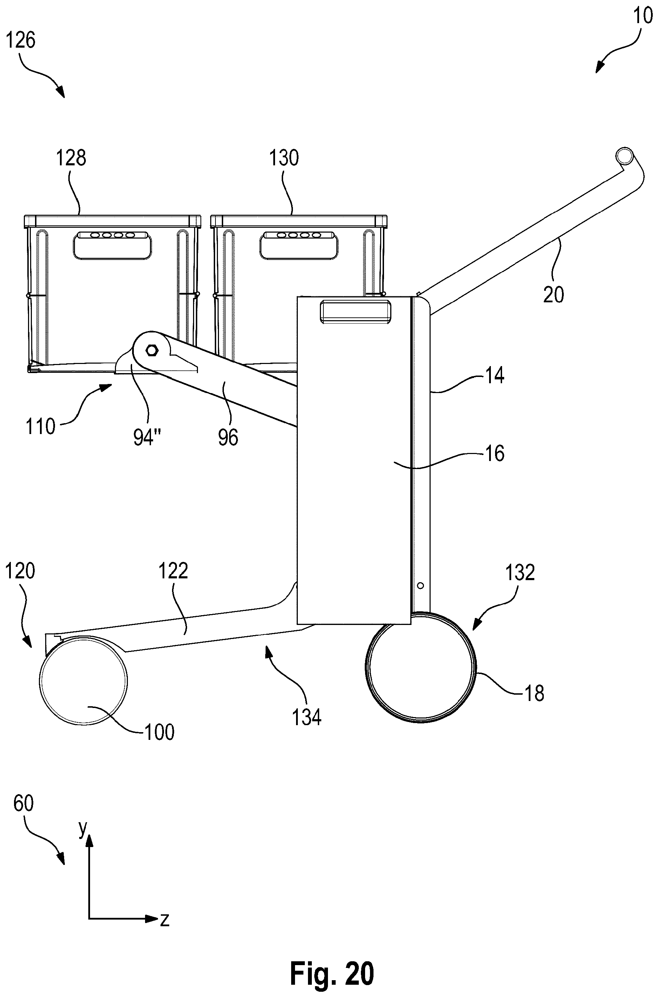

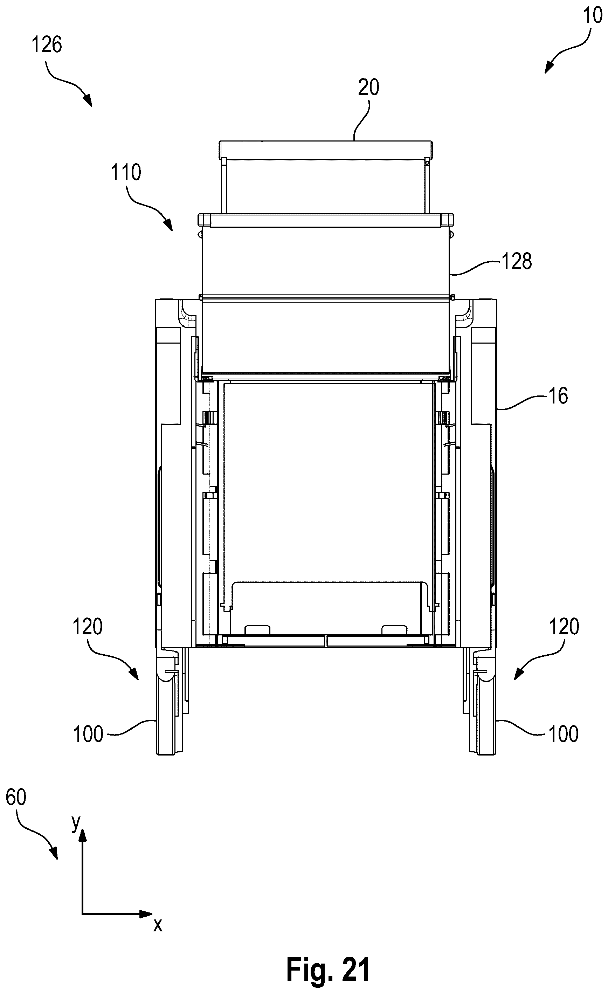

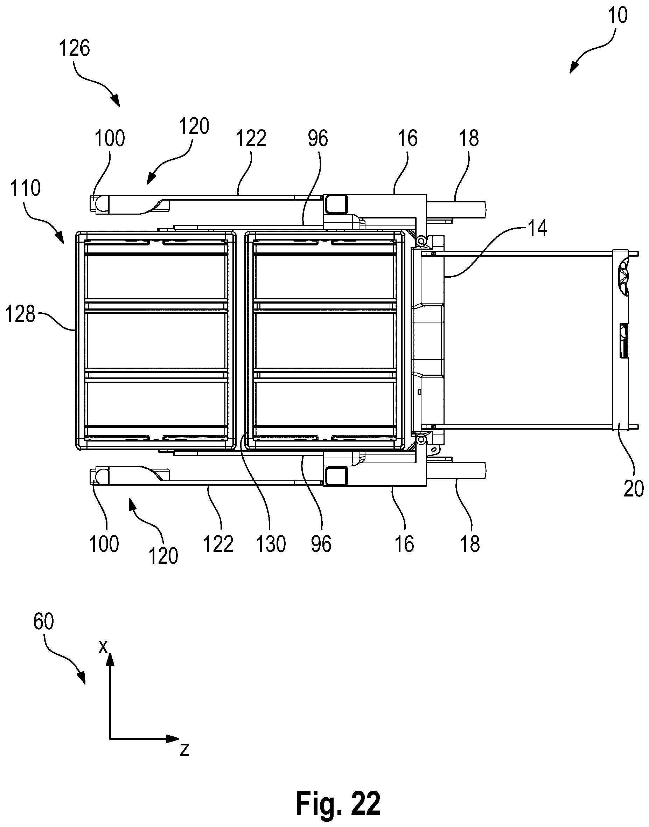

Die Figuren 19 bis 22 zeigen den Transportwagen 10 in einem zweiten Betriebsmodus 126. Der zweite Betriebsmodus 126 eignet sich besonders zum Beladen von Transportboxen auf dem Transportwagen bzw. generell zum Schieben des Transportwagens 10 über den Griff 20.Der zweite Betriebsmodus 126 kann daher auch als Schiebemodus bezeichnet werden.

In dem zweiten Betriebsmodus 126 ist der Griff 20 in der ausgezogenen Stellung 106 angeordnet. Der Griff ist an der Basisbaugruppe 14 um eine Achse schwenkbar angeordnet. Die Achse verläuft parallel zu der x-Richtung. Der Griff 20 ist gegenüber der Ausrichtung in dem ersten Betriebsmodus 86, in der der Griff parallel zu der y-Richtung erstreckt, in der z-y Ebene um die Achse in Richtung der den Seitenbaugruppen 16 abgewandten Richtung verschwenkt.

In dem zweiten Betriebsmodus 126 ist jede Seitenbaugruppe 16 in der aufgeklappten Stellung 80 angeordnet. In dem zweiten Betriebsmodus 126 ist jedes Stützrad in der ausgeklappten Stellung angeordnet 120. In dem zweiten Betriebsmodus 126 ist die zweite Aufnahme 97 in der Ladeposition angeordnet.

In dem zweiten Betriebsmodus 126 ist jedes Rad 18 in einer weiteren ausgeklappten Stellung 132 angeordnet, auch als zweite ausgeklappte Stellung bezeichnet werden kann. In der weiteren ausgeklappten Stellung 132 ist jedes Rad weiter ausgeklappt als in der ausgeklappten Stellung 78. Insbesondere ist jedes Rad 18 in der y-Richtung tiefer bezüglich der Unterseite 44 der Seitenbaugruppen angeordnet als in der ausgeklappten Stellung 78. In anderen Worten ist in der y-Richtung ein Abstand der Drehachse der Räder 18 zu der Unterseite 44 in der entsprechenden Seitenbaugruppe 16 in der weiteren ausgeklappten Stellung 132 größer als in der ausgeklappten Stellung 78.

Des Weiteren ist in dem zweiten Betriebsmodus 126 jede Stütze 88 in einer zurückgeklappten Stellung 134 angeordnet. Die zurückgeklappten Stellung 134 ist in einem Winkelbereich um die entsprechende Achse zwischen der eingeklappten Stellung 90 und der ausgeklappten Stellung 92 angeordnet. Insbesondere weist jeder zweite Arm 122 eine Aussparung auf, in der die entsprechende Stütze eingeklappt werden kann, wenn die Stützräder ausgeklappt sind. In der zurückgeklappten Stellung 134 ist jedes Stützrad in der Aussparung des entsprechenden Arms angeordnet.

In der Ladeposition 110 sind die erste Aufnahme 93 und die zweite Aufnahme 97 bezüglich der y-Richtung auf gleicher Höhe angeordnet. In der x-Richtung sind die erste Aufnahme 93 und die zweite Aufnahme 97 nebeneinander angeordnet.

In der ersten Aufnahme 93 kann eine erste Transportbox 128 angeordnet werden. In der zweiten Aufnahme kann eine zweite Transportbox 130 angeordnet werden.

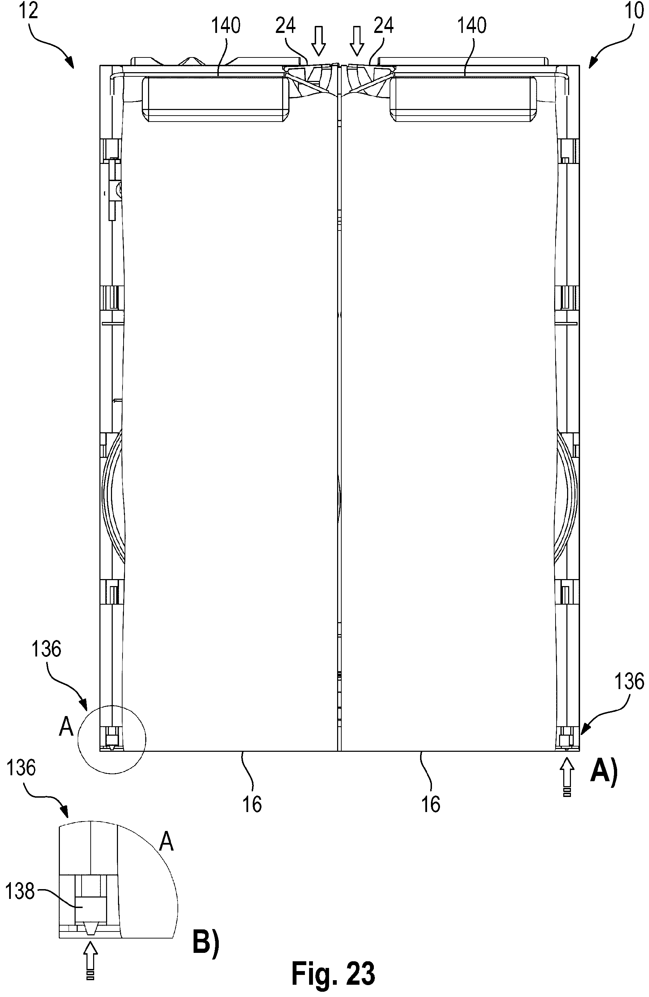

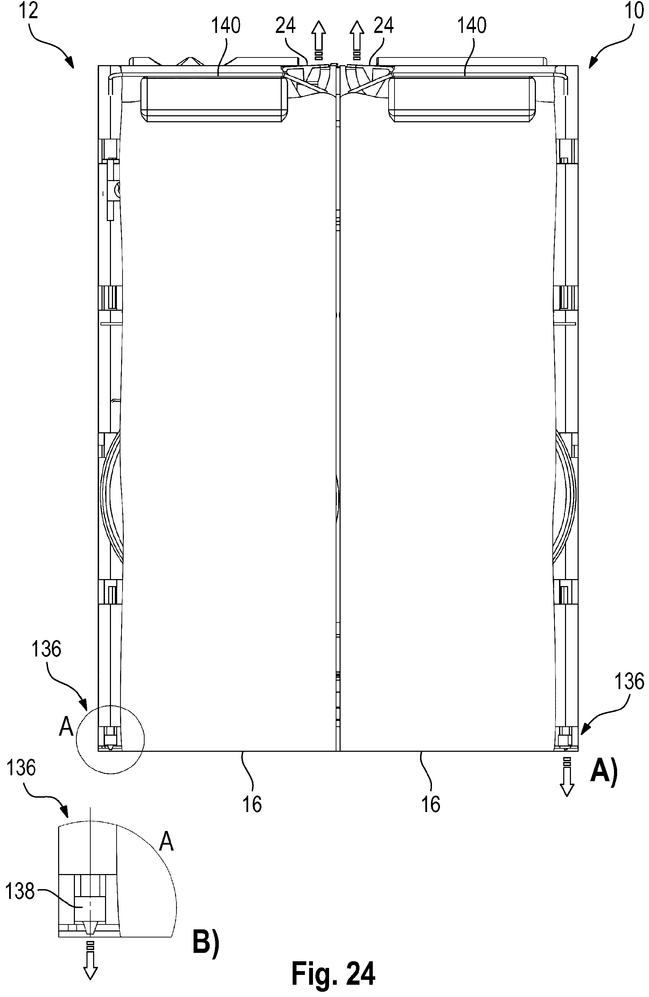

In Fig. 23 und 24 ist ein Mechanismus dargestellt, mittels dem die Seitenbaugruppen 16 sowohl in der zugeklappten Stellung 76 als auch in der aufgeklappten Stellung 80 arretierbar sind. Dazu weist der Transportwagen 10 an jede eine Arretiereinrichtung 136 für jede Seitenbaugruppe 16 auf. Die Arretiereinrichtung 136 weist einen Zapfen 138 auf, der in der zugeklappten Stellung 76 und in der aufgeklappten Stellung 80 jeweils mit einer entsprechenden Aussparung an der Basisbaugruppe 14 in eingriff gebracht werden kann, um die Seitenbaugruppen in der zugeklappten Stellung 76 bzw. in der aufgeklappten Stellung 80 zu halten. Jeder Zapfen 138 ist an der Unterseite der entsprechenden Seitenbaugruppe 16 angeordnet.

Jeder Zapfen 138 ist durch eine Betätigung des entsprechenden zweiten Betätigungselements 24 außer Eingriff mit der entsprechenden Aussparung bringbar, so dass die entsprechende Seitenbaugruppe 16 um die jeweilige Schwenkachse zwischen der zugeklappten 76 und der aufgeklappten Stellung 80 schwenkbar ist. Dazu ist jeder Zapfen mit dem entsprechenden Betätigungselement 24 über einen Seilzug 140 verbunden, der bei einer Betätigung des Betätigungselements gespannt wird, so dass der Zapfen aus der entsprechenden Aussparung heraus gezogen wird. Vorzugsweise verläuft der Seilzug 140 entlang der Schwenkachse der jeweiligen Seitenbaugruppe 16. In anderen Worten wird der Seilzug durch die Lagerung der entsprechenden Seitenbaugruppe 16 an der Basisbaugruppe von der Unterseite zu der Oberseite der Seitenbaugruppe 16 geführt.

In Fig. 23 ist dargestellt, dass bei einer Betätigung eines Betätigungselements 24 der entsprechende Zapfen 138 aus der jeweiligen Aussparung gezogen wird. In Fig. 24 ist dargestellt, dass der entsprechende Zapfen 138 wieder zurück in die jeweilige Aussparung bewegt wird, wenn die Betätigung des Betätigungselements 24 nicht mehr erfolgt.

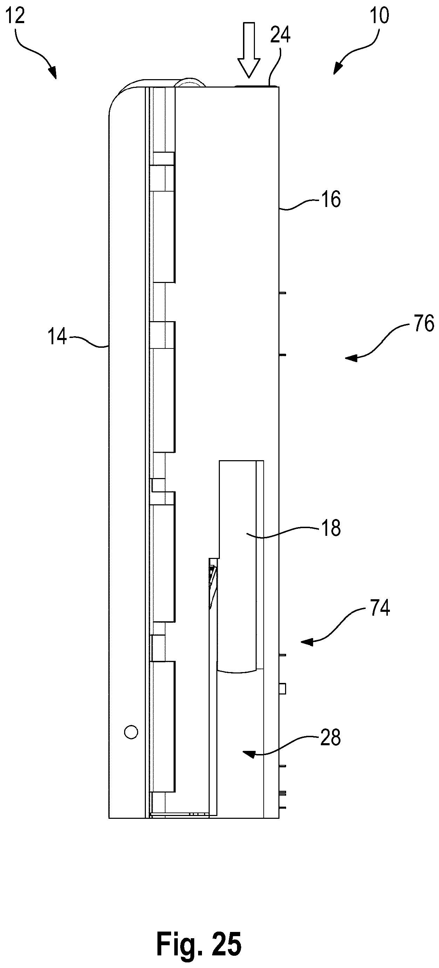

In den Figuren 25 bis 27 ist ein Mechanismus dargestellt, mittels dem die Seitenbaugruppen 16 aufgeklappt bzw. zugeklappt werden können. Jede Seitenbaugruppe 16 ist dazu an der Basisbaugruppe 14 um je eine Schwenkachse 142 schwenkbar gelagert.

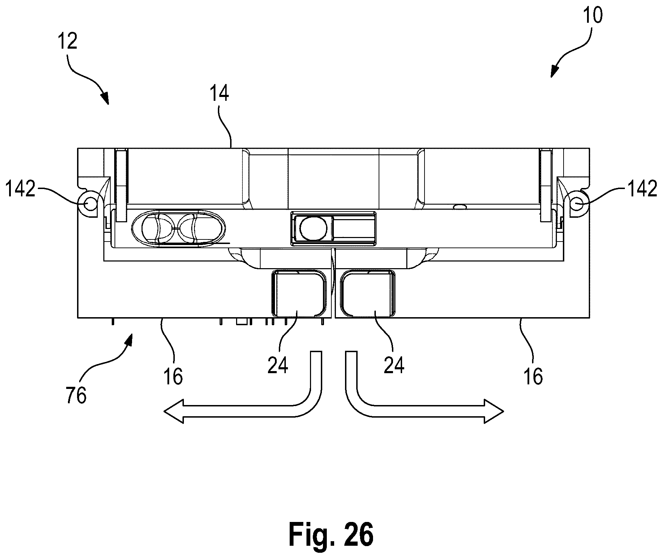

In den Figuren 25 und 26 ist das Aufklappen der Seitenbaugruppen 16 dargestellt. Zuerst werden dazu, wie in Fig. 25 dargestellt, die Betätigungselemente 24 betätigt, um die Arretierung der Arretiervorrichtung 136 zu lösen. Dann wird, wie in Fig. 26 dargestellt, jede Seitenbaugruppe 16 um die entsprechende Schwenkachse 142 von der zugeklappten Stellung 76 in die aufgeklappte Stellung 80 geschwenkt.

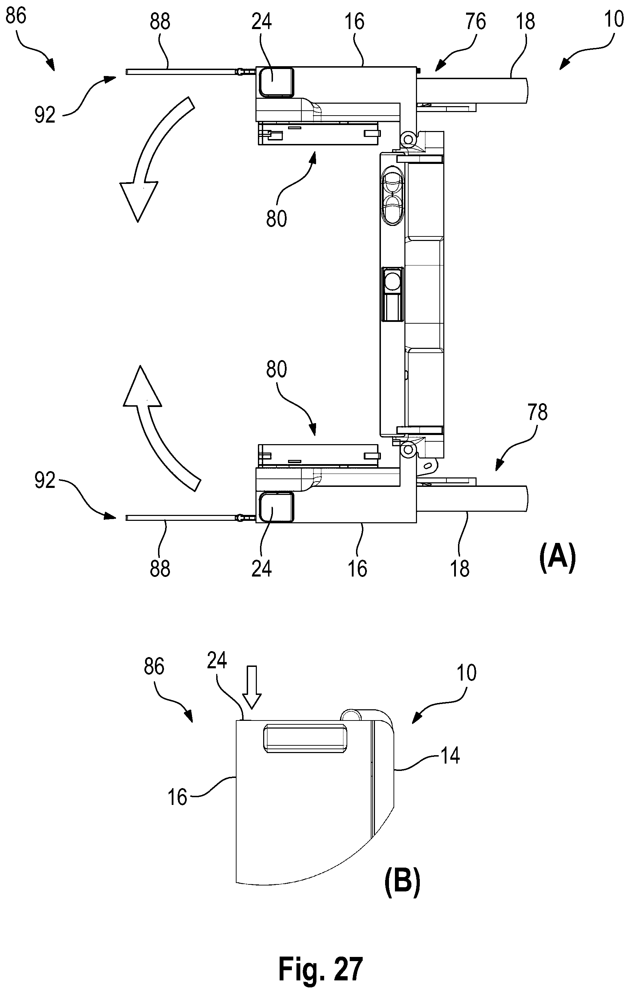

In den Ansichten der Figur 27 ist das Zuklappen der Seitenbaugruppen 16 dargestellt. Zuerst werden dazu, wie in Ansicht (A) der Fig. 27 dargestellt, die Betätigungselemente 24 betätigt, um die Arretierung der Arretiervorrichtung 136 zu lösen. Dann wird, wie in Ansicht (B) der Fig. 27 dargestellt, jede Seitenbaugruppe um die entsprechende Schwenkachse 142 von der aufgeklappten Stellung 80 in die zugeklappte Stellung 76 geschwenkt.

Die Figuren 28 und 29 ist ein Mechanismus dargestellt, mittels dem ein Rad 18 und eine Stütze 88 aus einer Seitenbaugruppe 16 ausgeklappt bzw. eingeklappt werden können. In Fig. 28 ist die Seitenbaugruppe 16 in der zugeklappten Stellung 76 angeordnet. Dementsprechend ist der Transportwagen 10 in dem Packmodus 12, das Rad 18 in der eingeklappten Stellung 74 und die Stütze 88 in der eingeklappten Stellung 90 angeordnet. In Fig. 29 ist die Seitenbaugruppe 16 in der aufgeklappten Stellung 80 angeordnet. Dementsprechend ist der Transportwagen 10 in dem ersten Betriebsmodus 86, das Rad 18 in der ausgeklappten Stellung 78 und die Stütze 88 in der ausgeklappten Stellung 92 angeordnet.

Für den Mechanismus zum Aus- und Einklappen des Rads 18 und der Stütze 88 weist die Seitenbaugruppe 16 einen Seilzug 144, einen ersten Kniehebel 146, einen ersten Hebel 154, einen zweiten Hebel 156, einen weiteren Seilzug 168, einen dritten Hebel 174 und einen vierten Arm 172 auf.

Ein erstes Ende des Seilzugs 144 wird gezogen, wenn die Seitenbaugruppe 16 aufgeklappt wird. An dem anderen Ende des Seilzugs 144 ist ein Federelement angeordnet, dass gespannt wird, wenn an dem ersten Ende gezogen wird. Beim Zuklappen der Seitenbaugruppe 16 wird der Seilzug 144 entspannt, so dass der Seilzug aufgrund der Rückstellkraft des Federelements in die entgegengesetzte Richtung gezogen.

Die Kniehebel 146 weist eine erstes Hebelelement 148 und ein zweites Hebelelement 150 auf. Der Seilzug 144 ist mit dem ersten Befestigungselement 148 gekoppelt. Dazu ist der Seilzug 144 an einem Befestigungspunkt 152 an dem ersten Hebelelement 148 angebracht bzw. befestigt.

Das erste Hebelelement 148 ist mit dem zweiten Hebel 156 gekoppelt. Das zweite Hebelelement 150 ist mit dem ersten Hebel 154 gekoppelt. Das erste Hebelelement148, das zweite Hebelelement 150 und der erste Hebel 154 weisen jeweils eine gerade Form auf. Der zweite Hebel 156 weist eine geknickte, insbesondere L-förmige oder Bumerangförmige, Form auf.

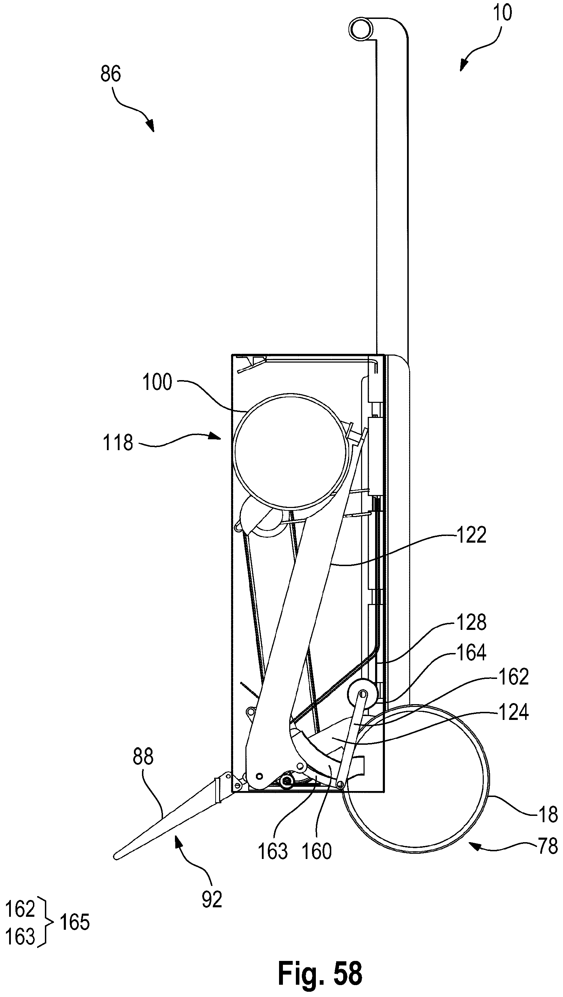

Auf der dem ersten Hebelelement 148 abgewandten Seite des zweiten Hebels 156 ist ein Rad 158 drehbar angeordnet. Das Rad 158 ist an einem ersten Ende einer Topfkurve 160 angeordnet. Das Rad 158 ist nur entlang der durch die Topfkurve 160 bereitgestellten Führung bewegbar. Die Topfkurve ist mit einem dritten Hebelelement 162 starr verbunden. Das dritte Hebelelement 162 bildet zusammen mit einem vierten Hebelelement 163 einen zweiten Kniehebel 165 aus. Das dritte Hebelelement 162 ist mit dem vierten Hebelelement 163 gekoppelt. Das vierte Hebelelement 163 ist mit dem Stützrad 100 der Seitenbaugruppe 16 gekoppelt. Der zweite Kniehebel 165 und die Topfkurve 160 werden beim Ausklappen bzw. Einklappen der Seitenbaugruppe 16 nicht bewegt. Ebenso bleibt das Rad an dem ersten Ende der Topfkurve 160 angeordnet. Die Funktion des zweiten Kniehebels 165 und der Topfkurve 160 wird mit Bezug auf die Figuren 58 bis 62 genau erläutert.

Der erste Hebel 154 ist auf einer Schwenkachse 166 frei drehbar gelagert. Der dritte Arm 124 des Rads 18 ist ebenfalls auf der Schwenkachse 166 frei drehbar gelagert, wobei die Schwenkbewegungen des ersten Hebels 154 und des dritten Arms 124 miteinander gekoppelt sind. Insbesondere sind der erste Hebel 154 und der dritte Arm 124 um die Schwenkachse 166 drehfest miteinander gekoppelt. Der dritte Hebel 174 ist über den Arm 172 mit der Stütze 88 gekoppelt. Der dritte Hebel 174 ist ebenfalls frei drehbar auf der Schwenkachse 166 gelagert.

Der dritte Hebel 174 ist mit einer Umlenkrolle drehfest gekoppelt, um die der weitere Seilzug 168 verläuft. Diese Umlenkrolle ist ebenfalls auf der Schwenkachse 166 frei drehbar gelagert. Dabei wird eine Zugbewegung des Seilzugs 168 auf eine Drehbewegung der Umlenkrolle und somit auch auf eine Schwenkbewegung des dritten Hebels 174 übertragen. Ein erstes Ende des Seilzugs 168 ist mit dem zweiten Hebel 156 gekoppelt. Dabei ist das erste Ende des Seilzugs 168 an einem Befestigungspunkt 178 an dem zweiten Hebel 156 angebracht bzw. befestigt. Das zweite Ende des Seilzugs 168 ist mit einem Federelement 180 gekoppelt, wobei das Federelement 180 gespannt wird, wenn der Seilzug 168 in Richtung des ersten Endes gezogen wird. Des Weiteren wird der Seilzug 168 um eine Umlenkrolle 170 umgelenkt. Die Umlenkrolle 170 ist bezüglich dem Verlauf des Seilzugs 168 zwischen der auf der Schwenkachse 166 gelagerten Umlenkrolle und dem zweiten Hebel 156 angeordnet.

In anderen Worten ist der Kniehebel 146 direkt über den Hebel 154 mit dem Arm 124 des Rads 18 gekoppelt und über den Seilzug 168 und dem Hebel 174 mit dem Arm 172 der Stütze 88 gekoppelt. Dadurch sind eine Schwenkbewegung des Rads 18 zwischen der eingeklappten Stellung 74 und der ausgeklappten Stellung 78 und eine Schwenkbewegung der Stütze 88 zwischen der eingeklappten Stellung 90 und der ausgeklappten Stellung 92 miteinander gekoppelt.

Die Stütze weist ein Anschlagelement 176 auf, das in der eingeklappten Stellung 90 der Stütze 88 an der Schwenkachse 166 anliegt.

In Figur 28 ist die Seitenbaugruppe 16 in der zugeklappten Stellung 76 angeordnet. Dabei ist der Kniehebel 146 geknickt angeordnet. In anderen Worten schließen das erste Hebelelement 148 und das zweite Hebelelement 150 miteinander einen Winkel ein, der kleiner als 90° ist. Vorzugsweise beträgt der Winkel 10° bis 30°, insbesondere 15°.

In Figur 29 ist die Seitenbaugruppe 16 in der aufgeklappten Stellung 80 angeordnet. Dabei ist der Kniehebel 146 gestreckt. In anderen Worten schließen das erste Hebelelement 148 und das zweite Hebelelement 150 miteinander einen Winkel von im Wesentlichen 180° ein. Das erste Hebelelement 148 und das zweite Hebelelement 150 sind somit kollinear angeordnet. Des Weiteren sind der Hebel 154 und der Hebel 174 gegenüber der in Fig. 28 dargestellten Anordnung um die Schwenkachse 166 gedreht. Der Drehwinkel ist dabei so gewählt, dass das Rad 18 und die Stütze 88 von der jeweils eingeklappten in die entsprechende ausgeklappte Stellung überführt sind. Der Drehwinkel ist vorzugsweise kleiner als 180°, weiter vorzugsweise 150° bis 175°, insbesondere 165°.

Vorzugsweise kann auch vorgesehen sein, dass die Schwenkbewegung der Auflage 54 zwischen der vertikalen Stellung 82 und der horizontalen Stellung 84 ebenfalls mit der Schwenkbewegung der Seitenbaugruppen 16 zwischen der zugeklappten Stellung 76 und der aufgeklappten Stellung 80 gekoppelt ist, so dass die Auflage 54 von der vertikalen Stellung 82 in die horizontale Stellung 84 geschwenkt wird, wenn die Seitenbaugruppen 16 von der zugeklappten Stellung 76 in die aufgeklappte Stellung 80 geschwenkt werden, und von der horizontalen Stellung 84 in die vertikale Stellung 82 geschwenkt wird, wenn die Seitenbaugruppen 16 von der aufgeklappten Stellung 80 in die zugeklappte Stellung 76 geschwenkt werden.

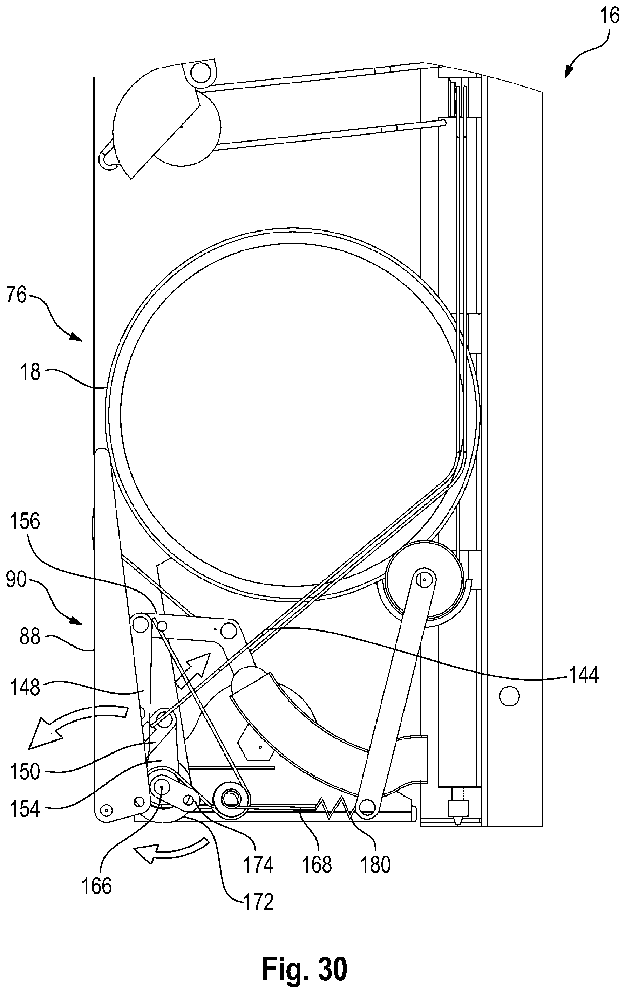

In den Figuren 30 bis 32 ist dargestellt, wie die einzelnen Komponenten der Seitenbaugruppe beim Aufklappen der Seitenbaugruppe zusammen wirken, so dass das Rad 18 und die Stütze 88 dabei ausgeklappt werden.

Beim Aufklappen der Seitenbaugruppe 16 wird der Seilzug 144 an dem ersten Ende in Richtung des in Fig. 30 dargestellten Pfeils gezogen. Da der Seilzug 144 mit dem ersten Hebelelement 148 des Kniehebels 146 verbunden ist, wird das erste Hebelelement 148 in derselben Richtung gezogen. Dabei wird der Kniehebel 146 allmählich gestreckt. In anderen Worten vergrößert sich ein Winkel, den das erste Hebelelement 148 und das zweite Hebelelement 150 miteinander einschließen umso mehr, je mehr an dem Seilzug 144 gezogen wird.

Beim Strecken des Kniehebels 146 wird der erste Hebel 154 um die Schenkachse 166 gedreht und das dem ersten Hebelelement 148 zugewandte Ende des zweiten Hebels 156 angehoben. Durch das Drehen des Hebels 154 wird der Arm 124 um die Schwenkachse 166 geschwenkt und somit auch das Rad 18 ausgeklappt. Durch das Anheben des zweiten Hebels 156 wird der Seilzug 168 in Richtung des ersten Endes, das an dem zweiten Hebel befestigt ist, gezogen. Da eine Zugbewegung des Seilzugs 168 mit einer Schwenkbewegung des dritten Hebels 174 gekoppelt ist, wird dadurch die Stütze 88 ausgeklappt.

Fig. 30 zeigt hierbei den Ausgangszustand der Aufklappbewegung, in dem die Seitenbaugruppe 16 in der zugeklappten Stellung 76 und das Rad und die Stütze jeweils in der eingeklappten Stellung angeordnet sind und der erste Kniehebel 146 komplett angewinkelt ist.

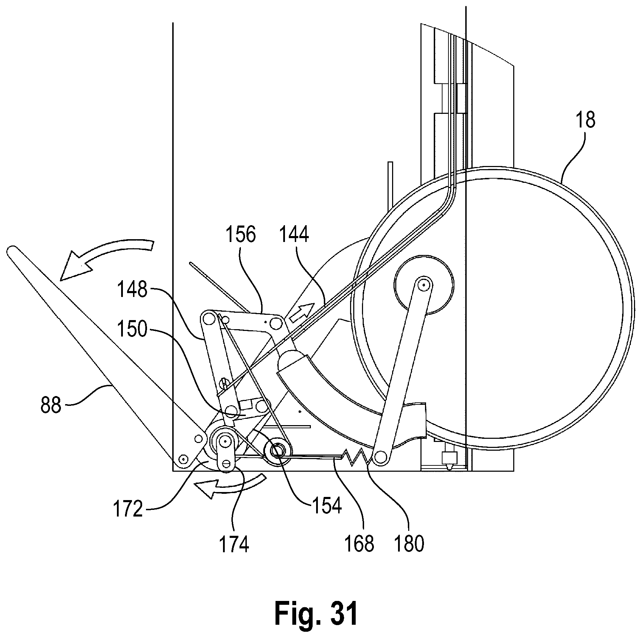

Fig. 31 zeigt einen Zwischenzustand der Aufklappbewegung, in dem die Seitenbaugruppe 16 teilweise aufgeklappt und das Rad und die Stütze jeweils teilweise ausgeklappt sind und der erste Kniehebel 146 teilweise gestreckt ist.

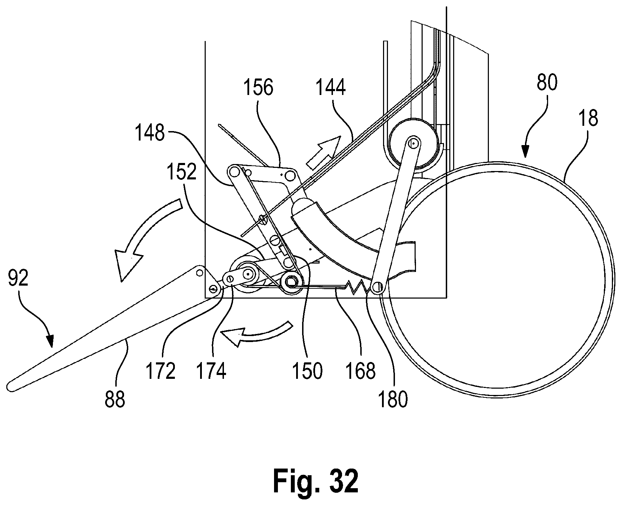

Fig. 32 zeigt den Endzustand der Aufklappbewegung, in dem die Seitenbaugruppe 16 in der aufgeklappten Stellung 80 und das Rad und die Stütze jeweils in der ausgeklappten Stellung angeordnet sind und der erste Kniehebel 146 komplett gestreckt ist.

Entsprechend verläuft auch die Zuklappbewegung der Seitenbaugruppe 16. Beim Zuklappen wird der Seilzug 144 entspannt, so dass das Federelement, dass an dem zweiten Ende des Seilzugs 144 angeordnet ist, aufgrund der Rückstellkraft den Seilzug 144 entgegen der Richtung des in Fig. 30 dargestellten Pfeils zieht. Dadurch wird der erste Kniehebel geknickt und der zweite Hebel 156 wird abgesenkt. Dabei wird der zweite Seilzug entspannt, so dass das Federelement 180 den Seilzug 168 in Richtung des zweiten Endes zieht. Da eine Zugbewegung des Seilzugs 168 mit einer Schwenkbewegung des dritten Arms 124 und des dritten Hebels 174 gekoppelt ist, werden dadurch das Rad 18 und die Stütze 88 eingeklappt.

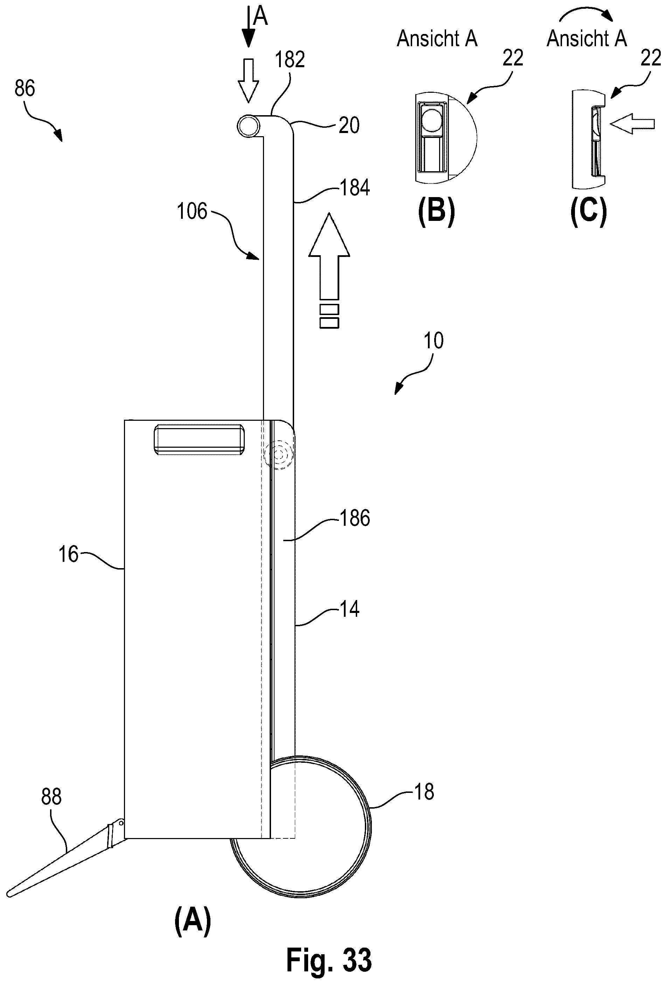

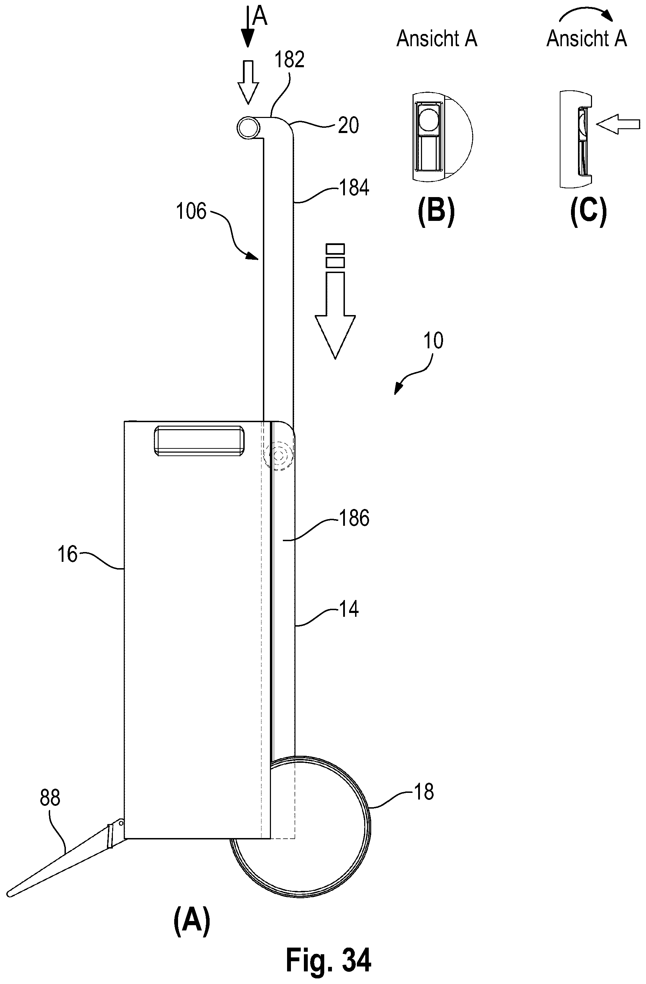

In den Figuren 33 und 34 ist ein Mechanismus dargestellt, mittels dem der Griff 20 ausgezogen und eingeschoben werden kann. Insbesondere ist der Griff 20 mittels dieses Mechanismus zwischen der eingeschobenen Stellung 104 und der ausgezogenen Stellung 106 bewegbar.

Der Griff 20 weist eine Griffstange 182 und an den Enden der Griffstange 182 je eine Griffverlängerung 184 auf. Die Griffstange 182 ist dazu vorgesehen, dass ein Benutzer des Transportwagens den Griff 20 an der Griffstange 182 greifen kann, um den Transportwagen zu Bewegen. Die Griffstange 182 erstreckt sich in der x-Richtung und jede Griffverlängerung 184 erstreckt sich in der y-Richtung. Die Griffverlängerungen sind somit parallel zueinander angeordnet.

Die Basisbaugruppe 14 weist einen Einschubkasten 186 auf, in dem die beiden Griffverlängerungen 184 anordenbar sind. Dazu erstreckt sich der Einschubkasten 186 ebenfalls in der y-Richtung. Insbesondere kann die Griffverlängerung 184 in den Einschubkasten 186 eingeschoben werden bzw. aus dem Einschubkasten 186 ausgezogen werden.

In Fig. 33 ist dargestellt, dass zum Ausziehen des Griffs 20 das Betätigungselement 22 betätigt wird. Dadurch wird eine Arretierung des Griffs 20 in dem Einschubkasten 186 gelöst, so dass der Griff von der eingezogenen Stellung 104 in die ausgezogene Stellung 106 entlang der y-Richtung bewegbar ist.

In Fig. 34 ist dargestellt, dass zum Einschieben des Griffs 20 das Betätigungselement 22 ebenfallsbetätigt wird. Dadurch wird die Arretierung des Griffs 20 in dem Einschubkasten 186 gelöst, so dass der Griff von der ausgezogenen Stellung 106 in die eingezogene Stellung 104 entlang der y-Richtung bewegbar ist.

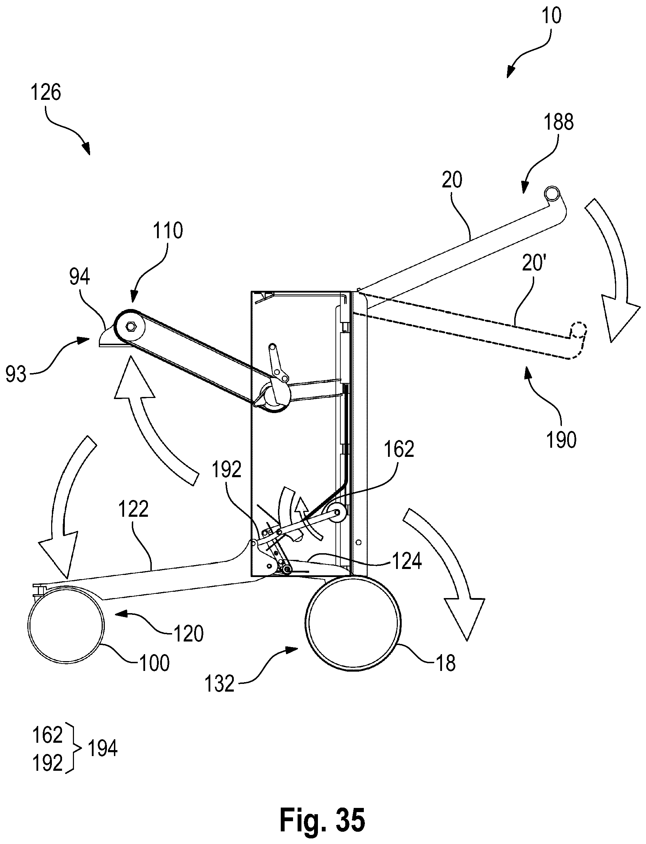

In Fig. 35 dargestellt, wie der Transportwagen 10 von dem ersten Betriebsmodus 86 in den zweiten Betriebsmodus 126 transformiert bzw. überführt wird. Die Transformation wird durch eine Schwenkbewegung des Griffs 20 bewirkt. Wie zuvor beschrieben, ist der Griff in der ausgezogenen Stellung 106 relativ zu der Basisbaugruppe 14 um eine Schwenkachse 194 schwenkbar, die parallel zu der x-Richtung verläuft. Der Griff 20 wird dabei beispielsweise von einer ersten Schwenkposition 188 in eine zweite Schwenkposition 190 bewegt. Vorzugsweise wird nur eine Bewegung in einer Drehrichtung um die Schwenkachse 194 zur Transformation verwendet. In anderen Worten wird eine Schwenkbewegung von der ersten Schwenkposition 188 in die zweite Schwenkposition 190 zum transformieren verwendet, während eine Bewegung des Griffs in die entgegengesetzte Richtung nicht verwendet wird.

In anderen Worten ist eine Bewegung in einer Drehrichtung um die Schwenkachse 194 von der ersten Schwenkposition 188 in die zweite Schwenkposition 190 mit einer Bewegung jedes Stützrads 100 und der ersten Aufnahme 93 gekoppelt, um das Stützrad 100 von der eingeklappten Stellung 118 in die ausgeklappte Stellung 128 zu überführen und die erste Aufnahme 93 von der Transportposition 108 in die Ladeposition 110 zu überführen. Zudem ist diese Schwenkbewegung auch teilweise mit der Schwenkbewegung der Räder 18 und der Stütze 88 gekoppelt, um die Räder 18 von der ersten ausgeklappten Stellung 78 in die zweite ausgeklappte Stellung 132 zu überführen und die Stützen 88 von der ausgeklappten Stellung in die zurückgeklappte Stellung 134 zu überführen. Des Weiteren ist eine Bewegung in einer entgegengesetzten Drehrichtung um die Schwenkachse 194 von der zweiten Schwenkposition 190 in die erste Schwenkposition 188 nicht mit den Bewegungen der Stützrads 100, jedes Rads 18, jeder Stütze 88 und der ersten Aufnahme 93 gekoppelt.

Beim in Fig. 35 dargestellten Überführen aus dem ersten Betriebsmodus 86 in den zweiten Betriebsmodus 126 wird somit der Griff 20 ein oder mehrere Male von der ersten Schwenkposition 188 in die zweite Schwenkposition 190 bzw. zwischen der ersten und zweiten Schwenkposition 188, 190 bewegt. Dabei werden die Stützräder 100 von der eingeklappten Stellung 118 in die ausgeklappte Stellung 120 geschwenkt, die Aufnahme 94von der Transportposition 108 in die Ladeposition 110 geschwenkt, die Räder 18 von der ersten ausgeklappten Stellung 78 in die zweite ausgeklappte Stellung 132 geschwenkt und die Stützen 88 von der ausgeklappten Stellung 92 in die zurückgeklappte Stellung geschwenkt. Zudem wird dabei der zweite Kniehebel 165 gestreckt.

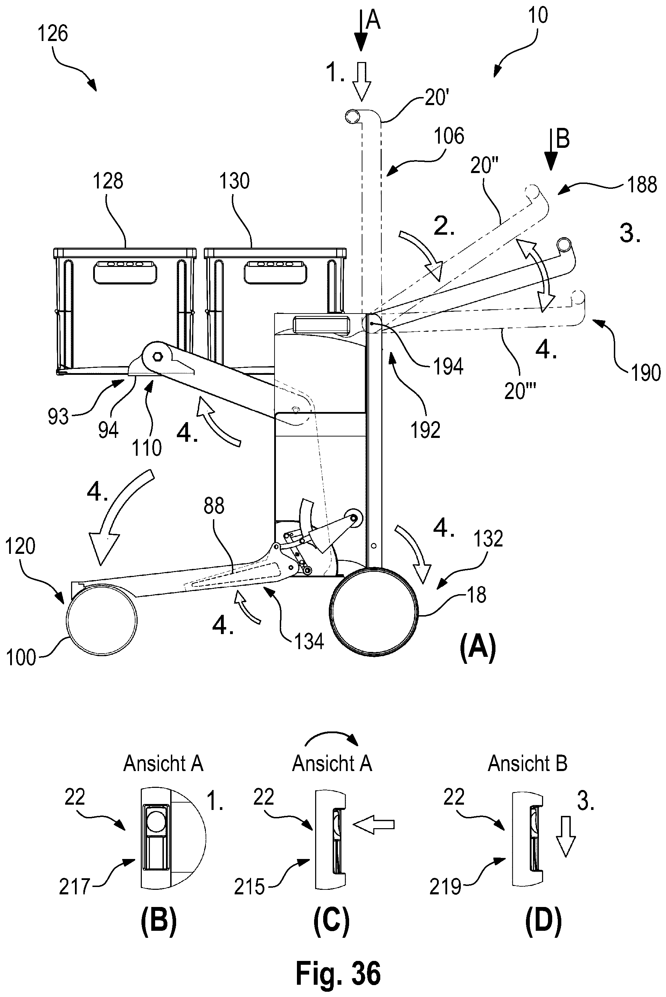

In Fig. 36 ist die Transformation, insbesondere das Überführen, aus dem ersten Betriebsmodus 86 in den zweiten Betriebsmodus 126 genauer beschrieben. Das erste Betätigungselement 22 ist dabei in einer Arretierstellung 217, in eine Freidrehstellung 215, und eine Kopplungsstellung 219 anordenbar. In der Arretierstellung 217 ist das erste Betätigungselement 22 nicht betätigt. In der Freidrehstellung 215 wird das erste Betätigungselement 22 dadurch überführt, dass das Betätigungselement 22 eingedrückt wird. In die Kopplungsstellung 219 wird das erste Betätigungselement 22 dadurch überführt, dass das Betätigungselement 22 seitlich verschoben wird.

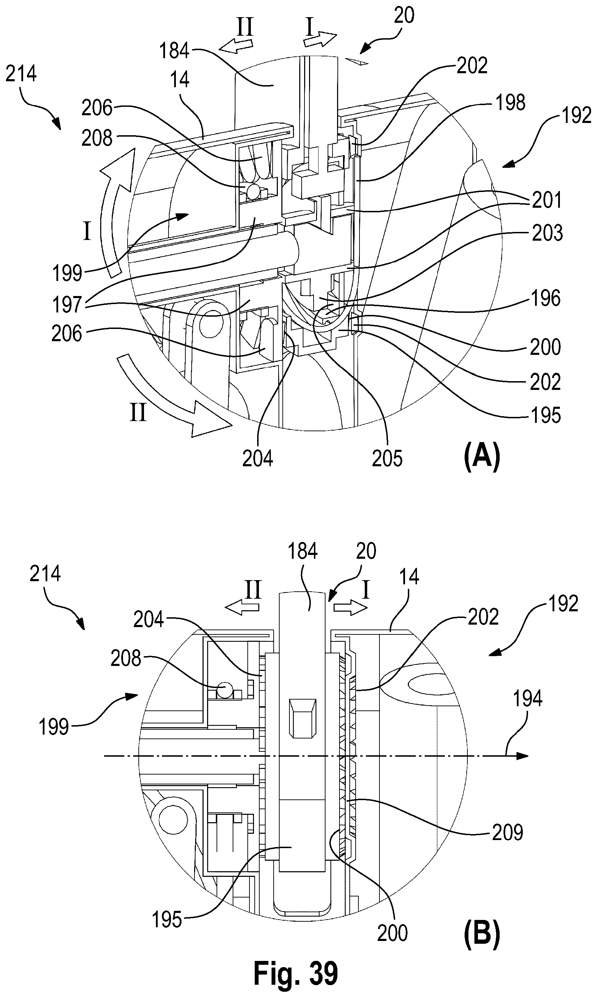

Wie zuvor beschrieben, ist der Griff 20 über einen Kopplungsmechanismus 192 an der Basisbaugruppe 14 um die Schwenkachse 194, die parallel zu der x-Richtung verläuft, schwenkbar angeordnet. Der Kopplungsmechanismus 192 ist mit dem Betätigungselement 22 gekoppelt ist. Der Kopplungsmechanismus 192 ist, wie nachfolgend mit Bezug auf die Fig. 39 bis 41 erläutert wird, in einen Arretierzustand 216, in dem der Griff 20 nicht gegenüber der Basisbaugruppe 14 verschwenkt werden kann, einen Kopplungszustand 218, in dem der Griff 20 gegenüber der Basisbaugruppe 14 verschwenkt werden kann und eine Schwenkbewegung das Griffs 20 übertragen werden kann, und einem Freidrehzustand 214, in dem der Griff 20 gegenüber der Basisbaugruppe 14 verschwenkt werden kann und eine Schwenkbewegung das Griffs 20 nicht übertragen werden kann. Der Kopplungsmechanismus 192 nimmt den Arretierzustand 216 ein, wenn das erste Betätigungselement 22 in die Arretierstellung 217 gebracht wird. Der Kopplungsmechanismus 192 nimmt den Kopplungszustand 218 ein, wenn das erste Betätigungselement 22 in die Kopplungsstellung 219 gebracht wird. Der Kopplungsmechanismus 192 nimmt den Freidrehzustand 214 ein, wenn das erste Betätigungselement 22 in die Freidrehstellung 215 gebracht wird. Vorzugsweise ist der Kopplungsmechanismus 192 in der Arretierstellung 216 vorgespannt.

Beim Überführen des Transportwagens 10 aus dem ersten Betriebsmodus 86 in den zweiten Betriebsmodus 126 wird zuerst, wie in Ansicht (B) und (C) der Fig. 36 dargestellt ist, das erste Betätigungselement 22 aus der Arretierstellung 217 in die Freidrehstellung 215 überführt, damit der Griff 20 um die Schwenkachse 194, beispielsweise in die erste Schwenkposition 188, geschwenkt werden kann. Dann wird, wie in Ansicht (D) der Fig. 36 dargestellt ist, das erste Betätigungselement 22 in die Kopplungsstellung 219 überführt, damit die Schwenkbewegung übertragen werden kann und zum Transformieren des Transportwagens 10 verwendet werden kann. Daraufhin wird der Griff 20 ein oder mehrere Male von der ersten Schwenkposition 188 in die zweite Schwenkposition 190 bzw. zwischen der ersten und zweiten Schwenkposition 188, 190 bewegt um den Transportwagen 10 von dem ersten Betriebsmodus 86 in den zweiten Betriebsmodus 126 zu überführen. Zuletzt wird das Betätigungselement 22 in die Arretierstellung 217 überführt, damit der Griff 20 nicht mehr verschwenkt werden kann.

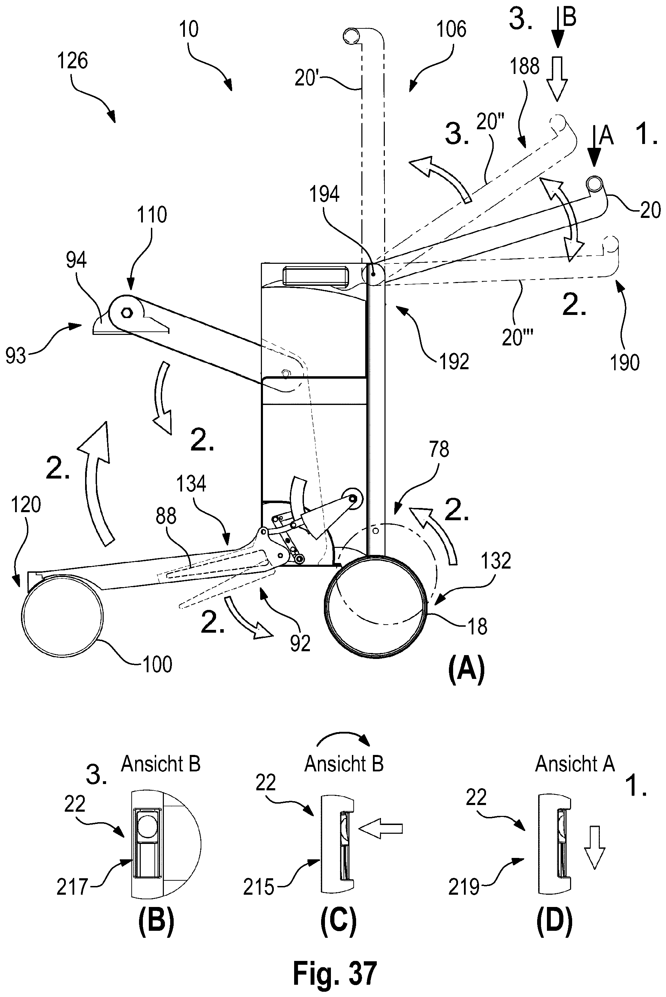

In Fig. 37 ist dargestellt, wie der Transportwagen von dem zweiten Betriebsmodus 126 in den ersten Betriebsmodus 86 überführt wird. Dabei wird zuerst, wie in Ansicht (D) der Figur 37 beschrieben, das Betätigungselement 22 von der Arretierstellung 217 in die Kopplungsstellung 219 überführt bzw. gebracht, wodurch eine Schwenkbewegung des Griffs 20 über den Kopplungsmechanismus 192 übertragen werden kann. Dann wird der Griff 20 ein oder mehrere Male von der ersten Schwenkposition 188 in die zweite Schwenkposition 190 bzw. zwischen der ersten und zweiten Schwenkposition 188, 190 bewegt. Dabei werden die Stützräder 100 von der ausgeklappten Stellung 120 in die eingeklappte Stellung 118 geschwenkt, die Aufnahme 94 von der Ladeposition 110 in die Transportposition 108 geschwenkt, die Räder 18 von der zweiten ausgeklappten Stellung 132 in die erste ausgeklappte Stellung 78 geschwenkt und die Stützen 88 von der zurückgeklappten Stellung 134 in die ausgeklappte Stellung 92 geschwenkt. Zudem wird dabei der zweite Kniehebel 165 geknickt. Danach wird, wie in den Ansichten (B) und (C) dargestellt ist, das Betätigungselement 22 in die Freidrehstellung 215 überführt, damit der Griff 20 in die ausgezogene Stellung 106 verschwenkt werden kann. Zuletzt wird das Betätigungselement 22 in die Arretierstellung 217 überführt, damit der Griff 20 nicht mehr verschwenkt werden kann.

Der Griff 20 kann des Weiteren eine Sperrvorrichtung aufweisen, die das erste Betätigungselement 22 in der Kopplungsstellung 219 bzw. den Kopplungsmechanismus in dem Kopplungszustand hält, solange bis beim Überführen des Transportwagens 10 der erste Betriebsmodus 86 bzw. der zweite Betriebsmodus 126 erreicht ist.

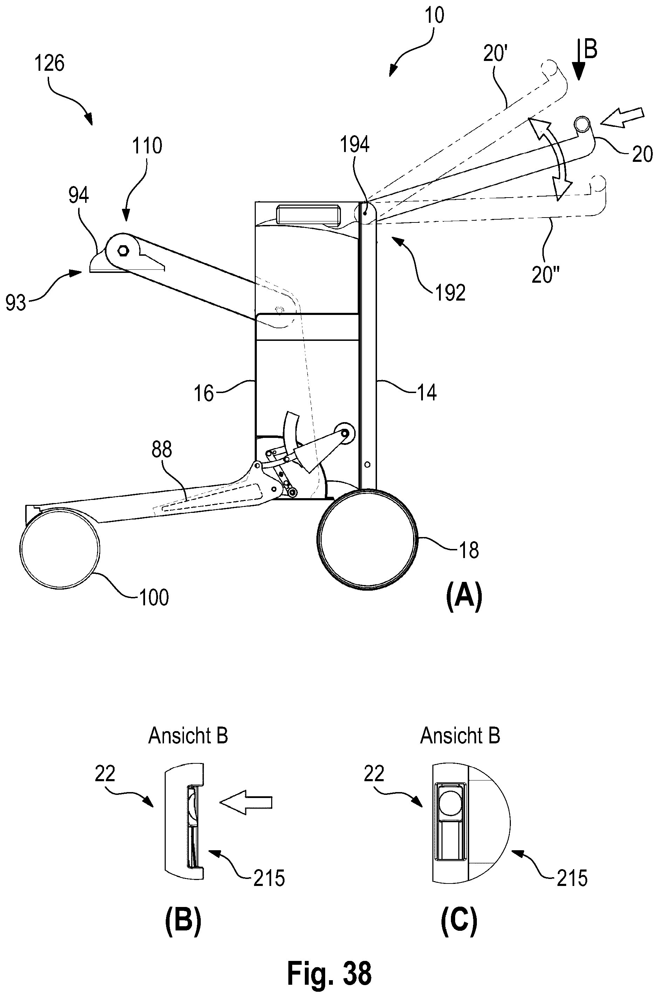

In Fig. 38 ist nochmals dargestellt, wie die Griffhöhe des Griffs 20 eingestellt werden kann, wenn der Transportwagen 10 in dem zweiten Betriebsmodus angeordnet ist. Dazu wird zuerst, wie in den Ansichten (B) und (C) der Fig. 38 dargestellt ist, das erste Betätigungselement 22 aus der Arretierstellung 217 in die Freidrehstellung 219 überführt, damit der Griff 20 gegenüber der Basisbaugruppe 14 um die Schwenkachse 194 geschwenkt werden kann, um die gewünschte Griffhöhe einzustellen. Da die Schwenkachse 194 parallel zur x-Richtung verläuft, ist die Schwenkachse 194 eine horizontale Achse. Durch eine Schwenkbewegung des Griffs 20 um die Schwenkachse 194 kann somit die Griffhöhe eingestellt werden. Zuletzt wird das Betätigungselement 22 in die Arretierstellung 217 überführt, damit der Griff 20 nicht mehr verschwenkt werden kann.

In den Figuren 39 bis 41 ist der Kopplungsmechanismus 192 des Transportwagens 10 detailliert dargestellt. Die Basisbaugruppe 14 weist auf jeder Seite am oberen Ende jedes Einschubkastens 186 einen derartigen Kopplungsmechanismus auf.

Das Betätigungselement 22 ist mit dem Kopplungsmechanismus 192 über einen ersten Seilzug 198 und einen zweiten Seilzug 212 gekoppelt. Der erste Seilzug 198 wird gespannt, wenn das Betätigungselement 22 in die Freidrehstellung 215 überführt ist. Der zweite Seilzug 212 wird gespannt, wenn das Betätigungselement 22 in die Kopplungsstellung 219 überführt ist.

Der Kopplungsmechanismus 192 weist einen Grundkörper 195 auf. Der Grundkörper 195 ist mit einem unteren Ende der Griffverlängerung 184 des Griffs 20 fest bzw. starr verbunden. Der Grundkörper 195 ist in der Basisbaugruppe 14 um die Schwenkachse 194 drehbar gelagert. Der Grundkörper 195 weist auf einer ersten Seite erste Vorsprünge 200 auf und auf einer zweiten Seite zweite Vorsprünge 204 auf. die erste Seite und die zweite Seite sind in der x-Richtung gegenüberliegend angeordnet. Die ersten Vorsprünge 200 sowie die zweiten Vorsprünge 204 sind jeweils symmetrisch um die Schwenkachse 194 verteilt.

Die Basisbaugruppe 15 weist ein Arretierelement 209 auf. Das Arretierelement 209 ist in einer axialen Richtung der Schwenkachse 194 auf einer Seite des Grundkörpers 195 angeordnet. Das Arretierelement 209 ist starr mit der Basisbaugruppe vernbunden. Das Arretierelement 209 weist erste Ausnehmungen 202 auf, die komplementär zu den ersten Vorsprüngen 200 ausgebildet sind. Die Vorsprünge 200 sind somit auf der dem Arretierelement 209 zugewandten Seite des Grundkörpers 195 angeordnet. Die ersten Ausnehmungen 202 sind ebenfalls symmetrisch um die Schwenkachse 194 verteilt. Insbesondere sind alle ersten Vorsprünge 200 gleich geformt, wobei jede erste Ausnehmung 202 ein zu den ersten Vorsprüngen 200 komplementäres Profil aufweist.

Der Kopplungsmechanismus 192 ist mit einem Aktuierungselement 197 einer Aktuierungsvorrichtung 199 koppelbar, das ebenfalls in der Basisbaugruppe 14 um die Schwenkachse 194 drehbar gelagert ist. Das Aktuierungselement 197 ist in der axialen Richtung der Schwenkachse 194 auf einer dem Arretierelement 209 gegenüberliegenden Seite des Grundkörpers 195 angeordnet. In anderen Worten ist der Grundkörper 195 in der axialen Richtung der Schwenkachse 194 zwischen dem Aktuierungselement 197 und dem Arretierelement 209 angeordnet.

Das Aktuierungselement 197 weist zweite Ausnehmungen 206 auf, die komplementär zu den zweiten Vorsprüngen 204 ausgebildet sind. Die zweiten Ausnehmungen 206 sind ebenfalls symmetrisch um die Schwenkachse 194 verteilt. Insbesondere sind alle zweiten Vorsprünge 204 gleich geformt, wobei jede zweite Ausnehmung 206 ein zu den zweiten Vorsprüngen 204 komplementäres Profil aufweist.

Der Kopplungsmechanismus 192 weist des Weiteren eine erste Profilscheibe 196 auf. Die erste Profilscheibe 196 ist koaxial zu der Schwenkachse 194 angeordnet. Der erste Seilzug 198 ist mit der ersten Profilscheibe 196 gekoppelt, so dass eine Zugbewegung des Seilzugs 198 auf eine Drehbewegung der Profilscheibe 196 um die Schwenkachse 194 übertragen wird.

Der Kopplungsmechanismus 192 weist des Weiteren eine zweite Profilscheibe 210 auf. Die zweite Profilscheibe 210 ist koaxial zu der Schwenkachse 194 angeordnet. Der zweite Seilzug 212 ist mit der zweiten Profilscheibe 210 gekoppelt, so dass eine Zugbewegung des Seilzugs 212 auf eine Drehbewegung der Profilscheibe 210 um die Schwenkachse 194 übertragen wird.

Die erste und die zweite Profilscheibe 196, 210 können jeweils über eine jeweilige Federeinrichtung entgegen der Zugrichtung der Seilzüge 198, 212 vorgespannt sein.

Die erste Profilscheibe 196 und die zweite Profilscheibe 210 sind in dem Grundkörper angeordnet. In anderen Worten umgibt der Grundkörper 195 die Profilscheiben 196, 210. Die Profilscheiben 196, 210 sind relativ zu dem Grundkörper 195 um die Schwenkachse 194 drehbar. Die erste Profilscheibe 196, die zweite Profilscheibe 210 und der Grundkörper 195 sind parallel zu der Schwenkachse, vorzugsweise formschlüssig, miteinander gekoppelt, so dass die erste Profilscheibe 196, die zweite Profilscheibe 210 und der Grundkörper 195 gemeinsam parallel zu der Schwenkachse194 bewegbar sind.

Die erste und die zweite Profilscheibe 196, 210 sind in der Richtung der Schwenkachse 194 voneinander beabstandet, insbesondere nebeneinander angeordnet. Insbesondere ist die erste Profilscheibe 196 näher an ersten Ausnehmungen 202 angeordnet als die zweite Profilscheibe 210 und die zweite Profilscheibe 210 dementsprechend näher an den zweiten Ausnehmungen 206 angeordnet als die erste Profilscheibe 196.

Der Kopplungsmechanismus 192 weist des Weiteren eine Hülse 203 auf, die koaxial zu der Schwenkachse 194 angeordnet ist. Die Hülse 203 ist in dem Grundkörper 195 angeordnet. In anderen Worten umgibt der Grundkörper 195 die Hülse 203. Dabei sind die beiden Profilscheiben 196, 210 zwischen dem Grundkörper 195 und der Hülse 203 angeordnet. Die Hülse ist in der axialen Richtung der Schwenkachse 194 zwischen dem Aktuierungselement 197 und dem Arretierelement 209 angeordnet und liegt in der axialen Richtung der Schwenkachse 194 sowohl an dem Aktuierungselement 197 als auch an dem Arretierelement 209 an, so dass die Hülse 203 in der axialen Richtung der Schwenkachse 194 durch das Aktuierungselement 197 und das Arretierelement 209 abgestützt bzw. gehalten ist.

Die Hülse 203 weist einen Vorsprung 205 auf. Der Vorsprung 205 ist auf der Seite der Hülse 203 angeordnet, die der Griffverlängerung 184 abgewandt ist.

Ein der Hülse 203 zugewandtes Innenprofil der ersten Profilscheibe 196 weist einen ersten Gewindeabschnitt 205 auf. Der Gewindeabschnitt 205 erstreckt sich in einer Umlaufrichtung um die Schwenkachse 194 teilweise entlang des Innenprofils der ersten Profilscheibe 196. Der Gewindeabschnitt 205 weist eine Steigung in der axialen Richtung der Schwenkachse 194 auf. In anderen Worten ist der Gewindeabschnitt 205 als umlaufende Rampe ausgebildet, die eine Steigung in der axialen Richtung der Schwenkachse 194 aufweist. Der Gewindeabschnitt 205 liegt in der axialen Richtung der Schwenkachse 194 auf einer Seite des Vorsprungs 203 an. Bei einer Drehung der ersten Profilscheibe 196 um die Schwenkachse 194 relativ zu der Hülse 203 wird der Gewindeabschnitt 205 entlang des Vorsprungs 203 geführt, so dass die erste Profilscheibe 196 in der axialen Richtung der Schwenkachse 194 bewegt wird.

Ein der Hülse 203 zugewandtes Innenprofil der zweiten Profilscheibe 210 weist einen zweiten Gewindeabschnitt 207 auf. Der Gewindeabschnitt 207 erstreckt sich in einer Umlaufrichtung um die Schwenkachse 194 teilweise entlang des Innenprofils der zweiten Profilscheibe 210. Der Gewindeabschnitt 207 weist eine Steigung in der axialen Richtung der Schwenkachse 194 auf. In anderen Worten ist der Gewindeabschnitt 207 als umlaufende Rampe ausgebildet, die eine Steigung in der axialen Richtung der Schwenkachse 194 aufweist. Der zweite Gewindeabschnitt 207 liegt in der axialen Richtung der Schwenkachse 194 auf einer dem ersten Gewindeabschnitt 205 gegenüberliegenden Seite des Vorsprungs 203 an. Bei einer Drehung der zweiten Profilscheibe 210 um die Schwenkachse 194 relativ zu der Hülse 203 wird der Gewindeabschnitt 205 entlang des Vorsprungs 203 geführt, so dass die zweite Profilscheibe 210 in der axialen Richtung der Schwenkachse 194 bewegt wird.

Die Steigungen der Gewindeabschnitte 205, 207 verlaufen in derselben Richtung, insbesondere mit demselben Vorzeichen. Dadurch wird erreicht, dass durch eine Drehung einer der Profilscheiben 196, 210 relativ zu der Hülse 203 die entsprechende Profilscheibe 196, 210 in der axialen Richtung der Schwenkachse 194 verschoben wird. Aufgrund der axialen Kopplung der Profilscheiben 196, 210 mit dem Grundkörper 195 wird der Grundkörper 195 dadurch ebenfalls in der axialen Richtung der Schwenkachse 194 verschoben.

Die Steigung jedes Gewindeabschnitts 205, 207 sind so gewählt, dass bei einer Zugbewegung des entsprechenden Seilzugs 198, 212 der Grundkörper in der axialen Richtung der Schwenkachse 194 von dem Arretierelement 209 in Richtung des Aktuierungselements 197 verschoben wird.

Die Steigung des Gewindeabschnitts 207 ist dabei größer als die Steigung des Gewindeabschnitts 205. Dadurch wird durch eine Drehung der zweiten Profilscheibe 210 um die Schwenkachse 194 der Grundkörper 195 weiter in der axialen Richtung der Schwenkachse 194 in Richtung des Aktuierungselements 197 verschoben als bei einer Drehung der ersten Profilscheibe 196 um die Schwenkachse 194.

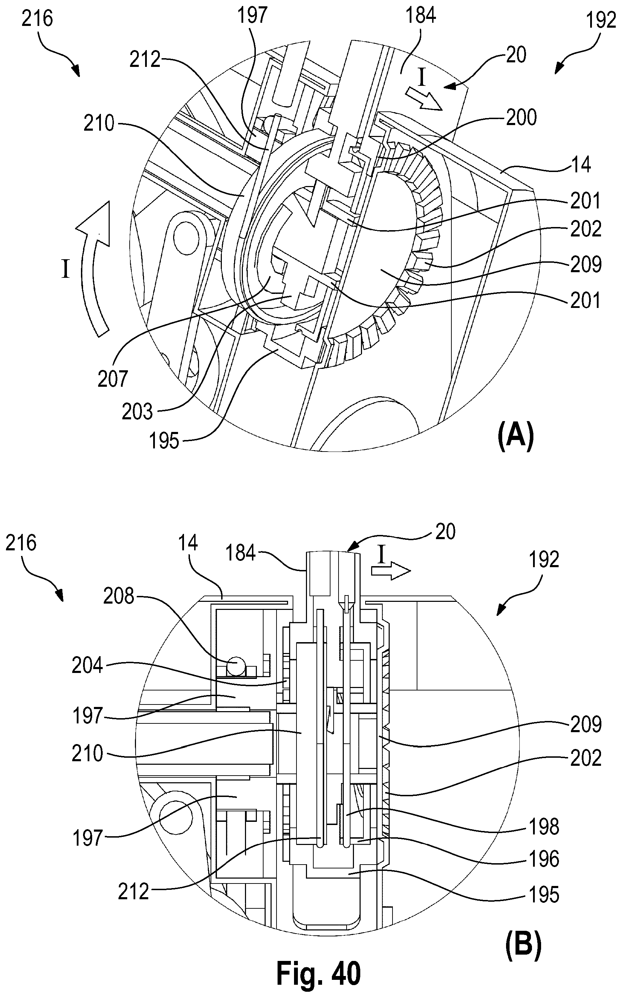

Der Grundkörper 195 ist über eine Federeinrichtung in dem Arretierzustand 216 vorgespannt. Der Arretierzustand 216 ist in Fig. 40 dargestellt. In dem Arretierzustand 216 sind die ersten Vorsprünge 200 des Grundkörpers 195 in Eingriff mit den ersten Ausnehmungen 202 des Arretierelements 209 der Basisbaugruppe 14, wobei die zweiten Vorsprünge 204 des Grundkörpers 195 außer Eingriff mit den zweiten Ausnehmungen 206 des Aktuierungselements 197 sind. Der Grundkörper 195 und insbesondere auch der Griff 20 sind dadurch bezüglich der Schwenkachse 194 drehfest miteinander gekoppelt, so dass der Griff 20 nicht um die Schwenkachse 194 relativ zu der Basisbaugruppe 14 geschwenkt werden kann.

Um den Grundkörper 195 aus dem Arretierzustand 216 in den Freidrehzustand 214 zu überführen, wird das erste Betätigungselement 22 aus der Arretierstellung 217 in die Freidrehstellung 215 überführt. Dabei wird an dem ersten Seilzug 198 gezogen, wodurch die Profilscheibe 196 gedreht wird. Dabei werden die Profilscheibe 196 und der Grundkörper 195 von dem Arretierelement 209 in Richtung des Aktuierungselements 197 geschoben, so dass sowohl die ersten Vorsprünge 200 gegenüber den ersten Ausnehmungen 202 als auch die zweiten Vorsprünge gegenüber den zweiten Ausnehmungen 206 außer Eingriff sind.

In Fig. 39 ist der Grundkörper 195 in dem Freidrehzustand 214 angeordnet. In dem Freidrehzustand 214 sind die ersten Vorsprünge 200 des Grundkörpers 195 außer Eingriff mit den ersten Ausnehmungen 202 des Arretierelements 209 der Basisbaugruppe 14 und die zweiten Vorsprünge 204 des Grundkörpers 195 sind ebenfalls außer Eingriff mit den zweiten Ausnehmungen 206 des Aktuierungselements 197. Der Grundkörper 195 und insbesondere auch der Griff 20 sind dadurch bezüglich der Schwenkachse 194 relativ zu der Basisbaugruppe drehbar, so dass der Griff 20 nicht um die Schwenkachse 194 relativ zu der Basisbaugruppe 14 geschwenkt werden kann.

Um den Grundkörper 195 aus dem Arretierzustand 216 bzw. aus den Freidrehzustand 214 in den Kopplungszustand 218 zu überführen, wird das erste Betätigungselement 22 aus der Arretierstellung 217 bzw. aus der Freidrehstellung 215 in die Kopplungsstellung 219 überführt. Dabei wird an dem zweiten Seilzug 212 gezogen, wodurch die Profilscheibe 210 gedreht wird. Dabei werden die Profilscheibe 210 und der Grundkörper 195 von dem Arretierelement 209 in Richtung des Aktuierungselements 197 geschoben, so dass sowohl die ersten Vorsprünge 200 gegenüber den ersten Ausnehmungen 202 außer Eingriff sind und die zweiten Vorsprünge gegenüber den zweiten Ausnehmungen 206 in Eingriff gebracht werden.

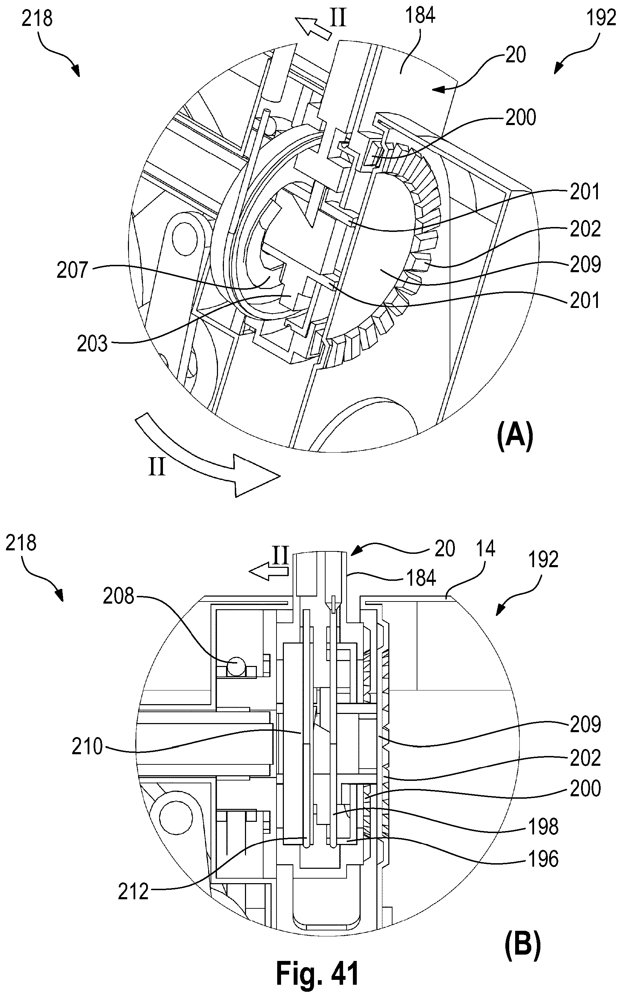

In Fig. 41 ist der Grundkörper 195 in dem Kopplungszustand 218 angeordnet. In dem Kopplungszustand 218 sind die ersten Vorsprünge 200 des Grundkörpers 195 außer Eingriff mit den ersten Ausnehmungen 202 des Arretierelements 209 der Basisbaugruppe 14. Stattdessen sind die zweiten Vorsprünge 204 des Grundkörpers 195 in Eingriff mit den zweiten Ausnehmungen 206 des Aktuierungselements 197. Der Grundkörper 195 und insbesondere auch der Griff 20 sind dadurch bezüglich der Schwenkachse 194 relativ zu der Basisbaugruppe drehbar, so dass der Griff 20 nicht um die Schwenkachse 194 relativ zu der Basisbaugruppe 14 geschwenkt werden kann. Zudem sind der Grundkörper 195 und der Aktuierungselements 197 bezüglich der Schwenkachse 194 drehfest miteinander gekoppelt, so dass eine Schwenkbewegung des Griffs 20 um die Schwenkachse 194 auf den Aktuierungselements 197 übertragen wird.

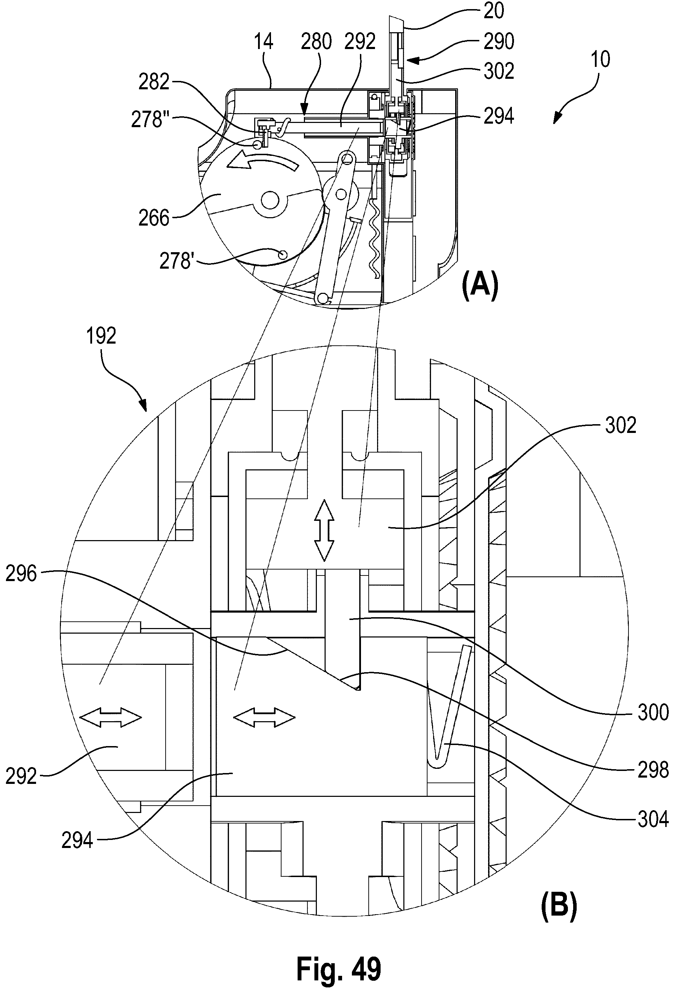

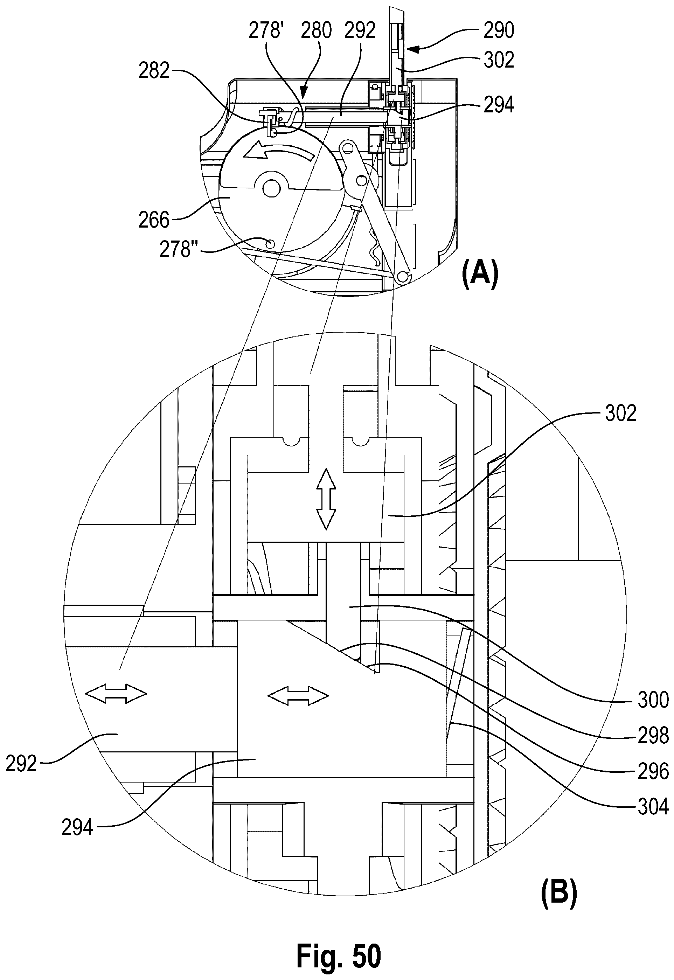

Die im Griff 20 angeordnete Sperrvorrichtung kann dazu ausgebildet sein, den Seilzug 212 so zu klemmen, dass der Kopplungsmechanismus 192 in dem Kopplungszustand 219 gehalten wird, solange bis beim Überführen des Transportwagens 10 der erste Betriebsmodus 86 bzw. der zweite Betriebsmodus 126 erreicht ist. Die Sperrvorrichtung wird dabei aktiviert, wenn das erste Betätigungselement 22 in die Kopplungsstellung 219 überführt wird. Eine derartige Sperrvorrichtung 290 und eine entsprechende Entsperrvorrichtung 280 zum Entsperren der Sperrvorrichtung 290 werden mit Bezug auf die Fig. 49 und 50 genauer beschrieben werden.

Das Aktuierungselement 197 ist mit einem Ende eines Seilzugs 208 der Aktuierungsvorrichtung 199 gekoppelt, so dass der Seilzug 208 durch eine Drehbewegung des Aktuierungselements 197 in einer Drehrichtung um die Drehachse 194 gezogen bzw. gespannt wird. Der Seilzug 208 wird dabei in einer ersten Bewegungsrichtung gezogen. Das andere Ende des Seilzugs 208 ist mit einer Federeinrichtung gekoppelt, die gespannt wird, wenn der Seilzug 208 in der ersten Bewegungsrichtung gezogen wird. Wird das Aktuierungselement 197 in der entgegengesetzten Drehrichtung gedreht, so wird der Seilzug 208 entspannt und durch die Rückstellkraft der Federeinrichtung entgegen der ersten Bewegungsrichtung gezogen. Der Seilzug 208 wird somit je nach Drehrichtung des Aktuierungselements 197 entweder in oder entgegen der ersten Bewegungsrichtung bewegt.

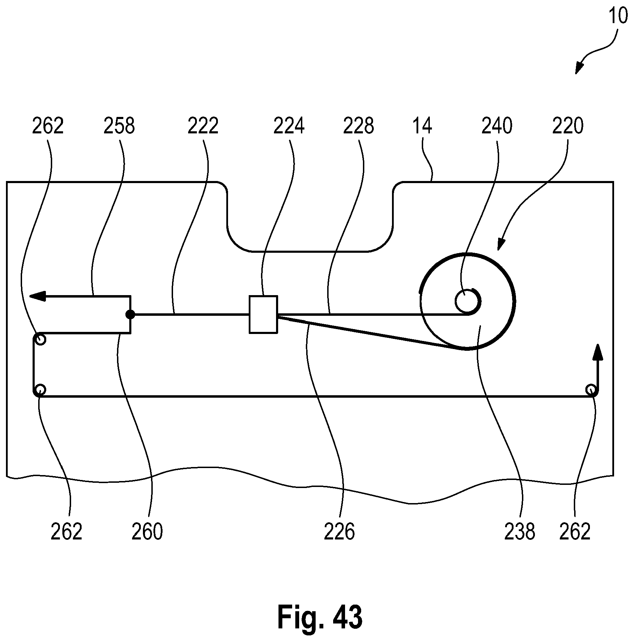

Wie zuvor beschrieben, ist auf jeder Seite der Basisbaugruppe 14 ein Kopplungsmechanismus 192 angeordnet, der mit der jeweiligen Griffverlängerung 184 des Griffs 20 koppelt. Jeder Kopplungsmechanismus 192 ist somit mit einem entsprechenden Seilzug 208 verbunden. Die beiden Kopplungsmechanismen 192 sind identisch ausgebildet, so dass die beiden Seilzüge 208 gleichermaßen bewegt werden, wenn der Griff 20 relativ zu der Basisbaugruppe verschwenkt wird. Die können in der Basisbaugruppe 14 über ein Kupplungselement zusammengeführt werden. Dies wird beispielsweise mit Bezug auf Fig. 43 nachfolgend genauer beschrieben.

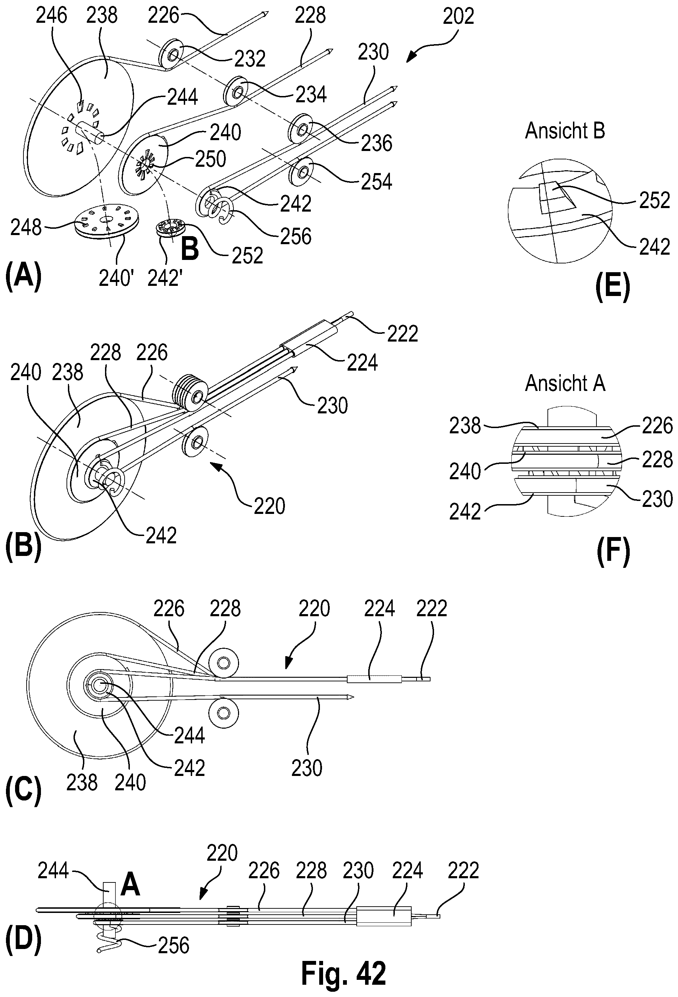

Die Seilzüge 208 sind gemeinsam mit einer Bewegungsumsetzungseinrichtung 264 gekoppelt, die nachfolgend mit Bezug auf die Figuren 42 bis 51 detailliert beschrieben wird.

Die Aktuierungsvorrichtung 199 weist des Weiteren die Bewegungsumsetzungseinrichtung 264 auf. Die Bewegungsumsetzungseinrichtung 264 ist dazu ausgebildet, eine Bewegung jedes Seilzugs 208 in der ersten Bewegungsrichtung in eine zweite Bewegung umzusetzen, mittels der die Transformation zwischen dem ersten Betriebsmodus 86 und dem zweiten Betriebsmodus 126 erfolgt. Die zweite Bewegung treibt somit die Schwenkbewegungen der Stützräder 100 und der ersten Aufnahme 93 an.

Des Weiteren kann die Aktuierungsvorrichtung 199 eine Übersetzungsvorrichtung 220 aufweisen. Ausführungsformen einer Übersetzungsvorrichtung 220 sind beispielsweise in den Figuren 42 und 43 dargestellt. Die Übersetzungsvorrichtung 220 ist mit den Seilzügen 208 gekoppelt und setzt eine Bewegung der Seilzüge je nach Übersetzungsverhältnis in verschieden starke Drehbewegungen um. Das Übersetzungsverhältnis bestimmt sich aus der Kraft, mit der der Seilzug 208 gezogen wird. In anderen Worten ist die Übersetzungsvorrichtung dazu ausgebildet, je nach Kraft, mit der der Seilzüge 208 gezogen werden, ein entsprechendes Übersetzungsverhältnis bereitzustellen. Die aufzuwendende Kraft hängt beispielsweise von dem Gewicht einer in der ersten Aufnahme 93 angeordneten Transportbox ab. Umso schwerer das Gewicht der Transportbox ist, umso größer ist die Last, die beim Überführen der ersten Aufnahme 93 zwischen der Transportposition 108 und der Ladeposition 110 auf den Seilzug 208 wirkt. Dementsprechend größer wird auch die Zugkraft, mit der der Seilzug 208 gezogen werden muss.

Des Weiteren kann die Aktuierungsvorrichtung 199 eine Freilaufeinrichtung aufweisen. Die Freilaufeinrichtung kann beispielsweise zwischen der Übersetzungsvorrichtung 220 und der Bewegungsumsetzungseinrichtung 264 angeordnet sein. Die Freilaufeinrichtung kann dazu ausgebildet sein, eine Drehbewegung der Übersetzungsvorrichtung 220 entsprechend der ersten Bewegungsrichtung auf die Bewegungsumsetzungseinrichtung 264 zu übertragen und eine Drehbewegung der Übersetzungsvorrichtung 220 entgegen der ersten Bewegungsrichtung nicht auf die Bewegungsumsetzungseinrichtung 264 zu übertragen.

Alternativ kann die Bewegungsumsetzungseinrichtung 264 auch direkt mit dem Seilzug 208 über eine Freilaufeinrichtung gekoppelt sein, wobei die Freilaufeinrichtung nur die Bewegung des Seilzugs 208 in der ersten Bewegungsrichtung auf die Bewegungsumsetzungseinrichtung 264 überträgt und die Bewegung des Seilzugs 208 entgegen der ersten Bewegungsrichtung nicht auf die Bewegungsumsetzungseinrichtung 264 überträgt.

Fig. 42 zeigt verschiedene Ansichten einer ersten Ausführungsform einer Übersetzungsvorrichtung 220. Hierbei zeigt Ansicht (A) eine Explosionsdarstellung der Übersetzungsvorrichtung 220, Ansicht (B) eine isometrische Darstellung der Übersetzungsvorrichtung 220, Ansicht (C) eine Seitenansicht der Übersetzungsvorrichtung 220, Ansicht (D) eine Draufsicht auf die Übersetzungsvorrichtung 220, Ansicht (E) eine Detailansicht einer Scheibe 242 der Übersetzungsvorrichtung 220 und Ansicht (F) eine Detailansicht der Ansicht (D), in der die Scheiben 238, 240, 242 der Übersetzungsvorrichtung 220 vergrößert dargestellt sind.

Die Übersetzungsvorrichtung 220 weist einen Seilzug 222 auf. Der Seilzug 222 ist an einer ersten Seite eines Kupplungselements 224 befestigt. Der Seilzug 222 ist vorzugsweise mit dem Seilzug 208 gekoppelt. Dazu kann der Seilzug 222 beispielsweise mit dem Seilzug 208 über ein weiteres Kupplungselement verbunden sein.

Die Übersetzungsvorrichtung 220 weist des Weiteren ein erstes Zugseil 226, ein zweites Zugseil 228 und ein drittes Zugseil 230 auf. Ein erstes Ende jedes Zugseils 226, 228, 230 ist jeweils auf einer zweiten Seite des Kupplungselements 224 befestigt.

Die Übersetzungsvorrichtung 220 weist des Weiteren eine erste Umlenkrolle 232, eine zweite Umlenkrolle 234 und eine dritte Umlenkrolle 236 auf. Die Umlenkrollen 232, 234, 236 sind identisch ausgebildet, haben eine gemeinsame Drehachse und sind in der Richtung der Drehachse nebeneinander angeordnet. Das erste Zugseil 226 wird um die erste Umlenkrolle 232 umgelenkt, das zweite Zugseil 228 um die zweite Umlenkrolle 234 umgelenkt und das dritte Zugseil 230 um die dritte Umlenkrolle 236 umgelenkt. Die drei Zugseile 226, 228, 230 verlaufen bis zu den Umlenkrollen 232, 234, 236 parallel zueinander.

Die Übersetzungsvorrichtung 220 weist des Weiteren eine erste Scheibe 238, eine zweite Scheibe 240 und eine dritte Scheibe 242 auf. Die erste Scheibe 238 hat einen größeren Durchmesser als die zweite Scheibe 240. Die zweite Scheibe 240 hat einen größeren Durchmesser als die dritte Scheibe 242. Die drei Scheiben 238, 240, 242 haben eine gemeinsame Drehachse und sind in der Richtung der Drehachse nebeneinander angeordnet. Die drei Scheiben sind auf einer Achse 244 drehbar gelagert.

Das erste Zugseil 226 ist mit der ersten Scheibe 238 gekoppelt. Das zweite Zugseil 228 ist mit der zweiten Scheibe 240 gekoppelt. Das dritte Zugseil 230 ist mit der dritten Scheibe 242 gekoppelt. Die drei Zugseile 226, 228, 230 sind verlaufen dazu entlang des Umfangs der jeweiligen Scheibe 238, 240, 242. Ein zweites Ende des ersten Zugseils 226 ist an der ersten Scheibe 238 befestigt. Ein zweites Ende des zweiten Zugseils 228 ist an der zweiten Scheibe 240 befestigt. Die drei Zugseile 226, 228, 230 sind mit der jeweiligen Scheibe 238, 240, 242 derart gekoppelt, dass eine Zugbewegung eines Zugsseils auf eine Drehbewegung der entsprechenden Scheibe übertragen wird. Da die Zugseile 226, 228, 230 aufgrund der Kupplung mittels des Kupplungselements 224 gemeinsam gezogen und die Scheiben 238, 240, 242 aber jeweils unterschiedliche Durchmesser aufweisen, werden die Scheiben 238, 240, 242 bei einer gemeinsamen Zugbewegung der Zugseile 226, 228, 230 um unterschiedliche Drehwinkel gedreht. Insbesondere ist der Drehwinkel der ersten Scheibe 238 kleiner als der Drehwinkel der zweiten Scheibe 240 und der Drehwinkel der zweiten Scheibe 240 kleiner als der Drehwinkel der dritten Scheibe 242. Die erste Scheibe 238 kann mit der Bewegungsumsetzungseinrichtung 264 über eine Freilaufeinrichtung gekoppelt sein.

Die erste Scheibe 238 weist auf der der zweiten Scheibe 240 zugewandten Seite Aussparungen 246 auf, die in der Umfangsrichtung verteilt angeordnet sind. Die zweite Scheibe 240 weist auf der der ersten Scheibe 238 zugewandten Seite Vorsprünge 248 auf, die zu den Aussparungen 246 komplementär angeordnet und geformt sind. Die Aussparungen 246 und die Vorsprünge 248 sind in Eingriff miteinander bringbar.

Die zweite Scheibe 240 weist auf der der dritten Scheibe 242 zugewandten Seite Aussparungen 250 auf, die in der Umfangsrichtung verteilt angeordnet sind. Die dritte Scheibe 242 weist auf der der zweiten Scheibe 240 zugewandten Seite Vorsprünge 252 auf, die zu den Aussparungen 250 komplementär angeordnet und geformt sind. Die Aussparungen 250 und die Vorsprünge 252 sind in Eingriff miteinander bringbar.

Die Übersetzungsvorrichtung 220 weist des Weiteren ein Federelement 256, beispielsweise eine Spiralfeder, auf, mittels dem die drei Scheiben in der Richtung der Achse 244 aneinandergedrückt werden, so dass die Vorsprünge 248 und 252 mit den entsprechenden Aussparungen 246 und 250 in Eingriff gebracht werden.

Die Übersetzungsvorrichtung 220 weist des Weiteren eine weitere Umlenkrolle 254 auf. Das dritte Zugseil 230 verläuft ausgehend von dem Kupplungselement 224 zuerst zu der dritten Umlenkrolle 236, dann zu der dritten Scheibe 242, von der dritten Scheibe 242 zu der Umlenkrolle 254 und von der Umlenkrolle 254 zu einer nicht dargestellten Federeinrichtung, wobei ein zweites Ende des dritten Zugseils an mit der Federeinrichtung verbunden ist. Eine von dem zweiten Ende zu dem ersten Ende gerichtete Zugbewegung des dritten Zugseils 230 spannt die Federeinrichtung.

Wie in Ansicht (E) der Figur 42 dargestellt, weisen die Vorsprünge 248 und 252 jeweils eine gerade Flanke und eine schräge Flanke auf. Die gerade Flanke und die schräge Flanke sind in der Umfangsrichtung auf gegenüberliegenden Seiten des jeweiligen Vorsprungs 248, 252 angeordnet, wobei die schrägen Flanken bei einer Zugrichtung der Zugseile 228, 230 von dem jeweiligen zweiten Ende in Richtung des ersten Endes stromaufwärts, insbesondere in der resultierenden Drehrichtung der jeweiligen Scheibe vor der geraden Flanke angeordnet sind.

Wie zuvor beschrieben, wird bei einer gemeinsamen Zugbewegung der Zugseile 226, 228, 230 aufgrund der unterschiedlichen Durchmesser der Scheiben 238, 240, 242 die dritte Scheibe 242 um einen größeren Winkel als die zweite Scheibe 240 gedreht und die zweite Scheibe 240 um einen größeren Winkel als die erste Scheibe 238. Aufgrund der Kopplung der Scheiben 238, 240, 242 über die entsprechenden Vorsprünge 248, 252 und Aussparungen 246, 250 werden die erste und die zweite Scheibe 238, 240 über die dritte Scheibe um den gleichen Winkel gedreht wie die dritte Scheibe 242, so dass das erste und das zweite Zugseile 226, 228 bei einer Drehbewegung entspannt werden, insbesondere so dass das erste und das zweite Zugseile 226, 228 durchhängen.

Sind alle Scheiben 238, 240, 242 miteinander gekoppelt, insbesondere über die Vorsprünge 248, 252 und Aussparungen 246, 250 in Eingriff miteinander, so wird eine Zugbewegung durch den Seilzug 222 über das dritte Zugseil 230 und die dritte Scheibe 242 auf eine Drehbewegung der ersten Scheibe 238 übertragen. Ein Drehwinkel der Drehbewegung der ersten Scheibe 238 und eine Zugstrecke der Zugbewegung des Seilzugs 222 bzw. des dritten Seilzugs 230 weisen dabei ein drittes Übersetzungsverhältnis auf. Das Übersetzungsverhältnis gibt dabei das Verhältnis des Drehwinkels zu der Zugstrecke an.

Durch die Ausbildung der Vorsprünge 252 mittels schräger Flanke wird erreicht, dass je nach Zugkraft, die über das dritte Zugseil 230 übertragen wird, die dritte Scheibe 242 gegenüber der der zweiten Scheibe 240 entgegen der Vorspannkraft des Federelements 256 außer Eingriff gebracht werden kann. Sobald die zweite und die dritte Scheibe 240, 242 außer Eingriff sind, ist die dritte Scheibe 242 frei drehbar und das zweite Zugseil 228 wird gespannt, so dass eine Zugbewegung durch den Seilzug 222 über das zweite Zugseil 228 und die zweite Scheibe 240 auf eine Drehbewegung der ersten Scheibe 238 übertragen wird. Ein Drehwinkel der Drehbewegung der ersten Scheibe 238 und eine Zugstrecke der Zugbewegung des Seilzugs 222 bzw. des zweiten Seilzugs 228 weisen dabei ein zweites Übersetzungsverhältnis auf, das kleiner ist als das dritte Übersetzungsverhältnis.

Durch die Ausbildung der Vorsprünge 248 mittels schräger Flanke wird erreicht, dass je nach Zugkraft, die über das zweite Zugseil 228 übertragen wird, wenn die dritte Scheibe 242 mit der zweiten Scheibe 240 außer Eingriff ist, die zweite Scheibe 240 gegenüber der der ersten Scheibe 238 entgegen der Vorspannkraft des Federelements 256 außer Eingriff gebracht werden kann. Sobald die erste und die zweite Scheibe außer Eingriff sind, ist die zweite Scheibe 240 ebenfalls frei drehbar und das erste Zugseil 226 wird entspannt, so dass eine Zugbewegung durch den Seilzug 222 über das erste Zugseil 226 auf eine Drehbewegung der ersten Scheibe 238 übertragen wird. Ein Drehwinkel der Drehbewegung der ersten Scheibe 238 und eine Zugstrecke der Zugbewegung des Seilzugs 222 bzw. des ersten Seilzugs 226 weisen dabei ein erstes Übersetzungsverhältnis auf, das kleiner ist als das zweite Übersetzungsverhältnis.

Auf diese Weise kann das Übersetzungsverhältnis der Übersetzungsvorrichtung 220 je nach aufgewendeter Zugkraft, die auf die Seilzüge wirkt, automatisch gesteuert werden.

Fig. 43 zeigt eine zweite Ausführungsform einer Übersetzungsvorrichtung 220' in einer schematischen Darstellung. Die Übersetzungsvorrichtung 220' ist in der Basisbaugruppe14, insbesondere in einem oberen Teil der Basisbaugruppe 14, angeordnet. Die Übersetzungsvorrichtung 220' weist im Wesentlichen dieselben Komponenten wie die Übersetzungsvorrichtung 220 aus Fig. 42 auf. Der Unterschied zu der Übersetzungsvorrichtung 220 aus Fig. 42 besteht darin, dass die Übersetzungsvorrichtung 220' nur zwei Scheiben 238, 240 aufweist anstatt drei Scheiben. Grundsätzlich kann eine beliebige Anzahl von mehr als einer Scheibe vorgesehen sein, wobei die Scheiben jeweils über komplementär geformte Aussparungen und Vorsprünge jeweils miteinander in Eingriff bringbar sind.

In Fig. 43 ist der Seilzug 222 mit zwei Seilzügen 258 und 260 verbunden. Der Seilzug 258 kann dabei beispielsweise dem Seilzug 208 eines ersten Kopplungsmechanismus 192 auf einer Seite der Basisbaugruppe 14 entsprechen und der Seilzug 260 kann beispielsweise dem Seilzug 208 eines zweiten Kopplungsmechanismus 192 auf einer gegenüberliegenden Seite der Basisbaugruppe 14 entsprechen. Wie in Fig. 43 dargestellt kann einer der beiden Seilzüge, im vorliegenden Fall der Seilzug 260, mittels Umlenkrollen 262 auf die gegenüberliegende Seite der Basisbaugruppe 14 geführt werden.

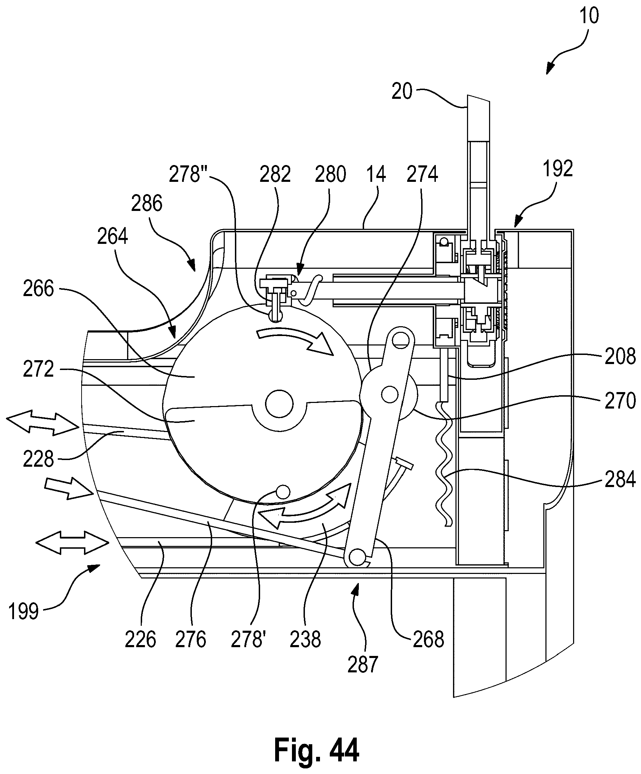

Die Figuren 44 bis 48 zeigen eine erste Ausführungsform einer Bewegungsumsetzungseinrichtung 264. Die Bewegungsumsetzungseinrichtung 264 weist eine Scheibe 266 und einen Hebel 268 auf. Die Scheibe ist in der Basisbaugruppe 14 bezüglich einer Drehachse drehbar gelagert.

Die Scheibe 266 ist nicht rotationssymmetrisch bezüglich der Drehachse ausgebildet. Stattdessen weist die Scheibe 266 ein radiales Profil auf, das sich entlang einer Umfangsrichtung der Scheibe 266 verändert. In anderen Worten verändert sich der Radius der Scheibe 266 entlang der Umfangsrichtung. Das radiale Profil ist vorzugsweise oval ausgebildet und weist eine Symmetrieachse auf. Dadurch ist das radiale Profil spiegelsymmetrisch ausgebildet. Das ovale radiale Profil ist schneidet die Symmetrieachse in einem ersten Punkt und einem zweiten Punkt, wobei die der erste Punkt den kleinsten Radius, insbesondere Abstand zur Drehachse, aufweist und der zweite Punkt den größten Radius aufweist. Die beiden Punkte sind um die Drehachse 180° voneinander beabstandet. Der Radius vergrößert sich stetig entlang des Umfangs der Scheibe 266 von dem ersten Punkt zu dem zweiten Punkt.

Ein erstes Ende des Hebels 268 ist in der Basisbaugruppe schenkbar gelagert. Der Hebel weist ein Rad 270 auf, das zwischen dem ersten Ende und einem zweiten Ende des Hebels 268 an dem Hebel 268 drehbar gelagert ist. Der Lagerungspunkt des Rads 270 ist näher an dem ersten Ende des Hebels 268 als an dem zweiten Ende des Hebels 268 angeordnet.

Das Rad 270 liegt an der Umfangsfläche der Scheibe 266 an. Das Rad 270 ist dazu ausgebildet, bei einer Drehung der Scheibe 266 entlang der Umfangsfläche abzurollen. Da die Scheibe oval ausgebildet ist und sich somit das radiale Profil entlang der Umfangsrichtung ändert, wird das Rad bezüglich der Drehachse der Scheibe 266 in einer radialen Richtung versetzt, wenn die Scheibe 266 gedreht wird. Dadurch wird der Hebel um seinen Lagerungspunkt in der Basisbaugruppe 14 ausgelenkt bzw. geschwenkt. In anderen Worten bewirkt eine Steigung oder ein Gefälle des radialen Profils der Scheibe 266, dass bei einer Drehung der Scheibe der Hebel ausgelenkt wird. Dadurch führt der Hebel 268 eine Pendelbewegung bzw. oszillierende Bewegung aus, wenn die Scheibe 266 gedreht wird.

Das zweite Ende des Hebels 268 ist mit einem ersten Ende eines Seilzugs 276 verbunden. Ein zweites Ende des Seilzugs 276 ist mit einem Federelement gekoppelt. Je nach Auslenkung des Hebels 268 wird der Seilzug 276 in einer zweiten Bewegungsrichtung gezogen bzw. gespannt oder entgegen der zweiten Bewegungsrichtung entspannt. Beim Spannen des Seilzugs 276 wird ebenfalls das Federelement gespannt. Beim Entspannen des Seilzugs 276 wird der Seilzug 276 aufgrund der Rückstellkraft des Federelements entgegen der zweiten Bewegungsrichtung gezogen. In anderen Worten führt die Pendelbewegung des Hebels 268 dazu, dass der Seilzugs 276 abwechseln in und entgegen der zweiten Bewegungsrichtung bewegt wird.

Die Scheibe 266 weist des Weiteren auf einer Seite der Symmetrieachse eine halbmondförmige Erhebung 272 auf, die ebenfalls auf dieser Seite der Symmetrieachse dasselbe radiale Profil aufweist. Der Hebel 268 weist des Weiteren einen Bremsvorsprung 274 auf. Der Bremsvorsprung 274 erstreckt sich von dem Lagerungspunkt des Rads 270 in Richtung der Scheibe 266. Der Bremsvorsprung 274 ist vorzugsweise halbrund geformt und erstreckt sich genausoweit in Richtung der Scheibe 266 wie das Rad 270. Wenn das Rad auf der Seite der Scheibe anliegt, auf der halbmondförmige Erhebung 272 angeordnet ist, liegt der Bremsvorsprung 274 an der Erhebung 272 an und bremst somit das Abrollen des Rads 270.

Die Scheibe 266 ist mit der Übersetzungsvorrichtung 220' über eine Freilaufeinrichtung verbunden, so dass die Scheibe nur in einer Drehrichtung angetrieben wird. In anderen Worten wird eine Drehbewegung des Aktuierungselements 197 in der ersten Bewegungsrichtung über den Seilzug 208, die Übersetzungsvorrichtung 220' und die Freilaufeinrichtung auf die Scheibe 266 übertragen, wohingegen eine Drehbewegung des Aktuierungselements 197 entgegen der ersten Bewegungsrichtung aufgrund des Freilaufs der Freilaufeinrichtung nicht auf die Scheibe 266 übertragen wird.

In Fig. 44 ist die Scheibe 266 in einer ersten Drehposition 286 angeordnet. In der ersten Drehposition 286 ist das Rad 270 an dem ersten Punkt des radialen Profils der Scheibe 266 angeordnet. Der Hebel 268 ist in einer ersten Endposition 287 angeordnet. Der Transportwagen ist in dem ersten Betriebsmodus 86 angeordnet, wenn die Scheibe 266 in der ersten Drehposition 286 angeordnet ist.

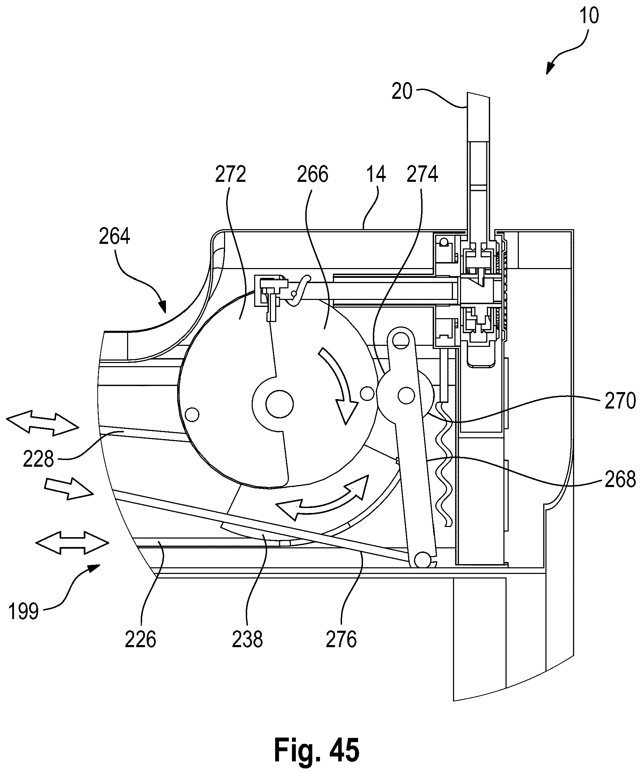

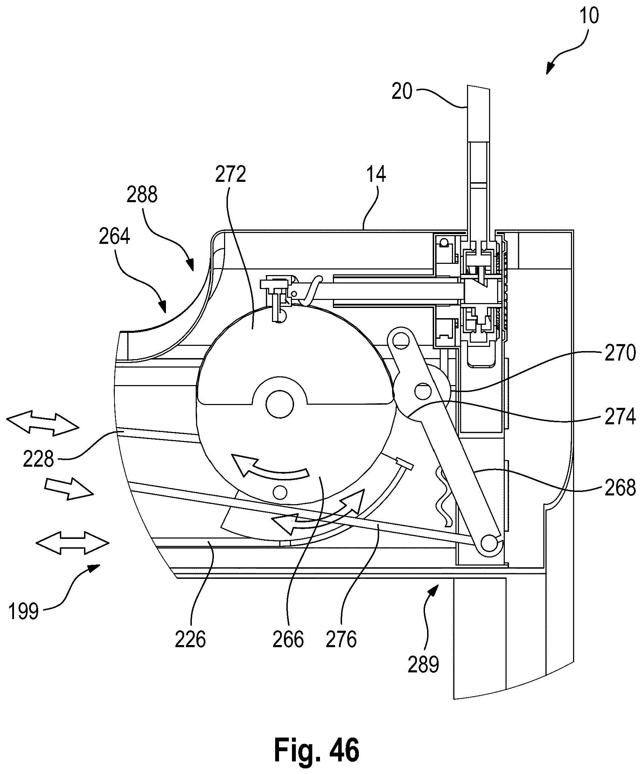

In den Fig. 45 und 46 ist dargestellt, dass die Scheibe 266 bei einer Drehung in der Drehrichtung von der ersten Drehposition 286 bis in eine zweite Drehposition 288 gedreht wird. Dabei wird der Hebel 268 von der ersten Endposition 287 in eine zweite Endposition 289 geschenkt, wobei der Seilzug 276 in der zweiten Bewegungsrichtung gezogen wird. Bei dieser Bewegung wird der Transportwagen 10 von dem ersten Betriebsmodus 86 in den zweiten Betriebsmodus 126 überführt, wobei die Stützräder und die erste Aufnahme 9 ausgeklappt werden.

In Fig. 46 ist die Scheibe 266 in der zweiten Drehposition 288 angeordnet. In der zweiten Drehposition 288 ist das Rad 270 an dem zweiten Punkt des radialen Profils der Scheibe 266 angeordnet. Der Hebel 268 ist in der zweiten Endposition 289 angeordnet. Der Transportwagen ist in dem zweiten Betriebsmodus 126 angeordnet, wenn die Scheibe 266 in der zweiten Drehposition 288 angeordnet ist.

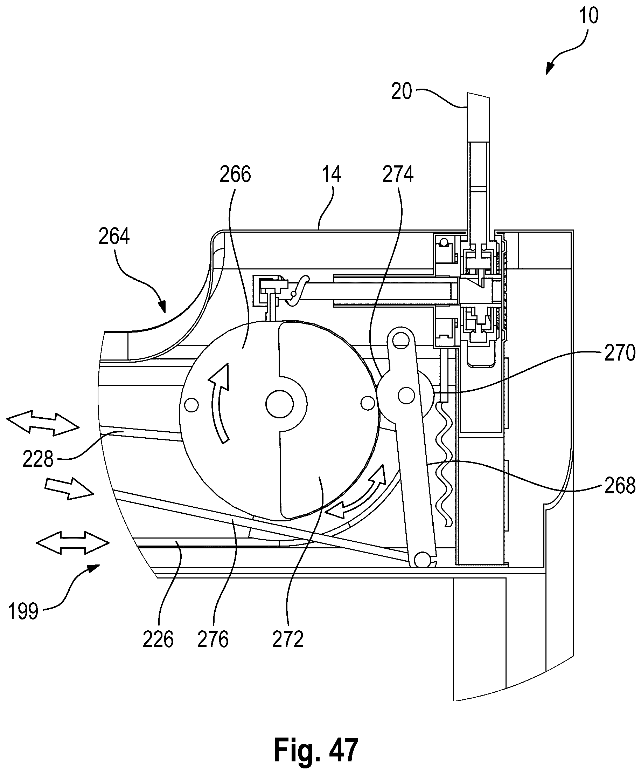

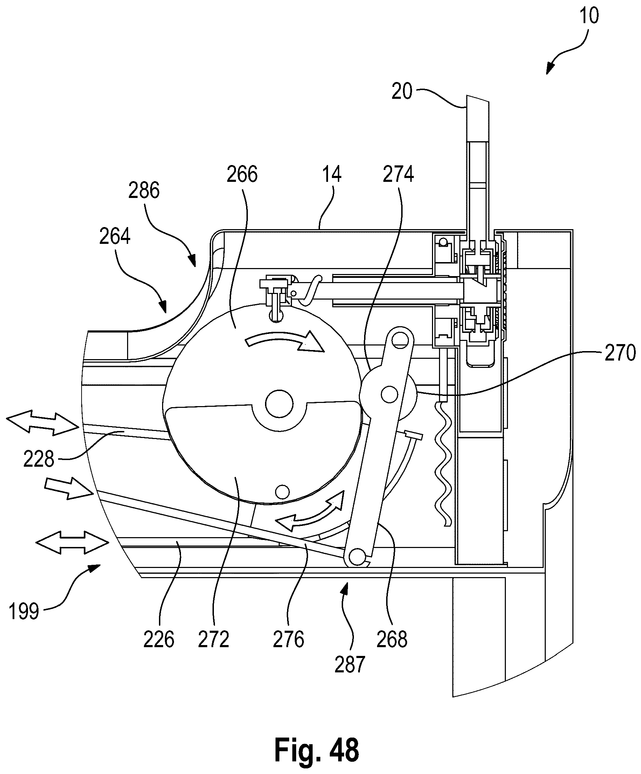

In den Figuren 47 und 48 ist dargestellt, dass die Scheibe 266 bei einer Drehung in der Drehrichtung von der zweiten Drehposition 288 bis in die erste Drehposition 286 gedreht wird. Dabei wird der Hebel 268 von der zweiten Endposition 289 in die erste Endposition 287 geschenkt, wobei der Seilzug 276 entgegen der zweiten Bewegungsrichtung gezogen wird. Bei dieser Bewegung wird der Transportwagen 10 von dem zweiten Betriebsmodus 126 in den ersten Betriebsmodus 86 überführt, wobei die Stützräder und die erste Aufnahme 94 eingeklappt werden. Bei der Drehung der Scheibe 266 von der zweiten Drehposition 288 in die erste Drehposition 286 liegt der Bremsvorsprung 274 an der Erhebung 272 an, um die Drehbewegung zu Bremsen. Aufgrund des Gewichts einer Transportbox in der ersten Aufnahme 93 kann auf den Seilzug 276 eine Zugkraft ausgeübt werden, die über den Hebel 268 und das Rad 270 auf die Scheibe 266 übertragbar ist. Um das zu vermeiden sind der Bremsvorsprung 274 und die Erhebung 272 vorgesehen. In der zweiten Drehposition 288 halten der Bremsvorsprung 274 und die Erhebung 272 aufgrund der Haftreibung die Scheibe 266 in der zweiten Drehposition 288 und sorgen somit dafür, dass der Transportwagen nicht aufgrund eines Gewichts einer Transportbox von selbst von der zweiten Betriebsposition 126 in die erste Betriebsposition 86 überführt wird. Bei der Drehung von der zweiten Drehposition 288 in die erste Drehposition 286 bremsen der Bremsvorsprung 274 und die Erhebung 272 die Drehbewegung aufgrund der Gleitreibung, so dass die Drehbewegung nicht aufgrund eines Gewichts einer Transportbox beschleunigt wird.

In Fig. 48 ist die Scheibe 266 wieder in der ersten Drehposition 286, der Hebel 268 in der ersten Endposition 287 und der Transportwagen 10 in dem ersten Betriebsmodus 86 angeordnet.

Die Bewegungsumsetzungseinrichtung 264 weist des Weiteren einen ersten und einen zweiten Zapfen 278', 278" auf. Die beiden Zapfen 278', 278" sind ebenfalls in der Umfangsrichtung um 180° voneinander beabstandet. Die Zapfen 278', 278" wirken mit einer Entsperrvorrichtung 280 zusammen, die in den Figuren 49 und 50 detailliert dargestellt ist.

Die Entsperrvorrichtung 280 ist dazu ausgebildet, das erste Betätigungselement 22 automatisch zurück in die Arretierstellung 217 zu überführen, wenn die Drehscheibe 266 die erste Drehposition 286 bzw. die zweite Drehposition 288 erreicht, wobei der Transportwagen in dem ersten Betriebsmodus 86 bzw. in dem zweiten Betriebsmodus 126 angeordnet ist. Die Entsperrvorrichtung 280 löst dazu eine entsprechende Sperre der Sperrvorrichtung 290.

Wie zuvor beschrieben, hält die Sperrvorrichtung 290 den Kopplungsmechanismus 192 in dem Kopplungszustand 219, indem die Sperrvorrichtung 290 beispielsweise den Seilzug 212 klemmt. Die Entsperrvorrichtung 280 löst diese Sperrung, wenn die Drehscheibe 266 die erste Drehposition 286 bzw. die zweite Drehposition 288 erreicht, insbesondere wenn der Transportwagen 10 den ersten Betriebsmodus 86 bzw. den zweiten Betriebsmodus 126 erreicht.

Die Entsperrvorrichtung 280 weist dazu eine Klappe 282 auf, die mittels der Zapfen 278 bewegt werden kann, wenn einer der Zapfen 278 gegen die Klappe 282 gedrückt bzw. gedreht wird. Die Klappe 282 liegt an einem Stab 292 an. Der Stab 292 ist koaxial mit der Schwenkachse 194 des Kopplungsmechanismus 192 ausgerichtet. Die Klappe 282 ist mit dem Stab 292 derart gekoppelt, dass, wenn die Klappe 282 durch einen Zapfen zur Seite gedrückt wird, die Klappe 282 den Stab 292 parallel zu der Schwenkachse 194 in Richtung des Kopplungsmechanismus 192 verschiebt. Der Stab 292 ist mit einem Federelement gekoppelt. In einer Ruhestellung des Federelements ist die Klappe 282 nicht durch einen der Zapfen 278 ausgelenkt und der Stab 292 dementsprechend nicht in Richtung des Kopplungsmechanismus 192 verschoben. Das Federelement bewirkt somit, dass die Klappe 282 in eine nicht ausgelenkte Position vorgespannt ist. In den Figuren 49 und 50 ist die Klappe 282 in der nicht ausgelenkten Position angeordnet.

In der Griffverlängerung 184 des Griffs 20 ist ein Entriegelungselement 302 angeordnet. Das Entriegelungselement 302 erstreckt sich parallel zu einer Erstreckungsrichtung der Griffverlängerung 184 in Richtung der Griffstange 182 und ist in dieser Erstreckungsrichtung in der Griffverlängerung 184 bewegbar angeordnet.

Der Stab 292 ist mit dem Entriegelungselement 302 über ein erstes Umlenkelement 294 und eine zweites Umlenkelement 300 gekoppelt. Der Stab 292 liegt dabei an dem ersten Umlenkelement 294. Das erste Umlenkelement 294 ist parallel zu der Schenkachse 194 bewegbar. Der Stab kann somit das erste Umlenkelement 294 parallel zu der Schwenkachse 194 verschieben. Auf der dem Stab 292 gegenüberliegenden Seite des ersten Umlenkelements 294 ist ein Federelement 304 angeordnet, dass das erste Umlenkelement 294 gegen den Stab 292 drückt. Das zweite Umlenkelement 300 liegt an dem Entriegelungselement 302 an. Das zweite Umlenkelement 300 ist senkrecht zu der Schwenkachse 194 und parallel zu der Erstreckungsrichtung der Griffverlängerung 184 angeordnet. Das zweite Umlenkelement 300 kann somit das Entriegelungselement parallel zu der Erstreckungsrichtung der Griffverlängerung 184 verschieben. Das Entriegelungselement 302 kann ebenfalls mittels eines Federelements gegen das zweite Umlenkelement 300 vorgespannt sein.

Das erste Umlenkelement 294 weist eine erste schräge Flanke 296 auf und das zweite Umlenkelement 300 weist eine zweite schräge Flanke 298 auf. Die erste schräge Flanke 296 und die zweite schräge Flanke 298 sind komplementär zueinander geformt. Die beiden Umlenkelemente 294, 300 sind über die schrägen Flanken 296, 298 miteinander gekoppelt. Man insbesonderet hierbei auch von einer Schrägflankenkopplung. Wenn das erste Umlenkelement 294 entlang der Schwenkachse verschoben wird, wird dabei das zweite Umlenkelement 300 senkrecht zu der Schwenkachse 194, insbesondere parallel zu der Erstreckungsrichtung der Griffverlängerung 184 verschoben.

Das Entriegelungselement 302 ist mit der Sperrvorrichtung 290 derart gekoppelt, dass durch die Verschiebung des Entriegelungselement 302 die Klemmung der Sperrvorrichtung 290 gelöst wird.

Erreicht nun die Drehscheibe die erste oder zweite Drehposition 286 bzw. 288, drückt der entsprechende Zapfen 278 die Klappe zur Seite und verschiebt somit den Stab 292 parallel zu der Schenkachse 194 in Richtung des ersten Umlenkelements 294. dabei wird das erste Umlenkelement 294 ebenfalls verschoben, so dass das zweite Umlenkelement 300 über die Schrägflankenkopplung in Richtung des Entriegelungselements 302 geschoben wird. Dabei wird das Entriegelungselements 302 ebenfalls verschoben, so dass die Klemmung der Sperrvorrichtung 290 gelöst wird. Dadurch wird der Seilzug 212 wieder freigegeben und das erste Betätigungselement 22 wird zurück in die Freidrehstellung 215 oder die Arretierstellung 217 überführt, so dass der Kopplungsmechanismus 192 nicht mehr in dem Kopplungszustand 218 angeordnet ist.

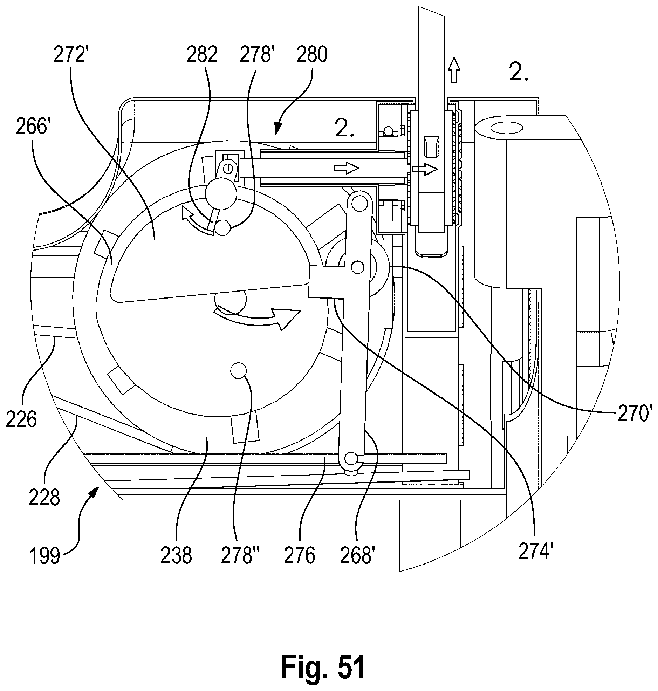

Fig. 51 zeigt eine zweite Ausführungsform einer Bewegungsumsetzungseinrichtung 264'. Die Bewegungsumsetzungseinrichtung 264' weist grundsätzlich denselben Aufbau wie die Bewegungsumsetzungseinrichtung 264 auf. Der Unterschied besteht in der unterschiedlichen Ausgestaltung des Hebels 268 und der Scheibe 266. Insbesondere ist der Bremsvorsprung 274' des Hebels 268' nicht halbrund sondern eckig ausgebildet. Des Weiteren erstreckt sich der Bremsvorsprung 274' weiter in Richtung der Scheibe 266' als das Rad 270'. Die Erhebung 272' hat ein radiales Profil, das der Scheibe 266' entinsbesonderet, wobei die Erhebung um dieselbe Länge bezüglich der Drehachse nach innen versetzt ist, die sich der Bremsvorsprung 274' weiter in Richtung der Scheibe 266' als das Rad 270'.

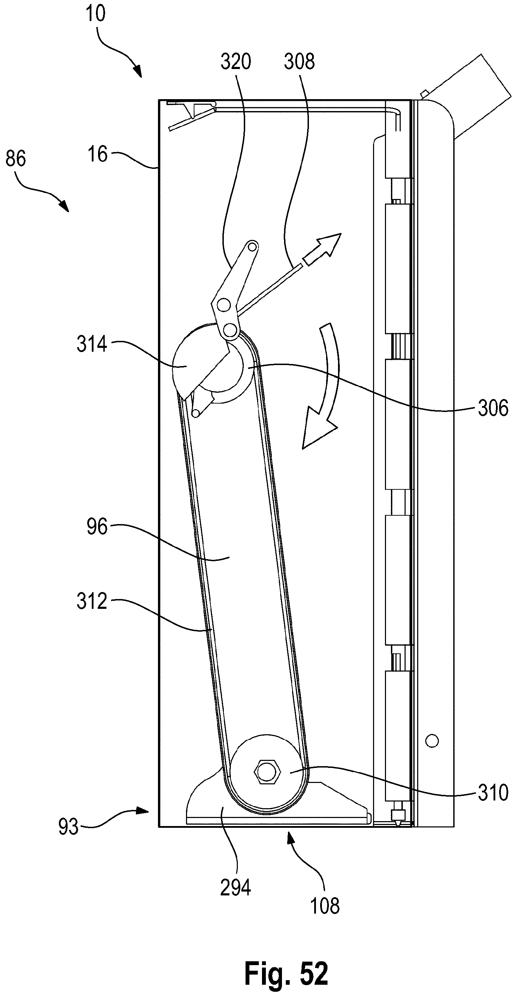

In den Figuren 52 bis 54 ist am Beispiel einer der Seitenbaugruppen 16 ein Mechanismus dargestellt, über den jedes erste Aufnahmeelement 94 der ersten Aufnahme 93 zwischen den Transportposition 108 und der Ladeposition 110 bewegt werden kann. Dieser Mechanismus ist in beiden Seitenbaugruppen gleichermaßen ausgebildet.

Bei diesem Mechanismus ist der Arm 96 an der entsprechenden Seitenbaugruppe 16 über eine Rolle 306 drehbar gelagert, so dass das entsprechende Aufnahmeelement 94 zwischen der Transportposition 108 und der Ladeposition 110 bewegbar ist.

Ein Seilzug 308 ist mit der Rolle 306 gekoppelt. Dazu ist ein erstes Ende des Seilzugs 308 an der Rolle 306 befestigt, so dass eine Zugbewegung in Richtung eines zweiten Endes des Seilzugs 308 die Rolle 306 um ihre Drehachse dreht. Das zweites Ende des Seilzugs 308 ist mit dem Seilzug 276 der Bewegungsumsetzungseinrichtung 264 derart gekoppelt, dass eine Bewegung des Seilzugs 276 in der zweiten Bewegungsrichtung auf den Seilzug 308 übertragen wird. Der Seilzug 308 erstreckt sich vorzugsweise von der Seitenbaugruppe 16 in die Basisbaugruppe 14.

Die Rolle 306 kann zudem mit einer Federeinrichtung gekoppelt sein, die gespannt wird, wenn der Seilzug 308 in Richtung des zweiten Endes, insbesondere in der zweiten Bewegungsrichtung, gezogen wird. Wird der Seilzug 276 in der zweiten Bewegungsrichtung mittels des Hebels 268 bewegt, wird der Seilzug 308 ebenfalls in der zweiten Bewegungsrichtung gezogen. Dadurch wird der Arm 96 von der Transportposition 108 in Richtung der Ladeposition 110 geschwenkt und die Federeinrichtung gespannt. Wird der Seilzug 276 entgegen der zweiten Bewegungsrichtung mittels des Hebels 268 bewegt, wird der Seilzug 308 wieder entspannt, wobei die Rückstellkraft der Federeinrichtung bewirkt, dass der Seilzug 308, und somit auch der Seilzug 276, entgegen der der zweiten Bewegungsrichtung gezogen werden.

Das Aufnahmeelement 94 ist an dem Arm 96 mittels einer Rolle 310 drehbar angeordnet. Der Arm 96 weist des Weiteren ein umlaufendes Seil bzw. Band 312 auf, das um die Rolle 306 und die Rolle 310 umläuft. Die Rollen 306 und 310 weisen denselben Umfang auf. Dadurch wird erreicht, dass, wenn der Arm 96 geschwenkt wird, das Aufnahmeelement 94 im Raum stets die gleiche Orientierung, insbesondere gegenüber der vertikalen Richtung, aufweist.

In Fig. 52 ist der Transportwagen 10 in dem ersten Betriebsmodus 86 angeordnet. Das erste Aufnahmeelement 94 ist somit in der Transportposition 108 angeordnet. Dabei ist die Scheibe 266 in der ersten Drehposition 286 angeordnet.

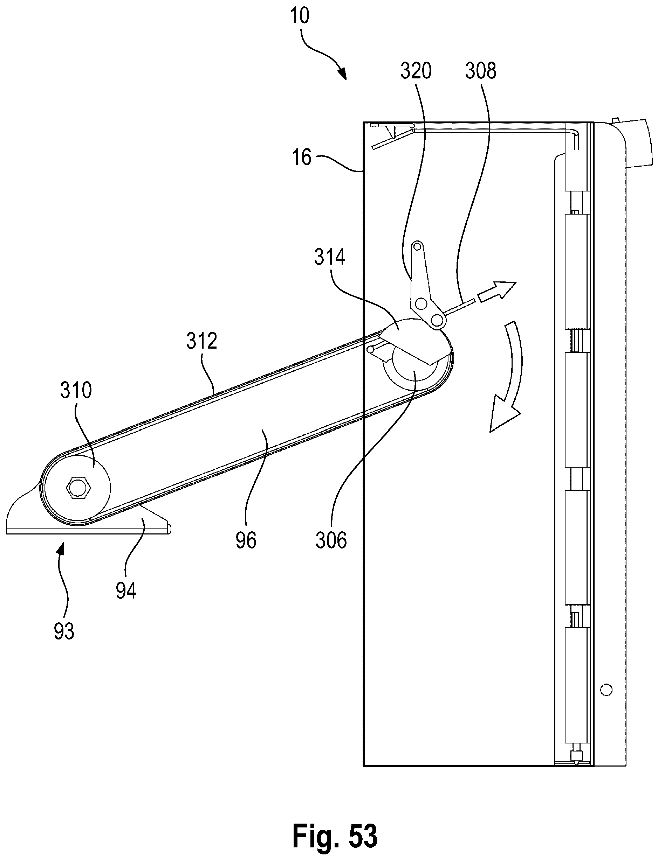

Zum Überführen des Transportwagens 10 aus dem ersten Betriebsmodus 86 in den zweiten Betriebsmodus 126 wird, wie zuvor beschrieben, der Seilzug 308 in der zweiten Bewegungsrichtung gezogen. Dadurch wird die Rolle 306 in einer Drehrichtung um die Drehachse gedreht, wodurch der Arm 96 über der Rolle 306 aufwärts geschwenkt wird. Dadurch ändert sich die vertikale Lage des Aufnahmeelements 94, wohingegen die Orientierung des Aufnahmeelements 94 erhalten bleibt. In Fig. 53 befindet sich der Transportwagen 10 beispielsweise in einem Zustand zwischen dem ersten Betriebsmodus 86 in den zweiten Betriebsmodus 126. Dabei ist die erste Aufnahme 93 zwischen der Transportposition 108 und der Ladeposition 110 angeordnet.

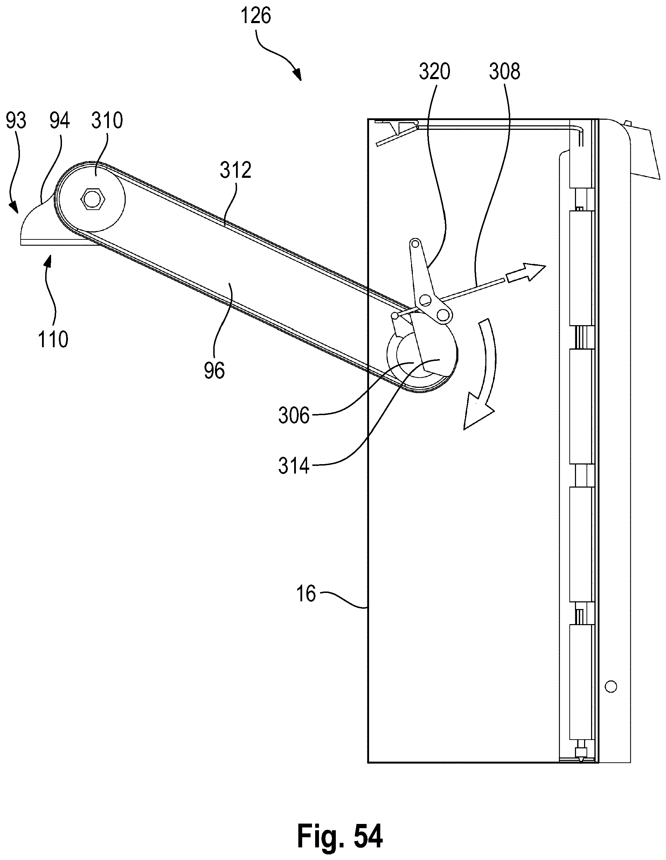

Das Aufnahmeelement 94 wird soweit aufwärts geschwenkt, bis es die Ladeposition 110 erreicht. Die Ladeposition 110 ist dann erreicht, wenn die Scheibe 266 in der zweiten Drehposition 288 angeordnet ist. Dieser Zustand ist in Fig. 54 dargestellt. In Figur 54 ist somit der Transportwagen 10 in dem zweiten Betriebsmodus 126 angeordnet.

Zum Überführen des Transportwagens 10 aus dem zweiten Betriebsmodus 126 in den ersten Betriebsmodus 86 wird, wie zuvor beschrieben, der Seilzug 308 entgegen der zweiten Bewegungsrichtung bewegt. Dadurch wird die Rolle 306 um die Drehachse in eine entgegengesetzte Drehrichtung gedreht, wodurch der Arm 96 über der Rolle 306 abwärts geschwenkt wird. Dadurch ändert sich die vertikale Lage des Aufnahmeelements 94, wohingegen die Orientierung des Aufnahmeelements 94 erhalten bleibt. Das Aufnahmeelement 94 wird soweit abwärts geschwenkt, bis es die Transportposition 108 erreicht. Die Transportposition 108 ist dann erreicht, wenn die Scheibe 266 in der ersten Drehposition 286 angeordnet ist. Der Transportwagen ist dann wieder in dem ersten Betriebsmodus 86 angeordnet.

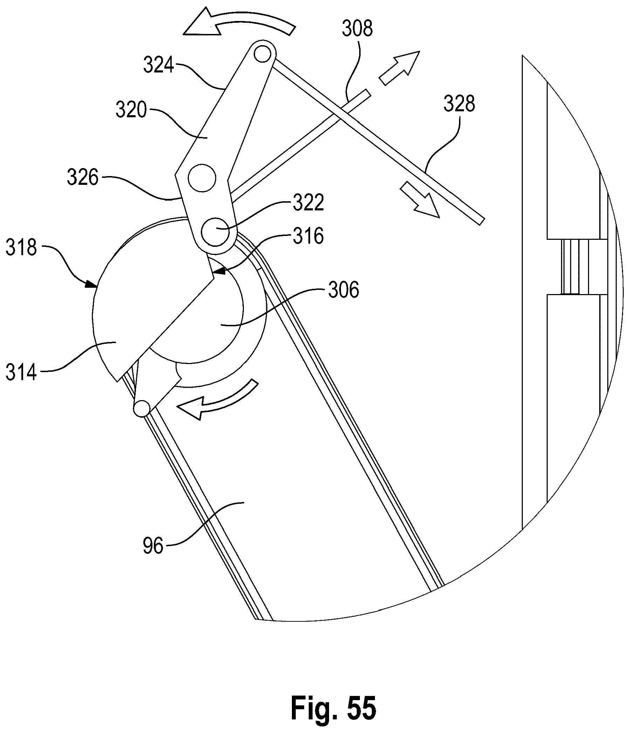

Wie zuvor beschrieben ist eine Bewegung der ersten Aufnahme 93 ist mit einer Bewegung der Stützräder 100 gekoppelt. Diese Kopplung ist in den Figuren 55 bis 57 detailliert beschrieben.

Die Rolle 306 weist dazu eine Kulissenführung 314 auf. Die Kulissenführung 314 weist einen ersten, geraden Abschnitt 316 auf, der bezüglich der Drehachse exzentrisch von radial innen nach radial außen verläuft. Die Kulissenführung weist einen zweiten, gebogenen Abschnitt 318 auf, der sich an den ersten Abschnitt 316 anschließt. Der zweite Abschnitt 318 erstreckt sich entlang des Umfangs der Rolle 306, wobei ein radialer Abstand der Kulissenführung 314 entlang des zweiten Abschnitts 318 ausgehend von dem ersten Abschnitt 316 stetig zunimmt. Die radiale Steigung der Kulissenführung 314 ist in dem ersten Abschnitt 316 ist größer als in dem zweiten Abschnitt 318.

An der Seitenbaugruppe 16 ist ein Hebel 320 angeordnet. Ein erstes Ende des Hebels 320 ist an der Seitenbaugruppe um eine Schwenkachse schwenkbar gelagert. Die Schwenkachse verläuft parallel zu der Drehachse der Rolle 306. Die Schwenkachse ist in der y-Richtung oberhalb von der Drehachse der Rolle 306 angeordnet. An einem zweiten Ende des Hebels 320 ist ein Rad 322 drehbar gelagert. Das Rad liegt an der Kulissenführung 314 an und kann entlang der Kulissenführung 314 abrollen, wenn die Rolle 306 gedreht wird.

Der Hebel 320 ist geknickt geformt. Dazu weist der Hebel 320 einen ersten geraden Abschnitt 324 und einen zweiten geraden Abschnitt 326 auf, die gewinkelt zueinander angeordnet sind. Das erste Ende des Hebels 320 ist an dem ersten Abschnitt 324 angeordnet und das zweite Ende des Hebels 320 ist an dem zweiten Abschnitt 326 angeordnet. Der Hebel 320 ist mit einem weiteren Seilzug 328 gekoppelt. Der Seilzug 328 ist dazu an dem zweiten Abschnitt 326 des Hebels 320 befestigt. Eine Bewegung des Seilzugs 328 bewirkt, dass die Stützräder ausgeklappt bzw. eingeklappt werden.

In Fig. 55 ist der Transportwagen 10 in dem ersten Betriebsmodus 86 angeordnet, wobei die erste Aufnahme 93 entsprechend in der Transportposition 108 angeordnet ist. Das Rad 322 liegt an dem ersten Abschnitt der Kulissenführung 314 an. Beim Überführen des Transportwagens 10 aus dem ersten Betriebsmodus 86 in den zweiten Betriebsmodus 126 wird, wie zuvor beschrieben, die Rolle 306 um die Drehachse gedreht. Dadurch wird auch die Kulissenführung 314 um diese Drehachse gedreht, wobei das Rad 322 entlang des Kulissenprofils der Kulissenführung 314 abrollt. Dabei rollt das Rad 322 zuerst entlang des ersten Abschnitts 316, bis das Rad 322 den zweiten Abschnitt 318 erreicht.

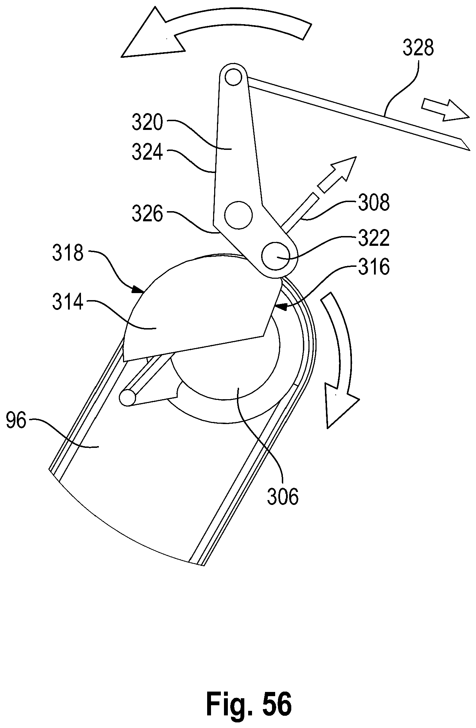

Dieser Zustand ist in Fig. 56 dargestellt. Das Rad ist hierbei am Beginn des zweiten Abschnitts 318 angeordnet. Dabei befindet sich der Transportwagen 10 in einem Zustand zwischen dem ersten Betriebsmodus 86 in den zweiten Betriebsmodus 126 und die erste Aufnahme 93 ist zwischen der Transportposition 108 und der Ladeposition 110 angeordnet.

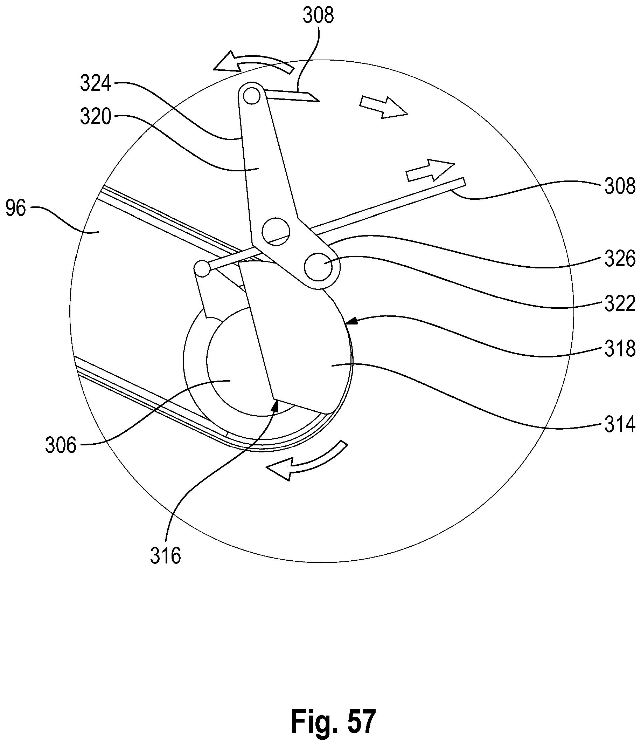

Die Rolle 306 wird, wie zuvor beschrieben solange weitergedreht, bis der zweite Betriebsmodus 126 erreicht ist. Dabei rollt das Rad entlang des zweiten Abschnitts 318. Wenn der zweite Betriebsmodus 126 erreicht ist, ist das Rad 322 an einem Ende des zweiten Abschnitts 318 angeordnet. Dieser Zustand ist in Fig. 57 dargestellt.

Da sich ein radialer Abstand der Kulissenführung 314 bezüglich der Drehachse der Rolle 306 entlang der Kulissenführung 314 vom Beginn des ersten Abschnitts 316 bis zu einem Ende des zweiten Abschnitts 318 stetig vergrößert, ändert sich auch ein radialer Abstand des Rads 322 zu der Drehachse der Rolle 306. Dadurch wird der Hebel 320 ausgelenkt, wodurch der Hebel 320 an dem Seilzug 328 zieht. Aufgrund der unterschiedlichen radialen Steigungen in dem ersten Abschnitt 316 und dem zweiten Abschnitt 318 wird der Hebel weiter bei der Bewegung des Rads 322 entlang des ersten Abschnitts 316 weiter ausgelenkt als bei der Bewegung des Rads 322 entlang des zweiten Abschnitts 318. Vorzugsweise beträgt das Verhältnis der Auslenkungen entsprechend der beiden Abschnitte 1:2 bis 1:10, insbesondere 1:5.

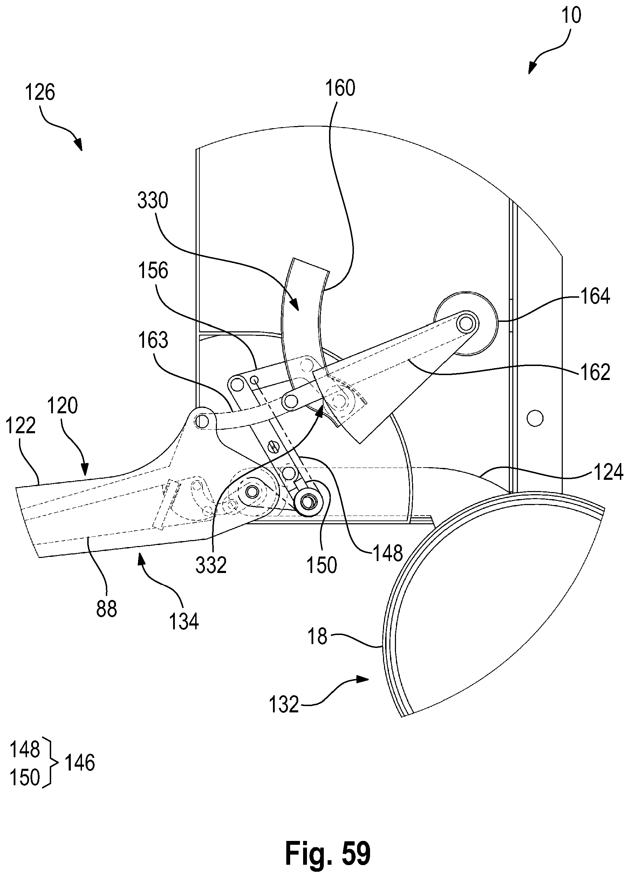

In den Figuren 58 und 59 ist ein Mechanismus dargestellt, mittels dem das Stützrad 100 aus einer Seitenbaugruppe 16 ausgeklappt bzw. eingeklappt werden kann. In Fig. 58 ist das Stützrad 100 in der eingeklappten Stellung 118, das Rad 18 in der ausgeklappten Stellung 78 und die Stütze 88 in der ausgeklappten Stellung 92 angeordnet. Dementsprechend ist der Transportwagen 10 in dem ersten Betriebsmodus 86 angeordnet. In Fig. 58 ist das Stützrad 100 in der ausgeklappten Stellung 120, das Rad 18 in der zweiten ausgeklappten Stellung 132 und die Stütze 88 in der zurückgeklappten Stellung 134 angeordnet. Dementsprechend ist der Transportwagen 10 in dem zweiten Betriebsmodus 126 angeordnet. Die einzelnen Komponenten, die in der Seitenbaugruppe 16 angeordnet sind, wurden bereits mit Bezug auf die Figuren 28 bis 32 erläutert.

In den Figuren 58 und 59 zudem dargestellt, dass die Rolle 164 mit dem Seilzug 328 gekoppelt ist. Der Seilzug 328 ist dazu an der Rolle 164 befestigt, so dass die Rolle 164 gedreht wird, wenn an dem Seilzug 328 gezogen wird. Auf diese Weise ist die Drehbewegung der Rolle 306, insbesondere die Schwenkbewegung der ersten Aufnahme, über den Hebel 320 und den Seilzug 328 mit der Drehbewegung der Rolle 164 gekoppelt. Die Rolle 164 kann des weiteren mit einer Federeinrichtung gekoppelt sein, die gespannt wird, wenn an dem Seilzug 328 gezogen wird. Wird der Seilzug 328 entspannt, wird die Rolle 164 aufgrund der Rückstellkraft der Federeinrichtung zurückgedreht, wobei der Seilzug 328 in die entgegengesetzte Richtung gezogen wird.

Des Weiteren ist in den Figuren 58 und 59 dargestellt, dass das vierte Hebelelement 163 des zweiten Kniehebels 165 mit dem Arm 122 des Stützrads 100 gekoppelt ist. Dazu ist der Arm 122 an der dem dritten Hebelelement 162 abgewandten Seite des vierten Hebelelements 163 mit dem vierten Hebelelement 163 drehbar gekoppelt. Der Arm 122 des Stützrads 100 ist ebenfalls auf der Achse 166 drehbar gelagert. Eine Knickbewegung oder Streckbewegung des Kniehebels 165 führt somit zu einer Schwenkbewegung des Arms 122 um die Schwenkachse 166. Das dritte Hebelelement 162 ist gerade geformt. Das vierte Hebelelement 163 ist gebogen geformt. Vorzugsweise ist ein Krümmungsradius des vierte Hebelelement 163 größer als, insbesondere doppelt so groß wie, eine Länge des vierten Hebelelements 163 von dem dritten Hebelelement 162 zu dem Arm 122. Vorzugsweise ist eine Länge des dritten Hebelelements 162 von der Rolle 164 zu dem vierten Hebelelement 163 länger als, insbesondere doppelt so lang wie, die Länge des vierten Hebelelements 163.

In Fig. 58, insbesondere in dem ersten Betriebsmodus 86, ist der Kniehebel 165 geknickt angeordnet. In anderen Worten schließen das erste Hebelelement 148 und das zweite Hebelelement 150 miteinander einen Winkel ein, der kleiner als 145° ist. Vorzugsweise beträgt der Winkel 60° bis 120°, insbesondere 90°.

In Fig. 59, insbesondere in dem zweiten Betriebsmodus, ist der Kniehebel 165 gestreckt angeordnet. In anderen Worten beträgt schließen das erste Hebelelement 148 und das zweite Hebelelement 150 miteinander einen Winkel von 180° ein. Das erste Hebelelement 148 und das zweite Hebelelement 150 sind somit fluchtend miteinander angeordnet.

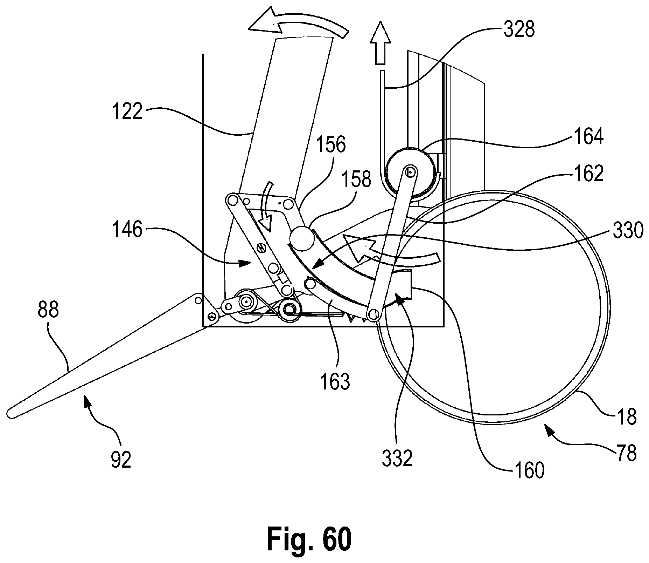

In den Figuren 60 bis 62 ist dargestellt, wie die einzelnen Komponenten der Seitenbaugruppe 16 zusammenwirken, damit das Stützrad aus der eingeklappten Stellung 118 in die ausgeklappte Stellung 120 geschwenkt wird und gleichzeitig das Rad 18 von der ersten ausgeklappten Stellung 78 in die zweite ausgeklappte Stellung 132 und die Stütze 88 von der ausgeklappte Stellung 92 in die zurückgeklappte Stellung 134 geschwenkt wird.

Beim Überführen des Transportwagens 10 von dem ersten Betriebsmodus 86 in den zweiten Betriebsmodus 126 wird der Seilzug 328 in Richtung des in Fig. 30 dargestellten Pfeils gezogen. Dadurch wird die Rolle 164 um ihre Drehachse gedreht und somit auch das dritte Hebelelement 162 um diese Drehachse geschwenkt. Dabei wird der zweite Kniehebel 165 allmählich gestreckt. In anderen Worten vergrößert sich ein Winkel, den das dritte Hebelelement 162 und das vierte Hebelelement 163 miteinander einschließen umso mehr, je mehr an dem Seilzug 328 gezogen wird.

Beim Strecken des zweiten Kniehebels 165 wird der Arm 122 des Stützrads 100 um die Schenkachse 166 von der eingeklappten Stellung 118 in Richtung der ausgeklappten Stellung 120 geschwenkt. Da die Topfkurve 160 mit dem dritten Hebelelement 162 starr verbunden ist, wird die Topfkurve 160 ebenfalls um die Drehachse der Rolle 164 geschwenkt. Das Rad 158 rollt dabei entlang des Innenprofils der Topfkurve 160 ab.

Das Innenprofil der Topfkurve 160 weist einen ersten Abschnitt 330 und einen zweiten Abschnitt 332 auf. Im ersten Betriebszustand 86 liegt das Rad 158 am Anfang des ersten Abschnitts 330 an und im zweiten Betriebsmodus 126 liegt das Rad 158 am Ende des zweiten Abschnitts 332 an. Das Ende des ersten Abschnitts 330 und der Anfang des zweiten Abschnitts 332 grenzen aneinander an. Das Rad 158 rollt somit entlang des Innenprofils der Topfkurve 160 vom Anfang des ersten Abschnitts 330 zum Ende des zweiten Abschnitts 332 ab.

Der erste Abschnitt 330 ist derart ausgebildet, dass bei dem Schwenken der Topfkurve 160 das Rad 158 entlang des Innenprofils der Topfkurve abrollt, ohne dass es seine Lage ändert. In anderen Worten bleibt ein radialer Abstand des Innenprofils zu der Drehachse der Rolle 164 entlang des ersten Abschnitts 330 konstant. Der zweite Abschnitt 332 ist derart ausgebildet, dass bei dem Schwenken der Topfkurve 160 das Rad 158 entlang des Innenprofils der Topfkurve abrollt und sich dabei seine Lage ändert. In anderen Worten ändert sich ein radialer Abstand des Innenprofils zu der Drehachse der Rolle 164 entlang des zweiten Abschnitts 330. Insbesondere wird der radialer Abstand des Innenprofils zu der Drehachse der Rolle 164 entlang des zweiten Abschnitts 330 kleiner. Dadurch wird das Rad 158 und damit auch der zweite Ende des Hebels 156 in Richtung der Drehachse der Rolle 164 bewegt. Das erste Ende des Hebels 156 wird abwärts bewegt, wobei der Kniehebel 146 ebenfalls abwärts bewegt wird. Dadurch wird zum einen der Hebel 154 weiter um die Schwenkachse 166 geschwenkt, so dass das Rad 18 von der ersten ausgeklappten Stellung 78 in die zweite ausgeklappte Stellung geschwenkt wird. Zum anderen wird der Seilzug 168 entspannt, so dass das Federelement 180 den Seilzug 168 zurückzieht. Dadurch wird der Hebel 174 in die entgegengesetzte Richtung um die Schwenkachse 166 geschwenkt, so dass die Stütze von den ausgeklappten Stellung 92 in die zurückgeklappte Stellung zurückgeschwenkt wird.

Fig. 60 zeigt hierbei den Ausgangszustand, insbesondere den ersten Betriebszustand 86, in dem das Stützrad 100 in der eingeklappten Stellung 118, das Rad 18 in der ausgeklappten Stellung 78 und die Stütze 88 in der ausgeklappten Stellung 92 angeordnet sind. Der zweite Kniehebel 165 ist dabei angewinkelt.

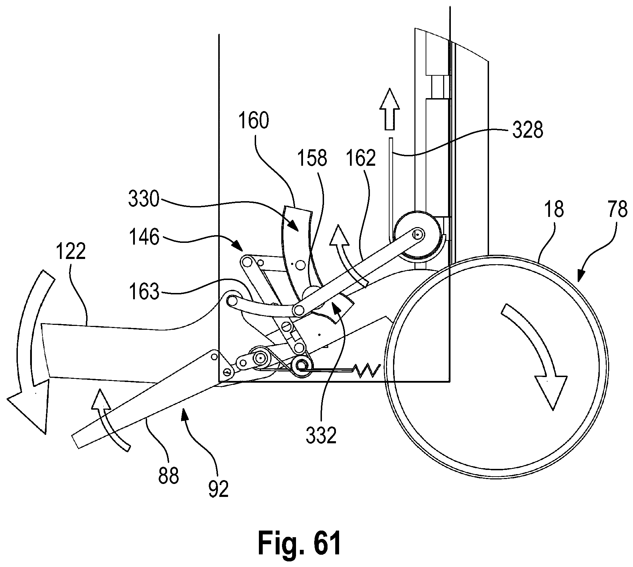

Fig. 61 zeigt einen Zwischenzustand, in dem das Stützrad 100 teilweise ausgeklappt ist, insbesondere zwischen der eingeklappten Stellung 118 und der ausgeklappten Stellung 120 angeordnet ist, und der zweite Kniehebel 165 teilweise gestreckt ist. Hingegen ist das Rad 18 noch in der ausgeklappten Stellung 78 und die Stütze 88 noch in der ausgeklappten Stellung 92, da die Rolle 158 am Ende des ersten Abschnitts 330der Topfkurve 160 angeordnet ist.

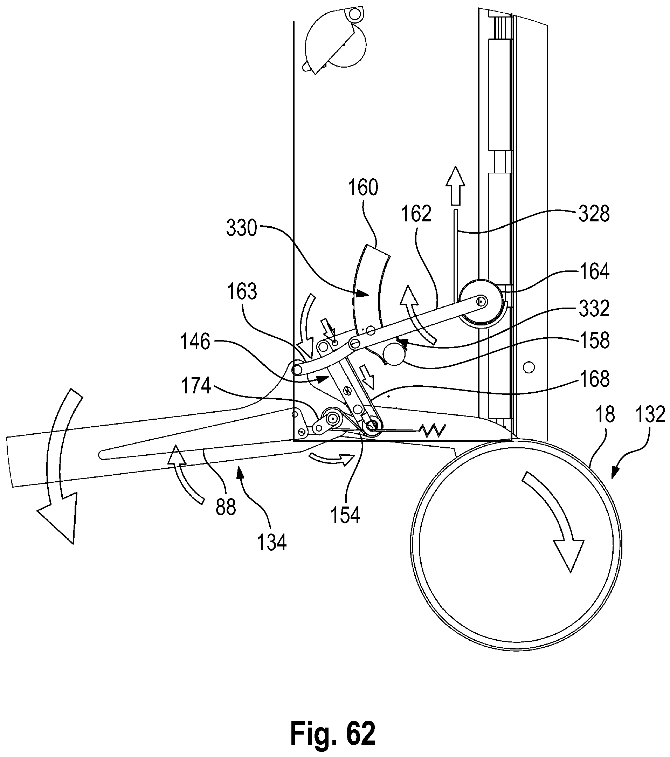

Fig. 62 zeigt den Endzustand der Aufklappbewegung, in dem das Stützrad 100 in der ausgeklappten Stellung 120, das Rad 18 in der zweiten ausgeklappten Stellung 132 und die Stütze 88 in der zurückgeklappten Stellung 134 angeordnet sind. Der zweite Kniehebel 165 ist dabei komplett gestreckt.

Entsprechend verläuft auch das Einklappen des Stützrads 100 von der ausgeklappten Stellung 120 in die eingeklappte Stellung 118, wobei gleichzeitig das Rad 18 von der zweiten ausgeklappten Stellung 132 in die erste ausgeklappte Stellung 78 und die Stütze 88 von der zurückgeklappten Stellung 134 in die ausgeklappte Stellung 92 geschwenkt wird. Dabei wird der Seilzug 328 entgegen der Richtung des in Fig. 30 dargestellten Pfeils gezogen. Dadurch wird die Rolle 164 um ihre Drehachse in der entgegengesetzten Richtung gedreht. Dadurch wird der zweite Kniehebel 165 allmählich geknickt, wobei der Arm 122 des Stützrads 100 um die Schenkachse 166 von der eingeklappten Stellung 118 in Richtung der ausgeklappten Stellung 120 geschwenkt wird. Ebenso wird die Topfkurve 160 um die Drehachse in der entgegengesetzten Richtung der Rolle 164 geschwenkt, sodass das Rad 158 vom Ende des zweiten Abschnitts 332 zum Anfang des ersten Abschnitts 330 abrollt. Dabei wird das Rad 158 und damit auch der zweite Ende des Hebels 156 von der Drehachse der Rolle 164 weg bewegt. Dadurch bewegt sich das erste Ende des Hebels 156 wird aufwärts, wobei der Kniehebel 146 ebenfalls aufwärts bewegt wird. Dadurch wird zum einen der Hebel 154 zurück um die Schwenkachse 166 geschwenkt, so dass das Rad 18 von der zweiten ausgeklappten Stellung 132 in die erste ausgeklappte Stellung 78 geschwenkt wird. Zum anderen zieht der Hebel 156 an dem Seilzug 168, wodurch der Hebel 174 um die Schwenkachse 166 geschwenkt wird, so dass die Stütze 88 von den zurückgeklappten Stellung 134 in die ausgeklappte Stellung 92 geschwenkt wird.

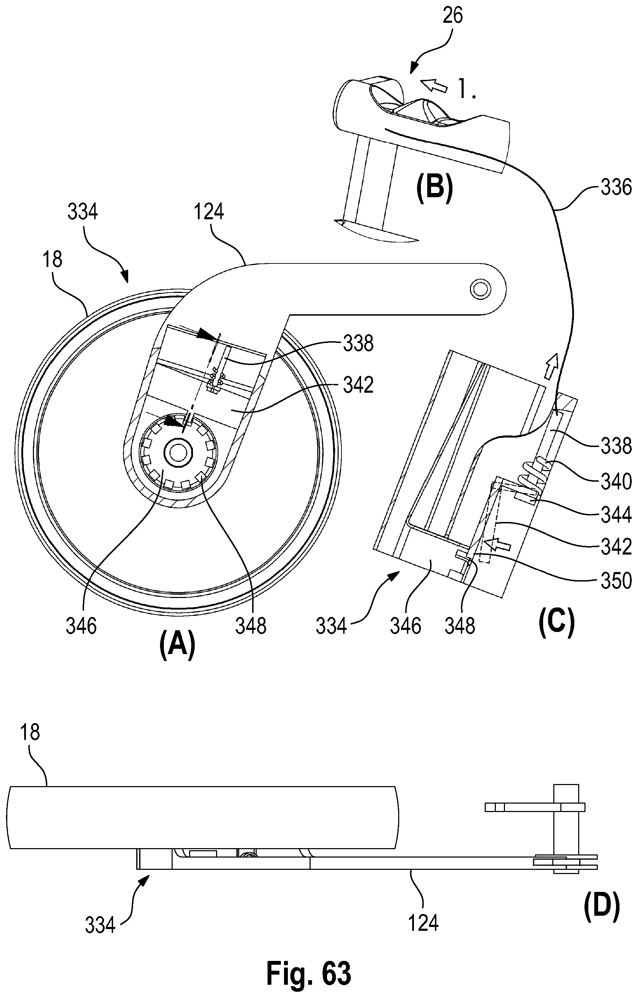

Fig. 63 zeigt eine Ausführungsform einer Bremseinrichtung 334. Wie in Ansicht (B) dargestellt, wird die Bremseinrichtung 334 durch eine Betätigung, beispielsweise ein Eindrücken, des dritten Betätigungselements 26 am Griff 20 aktiviert.

Wie in Ansicht (A) dargestellt, ist die Bremseinrichtung 334 an einem Rad 18, insbesondere in dem Arm 124, des Transportwagens 10 angeordnet, um das Rad 18 gegenüber einer Drehbewegung zu versperren. Die Bremseinrichtung 334 fingiert also als eine Feststellbremse, die den Transportwagen 10 gegenüber einem ungewollten losrollen absichert.

Ein Seilzug 336 verläuft vom dem dritten Betätigungselement 26 bis zu der Bremseinrichtung 334. Das dritte Betätigungselement 26 ist dazu ausgebildet, den Seilzug 336 bei einer Betätigung zu ziehen.

Die Bremseinrichtung 334 weist des Weiteren eine Stift 338 auf. Ein erstes Ende des Stifts 338 ist mit dem Seilzug 336 verbunden. Der Stift 338 ist in dem Arm 124 derart gelagert, dass er axial bewegbar ist. dadurch kann der Seilzug 336 den Stift 338 in einer axialen Richtung ziehen. Ein zweites Ende des Stifts 338 ist mit einem Federelement 340 gekoppelt. Das Federelement 340 spannt den Stift 338 entgegen der axialen Richtung vor.

Bremseinrichtung 334 weist des Weiteren eine Winkelklappe 342 auf. Der Stift 338 weist an seinem zweiten Ende einen Kopf 344 auf. Ein erstes Ende der Winkelklappe 342 ist mit dem Kopf 344 gekoppelt, so dass die Winkelklappe geschwenkt wird, wenn an dem Seilzug 336 aufgrund einer Betätigung des dritten Betätigungselements 26 gezogen wird.

Bremseinrichtung 334 weist des Weiteren eine Scheibe 346 auf. Die Scheibe 346 ist mit dem Rad 18 drehfest gekoppelt. Die Scheibe 346 weist entlang ihres Umfangs Aussparungen 348 aus. Die Aussparungen 348 sind identisch geformt und sind symmetrisch über den Umfang der Scheibe 346 verteilt. Die Winkelklappe 342 weist an einem zweiten Ende einen Vorsprung 350 auf, der komplementär zu den Aussparungen 348 geformt ist und mit einer der Aussparungen 348 in Eingriff bringbar ist, um das Rad 18 mit dem Arm 124 drehfest zu koppeln. Wenn der Vorsprung 350 mit keiner der Aussparungen in Eingriff ist, ist das Rad 18 gegenüber dem Arm frei drehbar.

Ist das Betätigungselement 26 nicht betätigt, ist der Vorsprung 350 außer Eingriff mit den Aussparungen 348.

Durch eine Betätigung des dritten Betätigungselements 26 wird der Stift 338 über den Seilzug 336 gezogen. Dadurch wird die Klappe 342 zu der Scheibe 346 geschwenkt, wodurch der Vorsprung 350 mit einer der Aussparungen 348 in Eingriff kommt.

Bim Lösen der Betätigung zieht das Federelement 340 den Stift in der entgegengesetzten Richtung zurück. Dadurch wird die Klappe 342 von der Scheibe 346 weg geschwenkt, wodurch der Vorsprung 350 gegenüber der Aussparungen 348 außer Eingriff kommt.

Eine derartige Bremseinrichtung 334 kann auch an beiden Rädern 18 des Transportwagens 10 angeordnet sein.

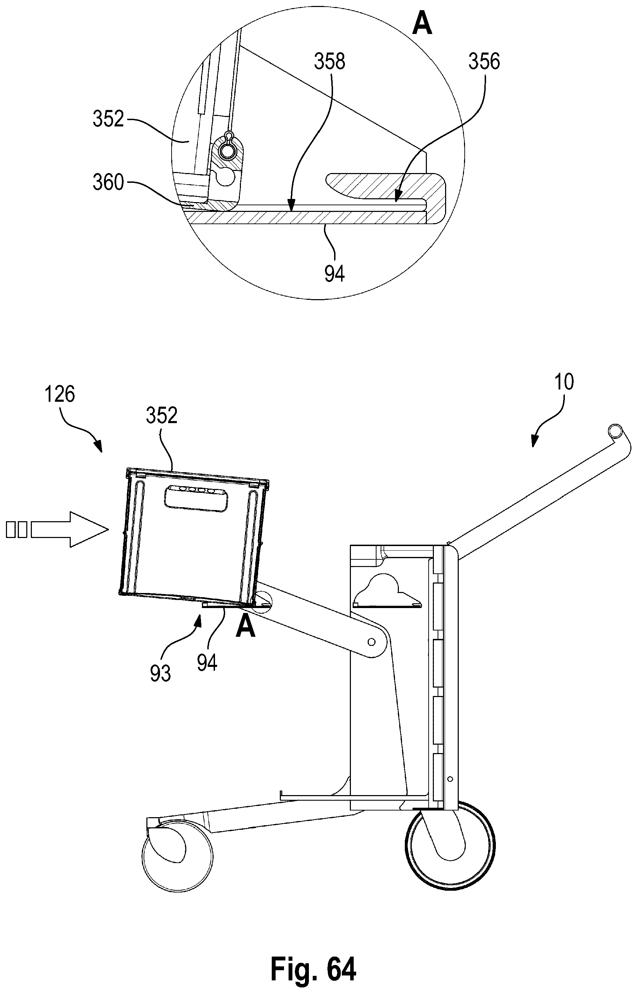

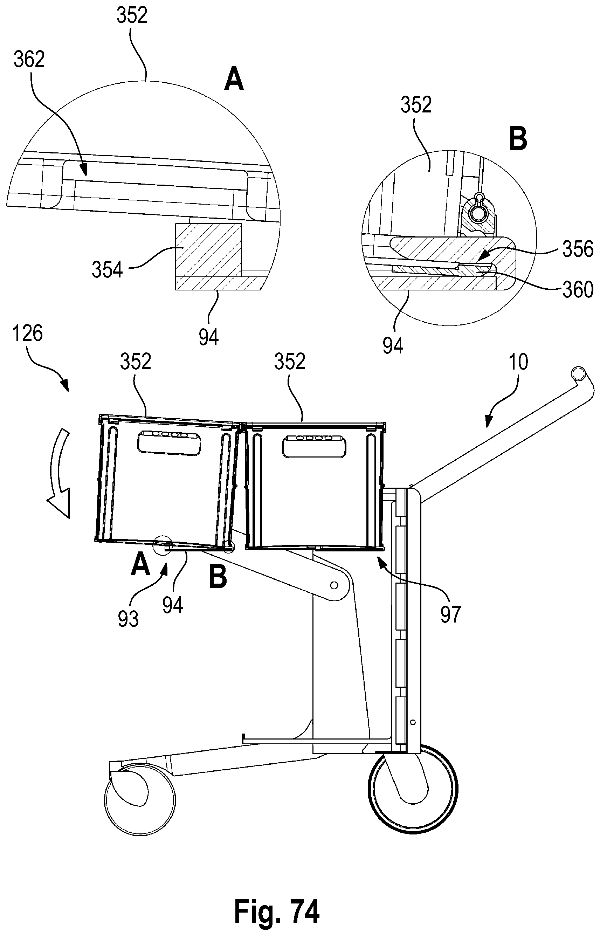

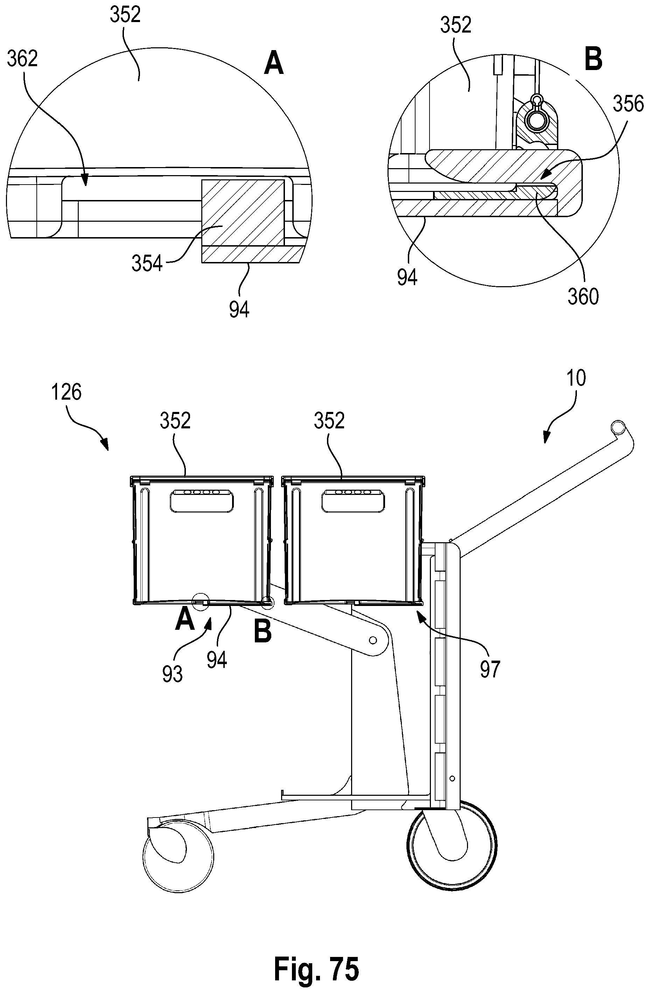

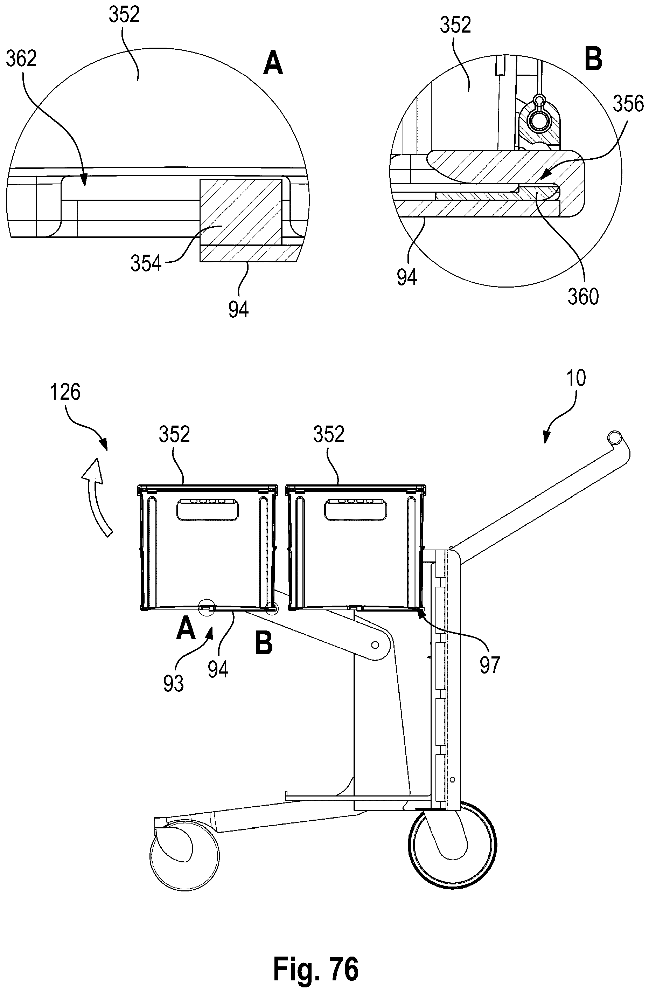

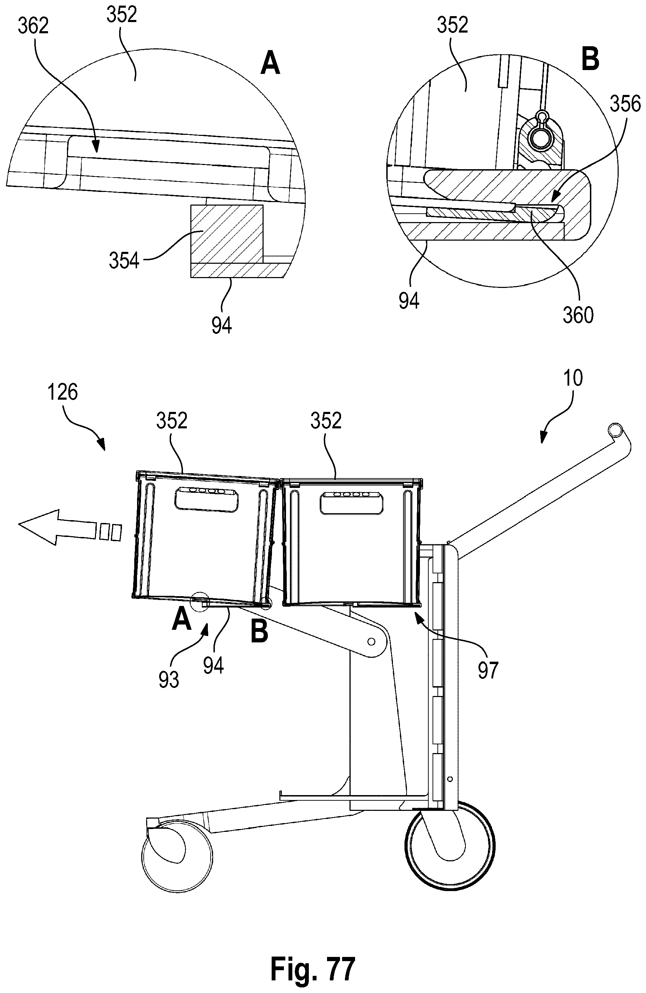

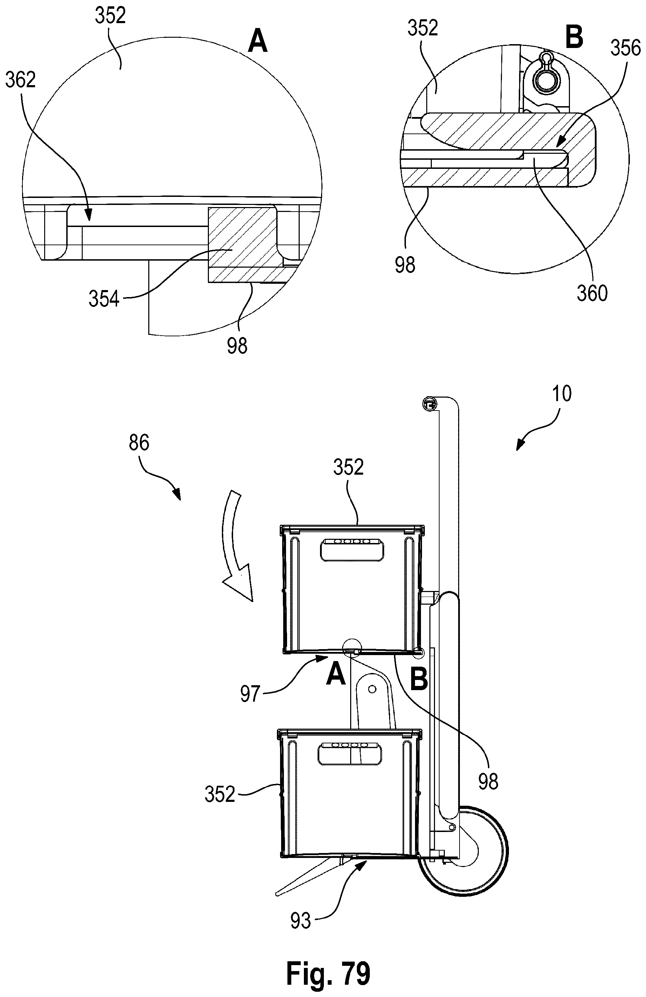

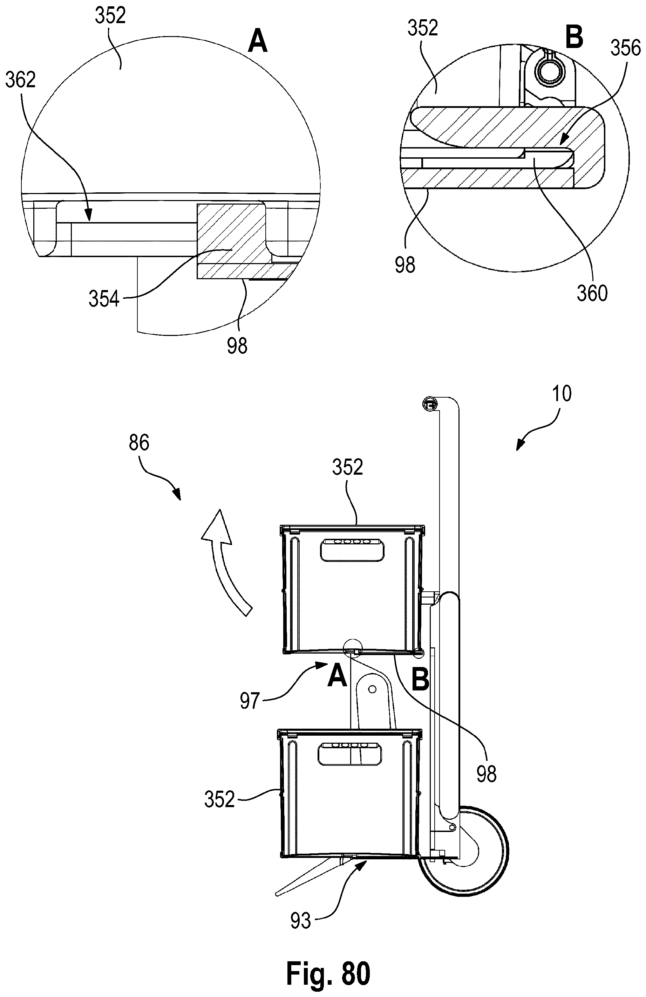

Die Figuren 64 bis 80 zeigen, wie in dem ersten Betriebsmodus 86 und in dem zweiten Betriebsmodus 126 Transportboxen in die erste Aufnahme 93 und die zweite Aufnahme 97 eingesetzt werden können.

Die Aufnahmeelemente 94 und 98 der ersten und zweiten Aufnahme sind gleich ausgebildet. Jedes Aufnahmeelement 94, 98 weist einen Steg 354 und eine Führung 356 auf. Der Steg 354 und die Führung 356 sind auf gegenüberliegenden Seiten des Aufnahmeelements 94, 98 angeordnet. Zwischen dem Steg 354 und der Führung 356 erstreckt sich eine Auflagefläche 358 für eine Seite der Transportbox 352. Jede Transportbox 352 weist auf dieser Seite an einer oder an beiden Ecken einen Vorsprung 360 auf, der sich nach außen von der Transportbox 352 weg erstreckt. Auf der gegenüberliegenden Seite weist die Transportbox 352 Transportbox 352 ebenso an einer oder an beiden Ecken einen Vorsprung 360 auf, der sich nach außen von der Transportbox 352 weg erstreckt. Jede Transportbox 352 weist auf jeder Seite mittig eine Aussparung 362 auf.

Im eingesetzten Zustand in einer Aufnahme ist der Steg 354 in der Aussparung 362 angeordnet und der Vorsprung 360 in der Führung 356 angeordnet. Dadurch wird die Transportbox 352 in der Aufnahme gehalten.

In den Figuren 64 bis 68 ist dargestellt, wie eine Transportbox 352 in die erste Aufnahme 93 eingesetzt werden kann bzw. aus der ersten Aufnahme 93 entfernt werden kann, wenn der Transportwagen 10 in dem zweiten Betriebsmodus 126 angeordnet ist.

Zum Einsetzten wird die Transportbox 352 mit den beiden Ecke, an denen die Vorsprünge 360 angeordnet sind auf jeweils auf die Auflagefläche 358 jedes Aufnahmeelements 94 aufgesetzt und entlang der Auflagefläche 358 in Richtung der entsprechenden Führung 356 geschoben. Dies ist in Fig. 64 dargestellt.

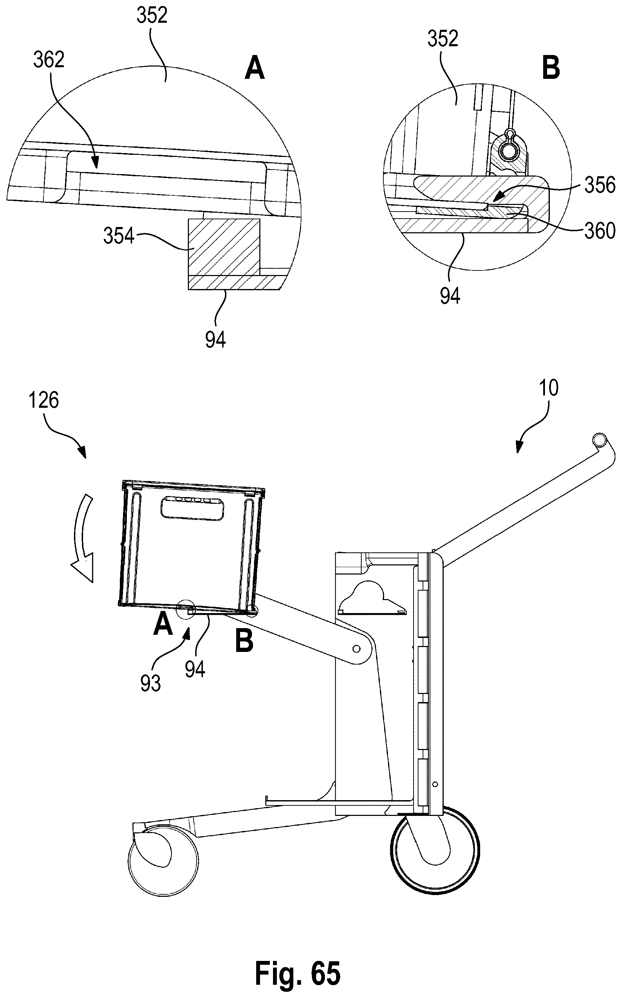

Die Transportbox 352 wird solange in Richtung der Führung 356 geschoben, bis der Vorsprung 360 das Ende der Führung 356 erreicht hat, wobei der Vorsprung 360 in Eingriff mit der Führung kommt. Dabei ist die Aussparung 362 mit dem Steg 354 fluchtend angeordnet. Dies ist in Fig. 65 dargestellt.

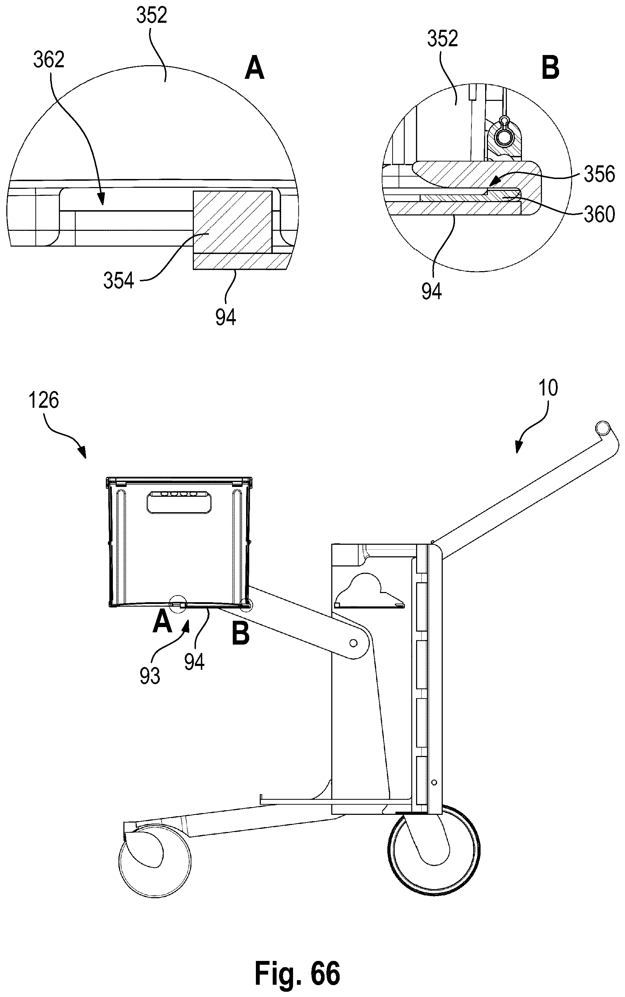

Dann wird die Transportbox 352 in Richtung der Auflagefläche 358 geschwenkt, wobei die Aussparung 362 mit dem Steg 354 in Eingriff gebracht wird. Dies ist in Fig. 66 dargestellt.

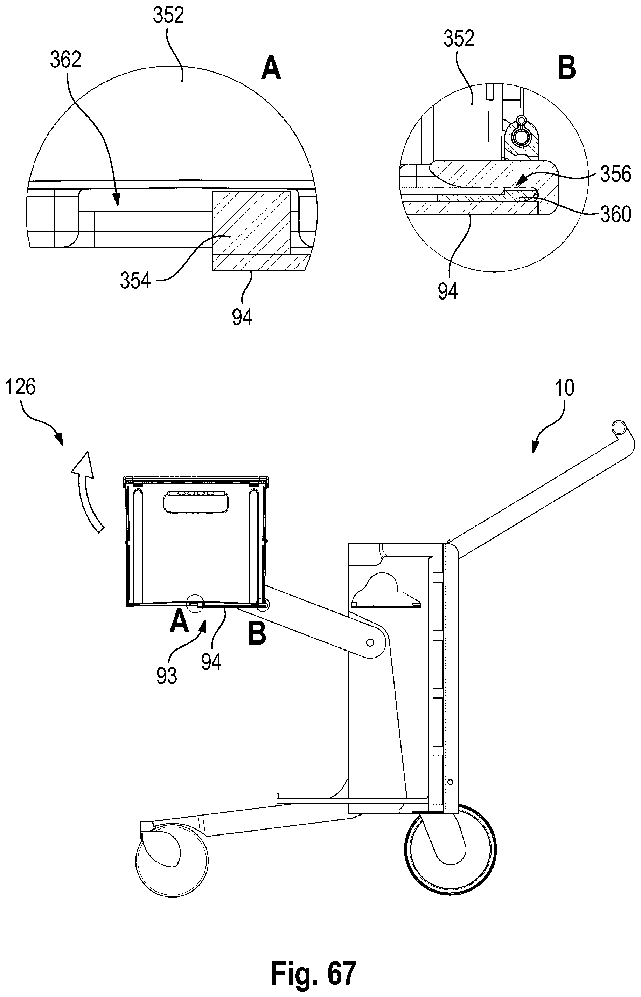

Zum Entfernen wird die Transportbox 352 zuerst von der Auflagefläche 358 weg geschwenkt, so dass die Aussparung 362 mit dem Steg 354 außer Eingriff gebracht wird. Dies ist in Fig. 67 dargestellt.

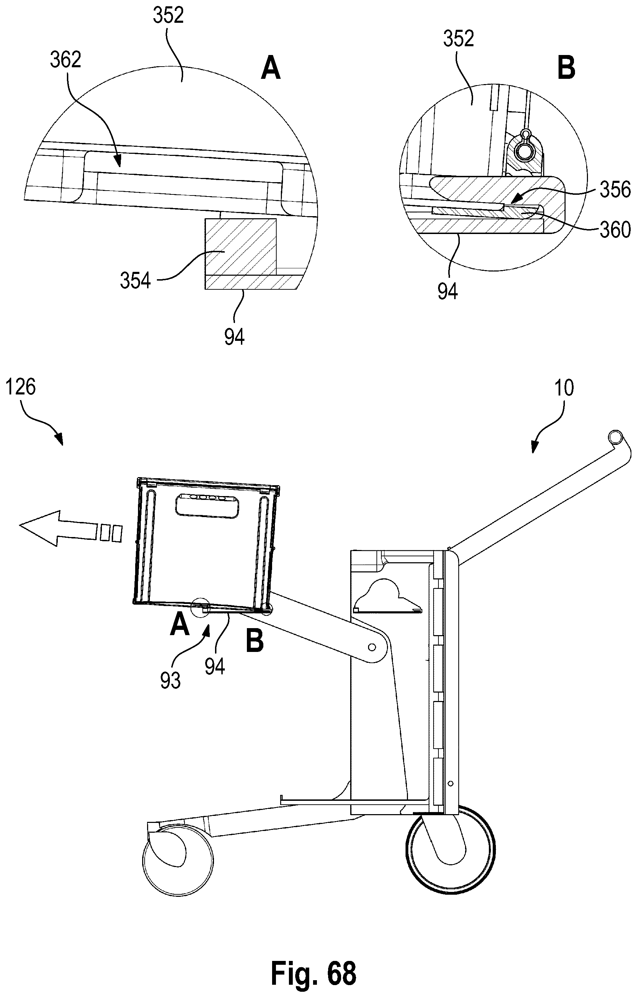

Dann wird die Transportbox 352 mit den beiden Ecke, an denen die Vorsprünge 360 angeordnet sind auf jeweils auf die Auflagefläche 358 so gezogen, dass der der Vorsprung 360 außer Eingriff mit der Führung 356 gebracht wird. Dies ist in Fig. 68 dargestellt.

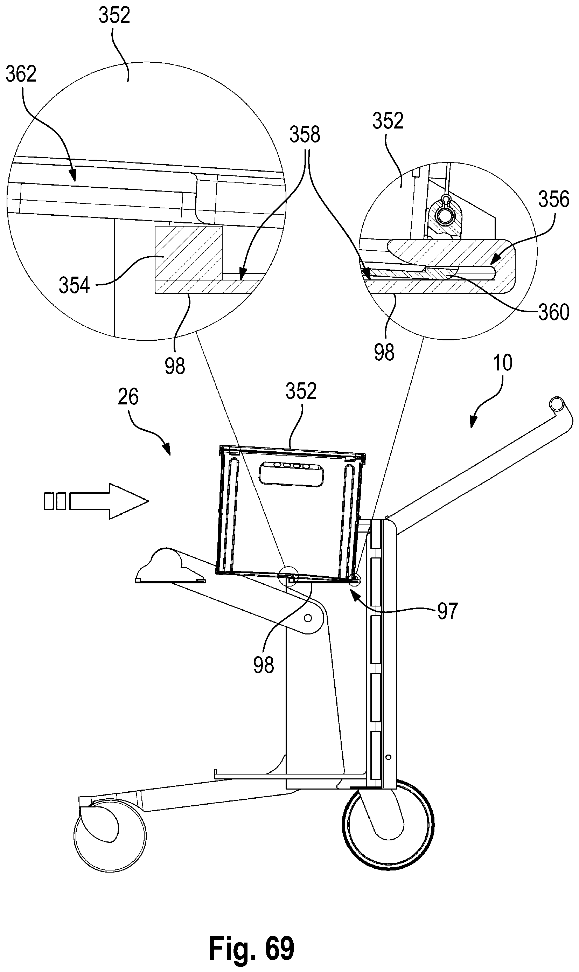

In den Figuren 69 bis 72 ist dargestellt, wie eine Transportbox 352 in die zweite Aufnahme 97 eingesetzt werden kann bzw. aus der zweiten Aufnahme entfernt werden kann, wenn der Transportwagen 10 in dem zweiten Betriebsmodus 126 angeordnet ist.

Zum Einsetzten wird die Transportbox 352 mit den beiden Ecke, an denen die Vorsprünge 360 angeordnet sind auf jeweils auf die Auflagefläche 358 jedes Aufnahmeelements 98 aufgesetzt und entlang der Auflagefläche 358 in Richtung der entsprechenden Führung 356 geschoben. Dies ist in Fig. 69 dargestellt.

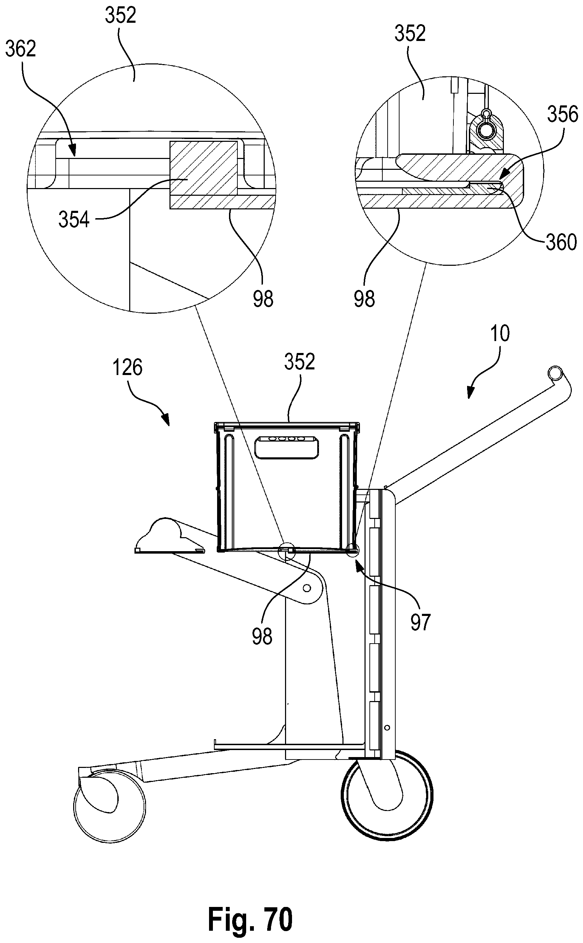

Die Transportbox 352 wird solange in Richtung der Führung 356 geschoben, bis der Vorsprung 360 das Ende der Führung 356 erreicht hat, wobei der Vorsprung 360 in Eingriff mit der Führung kommt. Dabei ist die Aussparung 362 mit dem Steg 354 fluchtend angeordnet. Dann wird die Transportbox 352 in Richtung der Auflagefläche 358 geschwenkt, wobei die Aussparung 362 mit dem Steg 354 in Eingriff gebracht wird. Dies ist in Fig. 70 dargestellt.

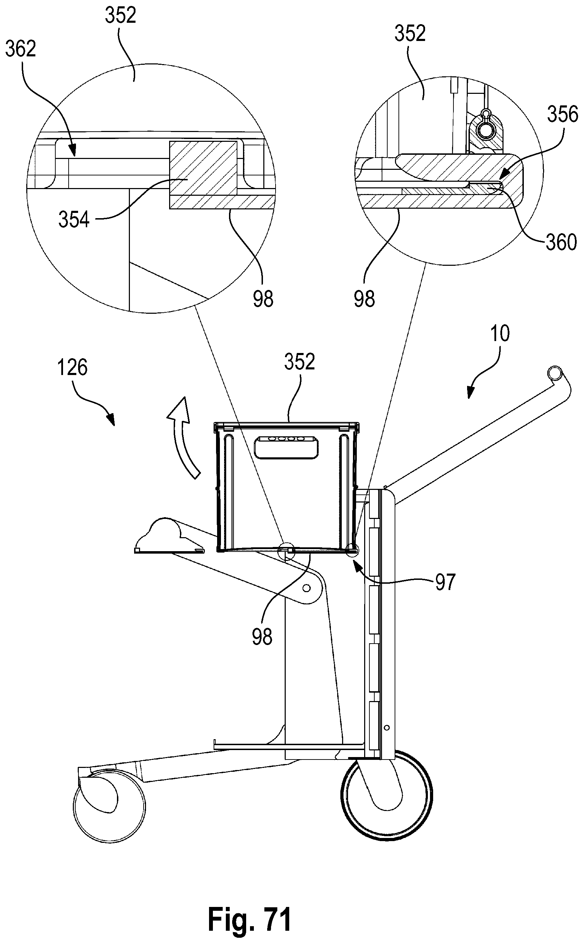

Zum Entfernen wird die Transportbox 352 zuerst von der Auflagefläche 358 weg geschwenkt, so dass die Aussparung 362 mit dem Steg 354 außer Eingriff gebracht wird. Dies ist in Fig. 71 dargestellt.

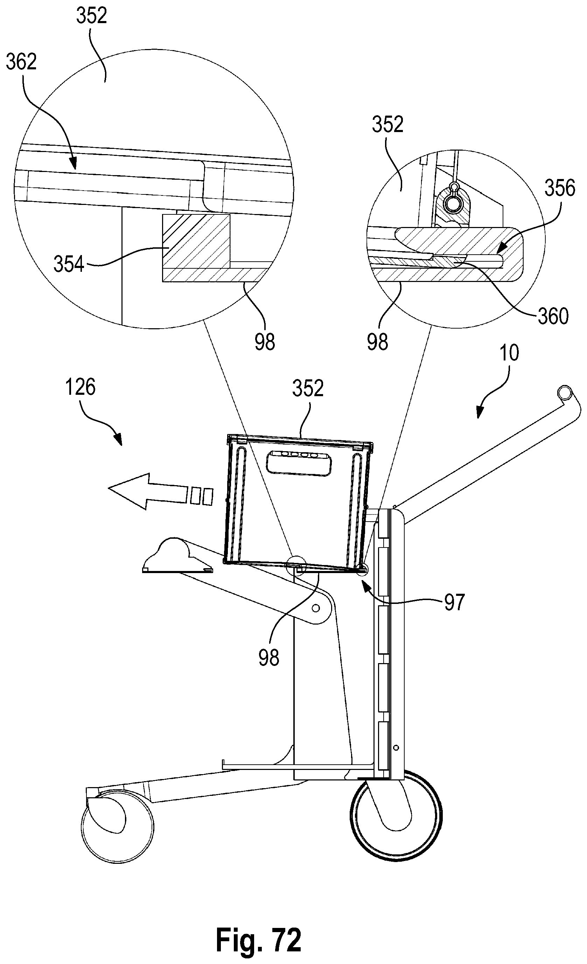

Dann wird die Transportbox 352 mit den beiden Ecke, an denen die Vorsprünge 360 angeordnet sind auf jeweils auf die Auflagefläche 358 so gezogen, dass der der Vorsprung 360 außer Eingriff mit der Führung 356 gebracht wird. Dies ist in Fig. 72 dargestellt.

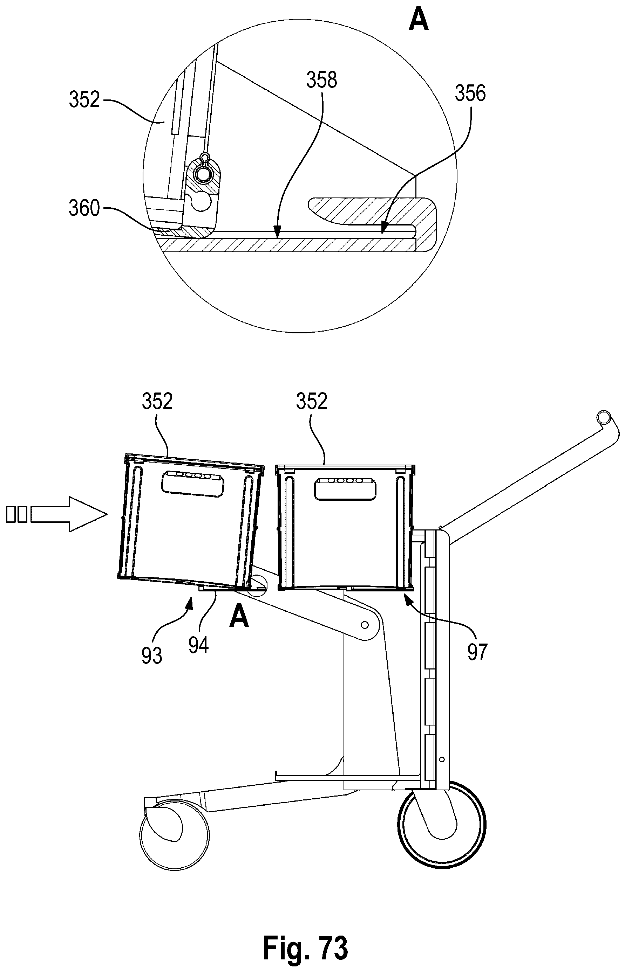

In den Figuren 73 bis 77 ist dargestellt, wie eine Transportbox 352 in die erste Aufnahme 93 eingesetzt werden kann bzw. aus der ersten Aufnahme 93 entfernt werden kann, wenn der Transportwagen 10 in dem zweiten Betriebsmodus 126 angeordnet ist und eine weitere Transportbox 352 in der zweiten Aufnahme angeordnet ist. Das Einsetzen bzw. Entfernen verläuft herbei identisch zu dem Einsetzen einer Transportbox in die erste Aufnahme 93 bzw. dem Entfernen einer Transportbox aus der ersten Aufnahme, wie bereits in zuvor mit Bezug auf die Figuren 64 bis 68 beschrieben wurde.

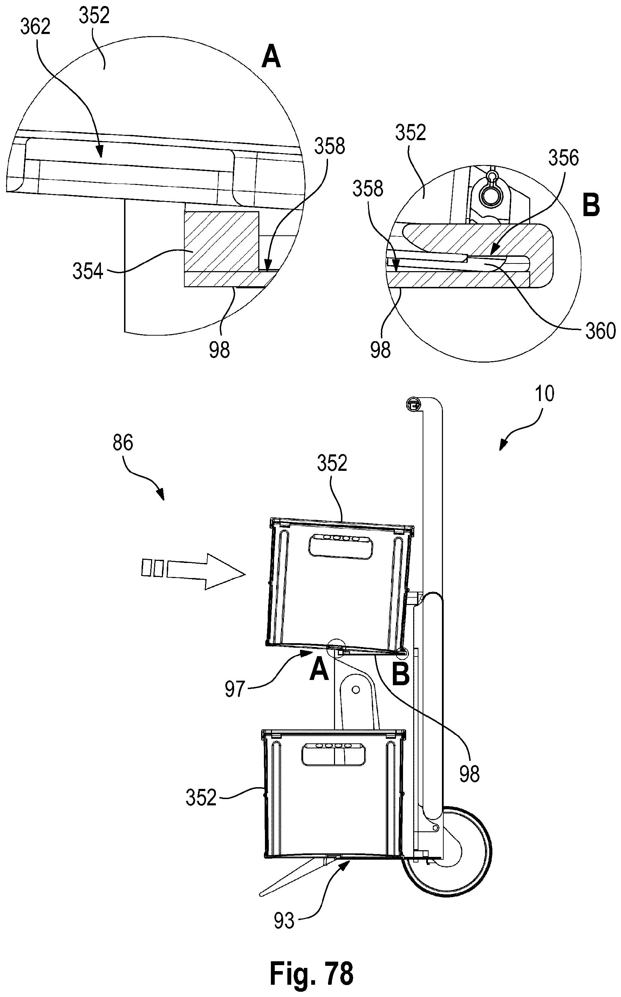

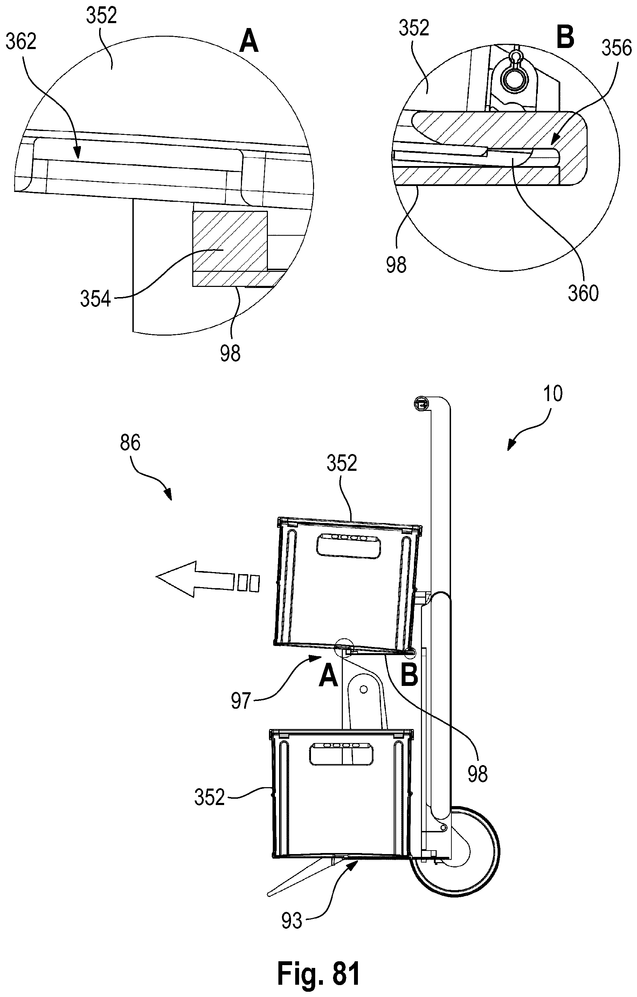

In den Figuren 78 bis 81 ist dargestellt, wie eine Transportbox 352 in die zweite Aufnahme 97 eingesetzt werden kann bzw. aus der zweiten Aufnahme entfernt werden kann, wenn der Transportwagen 10 in dem ersten Betriebsmodus 86 angeordnet ist und eine weitere Transportbox 352 in der ersten Aufnahme 93 angeordnet ist. Das Einsetzen bzw. Entfernen verläuft herbei identisch zu dem Einsetzen einer Transportbox in die erste Aufnahme 93 bzw. dem Entfernen einer Transportbox aus der ersten Aufnahme, wie bereits in zuvor mit Bezug auf die Figuren 69 bis 72 beschrieben wurde.

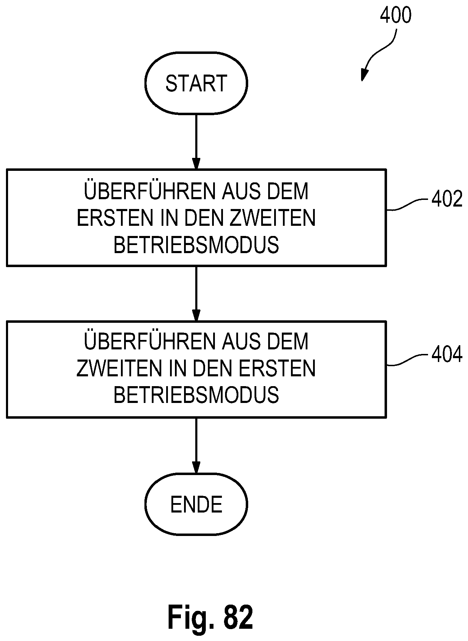

Fig. 82 zeigt eine Ausführungsform eines Verfahrens 400 zum Überführen eines Transportwagens 10 zwischen einem ersten Betriebsmodus 86 und einem zweiten Betriebsmodus 126. Der Tarnsportwagen 10 kann entsprechend der in den Fig. 1 bis 81 dargestellten Ausführungsformen ausgebildet sein.

In einem ersten Schritt 402 des Verfahrens 400 wird der Transportwagen 10 mittels einer ersten Aktuierung, bei der ein Aktuierungselement 197 einer Aktuierungsvorrichtung 199 des Transportwagens 10 in einer ersten Bewegungsrichtung bewegt wird, von dem ersten Betriebsmodus 86 in den zweiten Betriebsmodus 126 überführt.

In einem weiteren Schritt 404 des Verfahrens 400 wird der Transportwagen 10 mittels einer zweiten Aktuierung, bei der das Aktuierungselement 197 in der ersten Bewegungsrichtung bewegt wird, von dem zweiten Betriebsmodus 126 in den ersten Betriebsmodus 86 überführt.

Fig. 82 zeigt eine Ausführungsform eines Verfahrens 410 zum Überführen eines Transportwagens 10 zwischen einem Packmodus 12 und einem ersten Betriebsmodus 86. Der Tarnsportwagen 10 kann entsprechend der in den Fig. 1 bis 81 dargestellten Ausführungsformen ausgebildet sein.

In einem ersten Schritt 412 des Verfahrens 400 wird der Transportwagen 10 aus dem Packmodus 12, in dem jedes Rad 18 in der eingeklappten Stellung 74 und jede Seitenbaugruppe 16 in der zugeklappten Stellung 76 angeordnet ist, in den ersten Betriebsmodus 86, in dem jedes Rad 18 in der ausgeklappten Stellung 78 und jede Seitenbaugruppe 16 in der aufgeklappten Stellung 80 angeordnet ist, mittels eines Bewegens der Seitenbaugruppen 16 von der zugeklappten Stellung 76 in die aufgeklappte Stellung 80 überführt, wobei die Bewegung jeder Seitenbaugruppe 16 zwischen der zugeklappten Stellung 76 und der aufgeklappten Stellung 80 mit einer Bewegung des entsprechenden Rads 18 zwischen der eingeklappten Stellung 74 und ausgeklappten Stellung 78 gekoppelt ist.

In einem weiteren Schritt 414 des Verfahrens 400 wird der Transportwagen 10 aus dem ersten Betriebsmodus 86 in den Packmodus 12 mittels eines Bewegens der Seitenbaugruppen 16 von der aufgeklappten Stellung 80 in die zugeklappte Stellung 76 überführt.

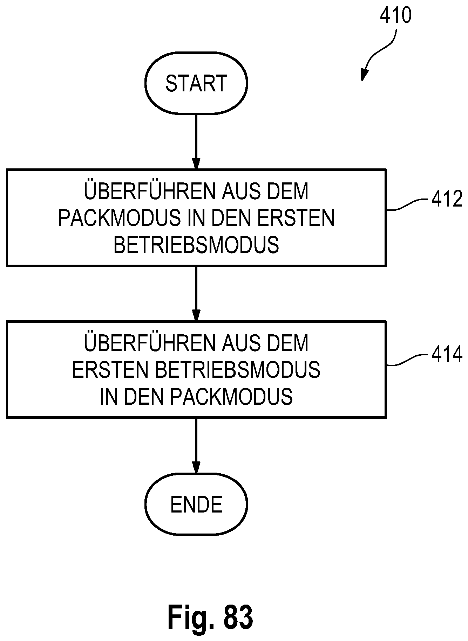

Fig. 83 zeigt eine Ausführungsform eines Verfahrens 420 zum Transformieren eines Transportwagens 10. Der Tarnsportwagen 10 kann entsprechend der in den Fig. 1 bis 81 dargestellten Ausführungsformen ausgebildet sein.

In einem ersten Schritt 422 des Verfahrens 400 wird der Transportwagen 10 zwischen dem Packmodus 12 und einem dem Betriebsmodus 86 entsprechend dem Verfahren aus Fig. 83 überführt.

In einem weiteren Schritt 424 des Verfahrens 400 wird der Transportwagen 10 zwischen dem ersten Betriebsmodus 86 und einem zweiten Betriebsmodus 126 entsprechend dem Verfahren aus Fig. 82 überführt.

## Patentansprüche

1. Transportwagen (10) mit einer Basisbaugruppe (14), mit zwei an der Basisbaugruppe (14) angeordneten, einander gegenüberliegenden Seitenbaugruppen (16) und mit je einem an jeweils einer der Seitenbaugruppen (16) angeordneten Rad (18), wobei der Transportwagen (10) zwischen einem Packmodus (12), in dem jedes Rad (18) in einer eingeklappten Stellung (74) und jede Seitenbaugruppe (16) in einer zugeklappten Stellung (76) angeordnet ist, und einem ersten Betriebsmodus (86), in dem jedes Rad (18) in einer ausgeklappten Stellung (78) und jede Seitenbaugruppe (16) in einer aufgeklappten Stellung (80) angeordnet ist, überführbar ist, wobei eine Bewegung jeder Seitenbaugruppe (16) zwischen der zugeklappten Stellung (76) und der aufgeklappten Stellung (80) mit einer Bewegung des entsprechenden Rads (18) zwischen der eingeklappten Stellung (74) und der ausgeklappten Stellung (78) gekoppelt ist, so dass beim Bewegen jeder Seitenbaugruppe (16) zwischen der zugeklappten Stellung (76) und der aufgeklappten Stellung (80) das entsprechende Rad (18) zwischen der eingeklappten Stellung (74) und ausgeklappten Stellung (78) bewegt wird, wobei der Transportwagen (10) des Weiteren an jeder Seitenbaugruppe (16) eine Stütze (88) aufweist.

2. Transportwagen (10) nach Anspruch 1, wobei jede Stütze (88) in dem Packmodus (12) in einer eingeklappten Stellung (90) und in dem ersten Betriebsmodus (86) in einer ausgeklappten Stellung (92) angeordnet ist.

3. Transportwagen (10) nach Anspruch 2, wobei die Bewegung jeder Seitenbaugruppe (16) zwischen der zugeklappten Stellung (76) und der aufgeklappten Stellung (80) mit einer Bewegung der entsprechenden Stütze (88) zwischen der eingeklappten Stellung (90) und der ausgeklappten Stellung (92) gekoppelt ist.

4. Transportwagen (10) nach einem der Ansprüche 1 bis 3, wobei der Transportwagen (10) des Weiteren eine Arretiereinrichtung (136) aufweist, die dazu ausgebildet ist, jede Seitenbaugruppe (16) in der zugeklappten Stellung (76) und in der aufgeklappten Stellung (80) zu arretieren, wobei der Transportwagen (10) des Weiteren mindestens ein zweites Betätigungselement (24) aufweist, mittels dem die durch die Arretiereinrichtung (136) bewirkte Arretierung der Seitenbaugruppen (16) lösbar ist.

5. Transportwagen nach einem der Ansprüche 1 bis 4, wobei die Bewegung jeder Stütze (88) und/oder jedes Rads (16) über einen Kniehebel (146) mit der Bewegung der entsprechenden Seitenbaugruppe (16) gekoppelt ist, wobei jeder Kniehebel (146) in der ausgeklappten Stellung (78, 92) des entsprechenden Rads (18) bzw. der entsprechenden Stütze (88) derart angeordnet ist, insbesondere gestreckt angeordnet ist, dass das jeweilige Rad (18) bzw. die jeweilige Stütze (88) in der ausgeklappten Stellung (78, 92) gehalten wird.

6. Transportwagen nach einem der Ansprüche 1 bis 4, wobei jeder Kniehebel (146) derart angeordnet ist, dass er beim Überführen des Rads (16) bzw. der Stütze (88) von der eingeklappten in die ausgeklappte Stellung gestreckt wird und entsprechend beim Überführen des Rads (16) bzw. der Stütze (88) von der ausgeklappten in die eingeklappte Stellung geknickt wird.

7. Transportwagen nach einem der Ansprüche 1 bis 5, des Weiteren mit mindestens einer zwischen den Seitenbaugruppen (16) angeordneten Aufnahme (93, 94) für jeweils eine Transportbox.

8. Verfahren (410) zum Überführen eines Transportwagens (10) zwischen einem Packmodus (12) und einem ersten Betriebsmodus (86), wobei der Transportwagen (10) eine Basisbaugruppe (14), zwei an der Basisbaugruppe (14) angeordnete, einander gegenüberliegende Seitenbaugruppen (16), je ein an jeweils einer der Seitenbaugruppen (16) angeordnetes Rad (18) und mindestens eine zwischen den Seitenbaugruppen (16) angeordnete Aufnahme (93, 94) für jeweils eine Transportbox aufweist, wobei der Transportwagen (10) des Weiteren an jeder Seitenbaugruppe (16) eine Stütze (88) aufweist, wobei das Verfahren die folgenden Schritte aufweist:
- Überführen (412) des Transportwagens (10) aus dem Packmodus (12), in dem jedes Rad (18) in einer eingeklappten Stellung (74) und jede Seitenbaugruppe (16) in einer zugeklappten Stellung (76) angeordnet ist, in den ersten Betriebsmodus (86), in dem jedes Rad (18) in einer ausgeklappten Stellung (78) und jede Seitenbaugruppe (16) in einer aufgeklappten Stellung (80) angeordnet ist, mittels eines Bewegens der Seitenbaugruppen (16) von der zugeklappten Stellung (76) in die aufgeklappte Stellung (80), wobei die Bewegung jeder Seitenbaugruppe (16) zwischen der zugeklappten Stellung (76) und der aufgeklappten Stellung (80) mit einer Bewegung des entsprechenden Rads (18) zwischen der eingeklappten Stellung (74) und ausgeklappten Stellung (78) gekoppelt ist;
- Überführen (414) des Transportwagens (10) aus dem ersten Betriebsmodus (86) in den Packmodus (12) mittels eines Bewegens der Seitenbaugruppen (16) von der aufgeklappten Stellung (80) in die zugeklappte Stellung (76).

9. Verfahren (420) zum Verfahren zum Transformieren eines Transportwagens (10), wobei der Transportwagen (10) eine Basisbaugruppe (14), zwei an der Basisbaugruppe (14) angeordnete, einander gegenüberliegende Seitenbaugruppen (16), und je ein an jeweils einer der Seitenbaugruppen (16) angeordnetes Rad (18) aufweist, wobei das Verfahren die folgenden Schritte aufweist:
- Überführen (422) eines Transportwagens (10) zwischen einem Packmodus (12) und einem ersten Betriebsmodus (86) entsprechend dem Verfahren nach Anspruch 8; und
- Überführen (424) eines Transportwagens (10) zwischen dem ersten Betriebsmodus (86) und einem zweiten Betriebsmodus (126),
wobei der Schritt des Überführens (424) des Transportwagens (10) zwischen dem ersten Betriebsmodus (86) und dem zweiten Betriebsmodus (126) die folgenden Schritte aufweist:
- Überführen (402) des Transportwagens (10) von dem ersten Betriebsmodus (86) in den zweiten Betriebsmodus (126) mittels einer ersten Aktuierung, bei der ein Aktuierungselement (197) einer Aktuierungsvorrichtung (199) des Transportwagens (10) in einer ersten Bewegungsrichtung bewegt wird; und
- Überführen (404) des Transportwagens (10) von dem zweiten Betriebsmodus (126) in den ersten Betriebsmodus (86) mittels einer zweiten Aktuierung, bei der das Aktuierungselement (197) in der ersten Bewegungsrichtung bewegt wird..

## Claims

1. A transport cart (10) having a base assembly (14), two opposing side assemblies (16) disposed on the base assembly (14), and a wheel (18) disposed on each of the side assemblies (16), the transport cart (10) being operable between a packing mode (12), in which each wheel (18) is arranged in a folded position (74) and each side assembly (16) is arranged in a folded position (76), and a first operating mode (86) in which each wheel (18) is arranged in an unfolded position (78) and each side assembly (16) is arranged in an unfolded position (80), wherein movement of each side assembly (16) between the folded position (76) and the unfolded position (80) is coupled to movement of the corresponding wheel (18) between the folded position (74) and the unfolded position (78) such that as each side assembly (16) is moved between the folded position (76) and the unfolded position (80), the corresponding wheel (18) is moved between the folded position (74) and the unfolded position (78), wherein the transport cart (10) further comprises a support (88) on each side assembly (16).

2. The transport cart (10) of claim 1, wherein each support (88) is disposed in a folded position (90) in the packing mode (12) and in an unfolded position (92) in the first mode of operation (86).

3. The transport cart (10) of claim 2, wherein movement of each side assembly (16) between the folded position (76) and the unfolded position (80) is coupled to movement of the corresponding support (88) between the folded position (90) and the unfolded position (92).

4. The transport cart (10) according to any of claims 1 to 3, wherein the transport cart (10) further comprises a locking device (136) configured to lock each side assembly (16) in the folded position (76) and in the unfolded position (80), wherein the transport cart (10) further comprises at least a second actuating element (24) by means of which the locking of the side assemblies (16) effected by the locking device (136) can be released.

5. The transport cart according to any of claims 1 to 4, wherein the movement of each support (88) and/or each wheel (16) is coupled to the movement of the corresponding side assembly (16) via a toggle lever (146), wherein each toggle lever (146) is arranged in the unfolded position (78, 92) of the corresponding wheel (18) or the corresponding support (88), in particular is arranged stretched, in such a way that the respective wheel (18) or the respective support (88) is held in the unfolded position (78, 92).

6. The transport cart according to any of claims 1 to 4, wherein each toggle is arranged to be stretched when the corresponding support wheel is transferred from the folded to the unfolded position and to be bent when the corresponding support wheel is transferred from the unfolded to the folded position.

7. The transport cart according to any of claims 1 to 5, further comprising at least one receptacle (93, 94) arranged between the side assemblies (16) for a respective transport box.

8. A method (410) of transferring a transport cart (10) between a packing mode (12) and a first mode of operation (86), the transport cart (10) comprising a base assembly (14), two opposing side assemblies (16) disposed on the base assembly (14), a wheel (18) disposed on each of the side assemblies (16), and at least one receptacle (93, 94) disposed between the side assemblies (16) for a respective transport box, wherein the transport cart (10) further comprises a support (88) on each side assembly (16), the method comprising the steps of:
- transferring (412) the transport cart (10) from the packing mode (12), in which each wheel (18) is in a folded position (74) and each side assembly (16) is in a unfolded position (76), to the first operating mode (86), in which each wheel (18) is in an unfolded position (78) and each side assembly (16) is in an unfolded position (80) by moving the side assemblies (16) from the folded position (76) to the unfolded position (80), wherein movement of each side assembly (16) between the folded position (76) and the unfolded position (80) is coupled to movement of the corresponding wheel (18) between the folded position (74) and unfolded position (78);
- transferring (414) the transport cart (10) from the first operating mode (86) to the packing mode (12) by means of moving the side assemblies (16) from the unfolded position (80) to the folded position (76).

9. A method (420) of transforming a transport cart (10), the transport cart (10) comprising a base assembly (14), two opposing side assemblies (16) disposed on the base assembly (14), and a wheel (18) disposed on each of the side assemblies (16), the method comprising the steps of:
- transferring (422) a transport cart (10) between a packing mode (12) and a first operating mode (86) according to the method of claim 8; and
- transferring (424) a transport cart (10) between the first operating mode (86) and a second operating mode (126) ,
wherein the step of transferring (424) the transport cart (10) between the first operating mode (86) and a second operating mode (126) the method comprising the steps of:
- transferring (402) the transport cart (10) from the first operating mode (86) to the second operating mode (126) by means of a first actuation in which an actuating element (197) of an actuating device (199) of the transport cart (10) is moved in a first direction of movement; and
- transferring (404) the transport cart (10) from the second operating mode (126) to the first operating mode (86) by means of a second actuation in which the actuating element (197) is moved in the first direction of movement.

## Revendications

1. Chariot de transport (10) comportant un module de base (14), comportant deux modules latéraux (16) disposés sur le module de base (14) et opposés l'un à l'autre et comportant respectivement une roue (18) disposée sur respectivement l'un des modules latéraux (16), dans lequel le chariot de transport (10) peut être transféré entre un mode d'emballage (12) dans lequel chaque roue (18) est disposée dans une position rentrée (74) et chaque module latéral (16) est disposé dans une position repliée (76), et un premier mode de fonctionnement (86) dans lequel chaque roue (18) est disposée dans une position déployée (78) et chaque module latéral (16) est disposé dans une position dépliée (80), dans lequel un déplacement de chaque module latéral (16) entre la position repliée (76) et la position dépliée (80) est accouplé à un déplacement de la roue (18) correspondante entre la position rentrée (74) et la position déployée (78), de sorte que, lors du déplacement de chaque module latéral (16) entre la position repliée (76) et la position dépliée (80), la roue (18) correspondante est déplacée entre la position rentrée (74) et la position déployée (78), dans lequel le chariot de transport (10) présente en outre un support (88) sur chaque module latéral (16).

2. Chariot de transport (10) selon la revendication 1, dans lequel chaque support (88) est disposé dans une position rentrée (90) dans le mode d'emballage (12) et dans une position déployée (92) dans le premier mode de fonctionnement (86).

3. Chariot de transport (10) selon la revendication 2, dans lequel le déplacement de chaque module latéral (16) entre la position repliée (76) et la position dépliée (80) est accouplé à un déplacement du support (88) correspondant entre la position rentrée (90) et la position déployée (92).

4. Chariot de transport (10) selon l'une des revendications 1 à 3, dans lequel le chariot de transport (10) présente en outre un appareil de blocage (136) réalisé pour bloquer chaque module latéral (16) dans la position repliée (76) et dans la position dépliée (80), dans lequel le chariot de transport (10) présente en outre au moins un second élément d'actionnement (24) au moyen duquel le blocage des modules latéraux (16) provoqué par l'appareil de blocage (136) peut être libéré.

5. Chariot de transport selon l'une des revendications 1 à 4, dans lequel le déplacement de chaque support (88) et/ou de chaque roue (16) est accouplé au déplacement du module latéral (16) correspondant par l'intermédiaire d'un levier coudé (146), dans lequel chaque levier coudé (146) est disposé, en particulier disposé de manière étirée, dans la position déployée (78, 92) de la roue (18) correspondante ou du support (88) correspondant de telle sorte que la roue (18) respective ou le support (88) respectif est maintenu dans la position déployée (78, 92).

6. Chariot de transport selon l'une des revendications 1 à 4, dans lequel chaque levier coudé (146) est disposé de telle sorte qu'il est étiré lors du transfert de la roue (16) ou du support (88) de la position rentrée à la position déployée et est coudé de manière correspondante lors du transfert de la roue (16) ou du support (88) de la position déployée à la position rentrée.

7. Chariot de transport selon l'une des revendications 1 à 5, comportant en outre au moins un logement (93, 94) pour respectivement une boîte de transport, lequel est disposé entre les modules latéraux (16).

8. Procédé (410) permettant de transférer un chariot de transport (10) entre un mode d'emballage (12) et un premier mode de fonctionnement (86), dans lequel le chariot de transport (10) présente un module de base (14), deux modules latéraux (16) disposés sur le module de base (14) et opposés l'un à l'autre, respectivement une roue (18) disposée sur respectivement l'un des modules latéraux (16) et au moins un logement (93, 94) disposé entre les modules latéraux (16) pour respectivement une boîte de transport, dans lequel le chariot de transport (10) présente en outre un support (88) sur chaque module latéral (16), dans lequel le procédé présente les étapes suivantes :
- transfert (412) du chariot de transport (10) du mode d'emballage (12), dans lequel chaque roue (18) est disposée dans une position rentrée (74) et chaque module latéral (16) est disposé dans une position repliée (76), au premier mode de fonctionnement (86), dans lequel chaque roue (18) est disposée dans une position déployée (78) et chaque module latéral (16) est disposé dans une position dépliée (80), au moyen d'un déplacement des modules latéraux (16) de la position repliée (76) à la position dépliée (80), dans lequel le déplacement de chaque module latéral (16) entre la position repliée (76) et la position dépliée (80) est accouplé à un déplacement de la roue (18) correspondante entre la position rentrée (74) et la position déployée (78) ;
- transfert (414) du chariot de transport (10) du premier mode de fonctionnement (86) au mode d'emballage (12) au moyen d'un déplacement des modules latéraux (16) de la position dépliée (80) à la position repliée (76).

9. Procédé (420) permettant de transformer un chariot de transport (10), dans lequel le chariot de transport (10) présente un module de base (14), deux modules latéraux (16) disposés sur le module de base (14) et opposés l'un à l'autre, et respectivement une roue (18) disposée sur respectivement l'un des modules latéraux (16), dans lequel le procédé présente les étapes suivantes :
- transfert (422) d'un chariot de transport (10) entre un mode d'emballage (12) et un premier mode de fonctionnement (86) conformément au procédé selon la revendication 8 ; et
- transfert (424) d'un chariot de transport (10) entre le premier mode de fonctionnement (86) et un second mode de fonctionnement (126),
dans lequel l'étape de transfert (424) du chariot de transport (10) entre le premier mode de fonctionnement (86) et le second mode de fonctionnement (126) présente les étapes suivantes :
- transfert (402) du chariot de transport (10) du premier mode de fonctionnement (86) au second mode de fonctionnement (126) au moyen d'un premier actionnement, dans lequel un élément d'actionnement (197) d'un dispositif d'actionnement (199) du chariot de transport (10) est déplacé dans une première direction de déplacement ; et
- transfert (404) du chariot de transport (10) du second mode de fonctionnement (126) au premier mode de fonctionnement (86) au moyen d'un second actionnement, dans lequel l'élément d'actionnement (197) est déplacé dans la première direction de déplacement.
